(19) Europäisches Patentamt
European Patent Office
Office européen des brevets

(11) **EP 4 621 494 A2**

(12) **EUROPEAN PATENT APPLICATION**

(43) Date of publication:
24.09.2025 Bulletin 2025/39

(21) Application number: 25163454.9

(22) Date of filing: 13.03.2025

(51) International Patent Classification (IPC):
*G03G 15/08* (2006.01)

(52) Cooperative Patent Classification (CPC):
G03G 15/0874

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 19.03.2024 JP 2024044233

(71) Applicant: CANON KABUSHIKI KAISHA
Tokyo 146-8501 (JP)

(72) Inventors:
• MUNETSUGU, Hiroyuki
Tokyo, 146-8501 (JP)
• NISHIDA, Shinichi
Tokyo, 146-8501 (JP)
• SATO, Mitsuhiro
Tokyo, 146-8501 (JP)

(74) Representative: TBK
Bavariaring 4-6
80336 München (DE)

(54) **DEVELOPER CONTAINER**

(57) A developer container includes a container member, a coupling member and a nozzle. The container member accommodates a developer and constitutes an accommodating portion provided with an opening portion. The coupling member is attached to the opening portion. The nozzle includes a discharging opening coupled to the container member via the coupling member and for permitting discharge of the developer to an outside and a passage for passing the developer from the opening portion of the accommodating portion to the discharge opening. A main component of the container member and the coupling member is a paper, and a main component of the nozzle is a resin.

Fig. 37

# Description

## FIELD OF THE INVENTION AND RELATED ART

The present invention relates to a developer container used in an image forming apparatus forming an image on a recording material.

In an image forming apparatus of electrophotographic type, as a supply constitution for a developer accommodating portion provided to a main apparatus, a constitution in which a replenishing pack as a developer container is mounted to the main assembly and toner as a developer is replenished from the replenishing pack to the accommodating portion of the main assembly is known (Japanese Patent Application Laid-Open No. 2020-154300). As a constitution for the replenishing pack, a constitution in which, to an opening portion of a container member with flexibility (pouch), a discharging passage forming member forming a discharging passage for discharging the toner is connected by welding, etc., and a shutter opening and closing a discharging opening of the discharging passage forming member is assembled is known.

## SUMMARY OF THE INVENTION

According to the present invention, there is provided a developer container comprising: a container member configured to accommodate a developer and constituting an accommodating portion provided with an opening portion; a coupling member attached to the opening portion; and a nozzle including a discharging opening coupled to the container member via the coupling member and for permitting discharge of the developer to an outside and a passage configured so that the developer passes the passage from the opening portion of the accommodating portion to the discharge opening, wherein a main component of the container member and the coupling member is a paper, and wherein a main component of the nozzle is a resin.

In addition, according to the present invention, there is provided a developer container comprising: a container member configured to accommodate a developer and constituting an accommodating portion provided with an opening portion; a coupling member attached to the opening portion; and a nozzle including a discharging opening coupled to the container member via the coupling member and for permitting discharge of the developer to an outside and a passage configured so that the developer passes the passage from the opening portion of the accommodating portion to the discharge opening, wherein a main component of the container member and the coupling member is a paper, wherein a main component of the nozzle is a resin, wherein at a first position in an alignment direction where the coupling member and the nozzle are aligned, a polar moment of inertia of area of the coupling member in a first cross section perpendicular to the alignment direction is larger than a polar moment of inertia of area of the coupling member in a second cross section perpendicular to the alignment direction at a second position in the alignment direction, wherein the second position is a position not including the coupling member in the second cross section, and wherein the first position is a position closer to the opening portion in the alignment direction than the second position is.

In addition, according to the present invention, there is provided a developer container comprising: a container member configured to accommodate a developer and constituting an accommodating portion provided with an opening portion; a coupling member attached to the opening portion; and a nozzle including a discharging opening coupled to the container member via the coupling member and for permitting discharge of the developer to an outside and a passage configured so that the developer passes the passage from the opening portion of the accommodating portion to the discharge opening, wherein the container member includes an edge portion where a first sheet and a second sheet are overlapped and is formed in a bag shape by a plurality of sheet including the first sheet and the second sheet, and wherein the edge portion of the container member is configured by folding the second sheet so as to wrap one end portion of the first sheet and by joining the one end portion of the first sheet and the second sheet.

Further features of the present invention will become apparent from the following description of exemplary embodiments with reference to the attached drawings.

## BRIEF DESCRIPTION OF THE DRAWINGS

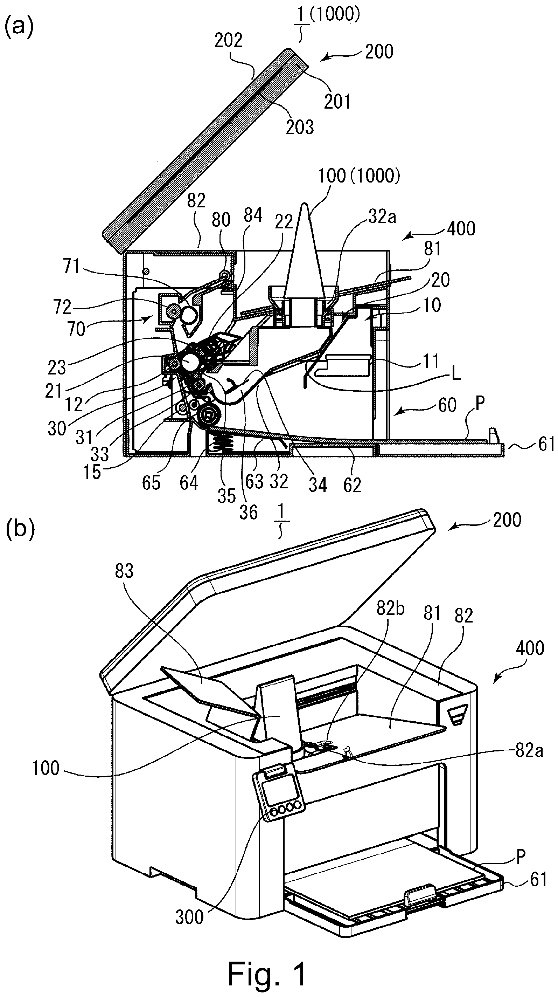

Part (a) of Figure 1 is a schematic view showing an image forming apparatus according to a first embodiment, and part (b) of Figure 1 is a perspective view showing the image forming apparatus.

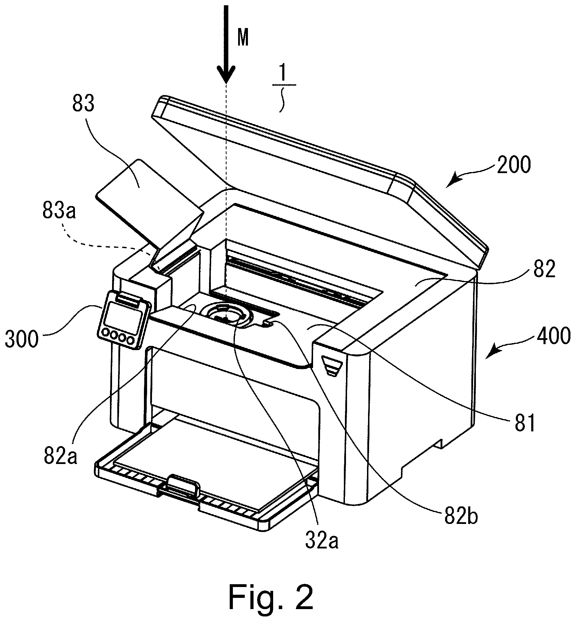

Figure 2 is a perspective view showing an openable/closable member and a supplying opening (port).

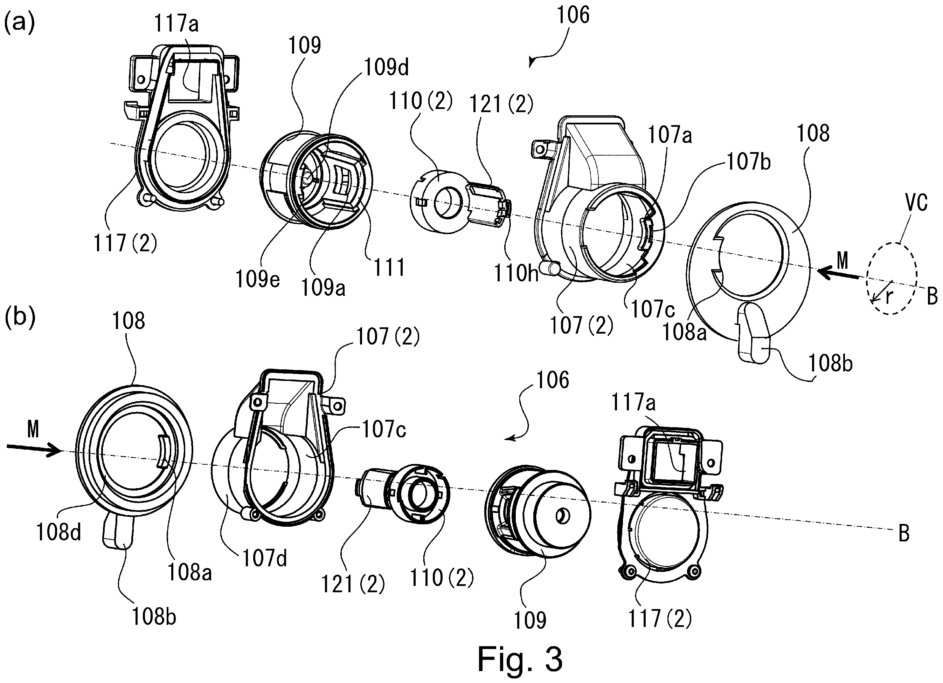

Part (a) of Figure 3 is an exploded perspective view of a mounting portion, and part (b) of Figure 3 is an exploded perspective view of the mounting portion as viewed in a direction different from the direction in part (a) of Figure 3.

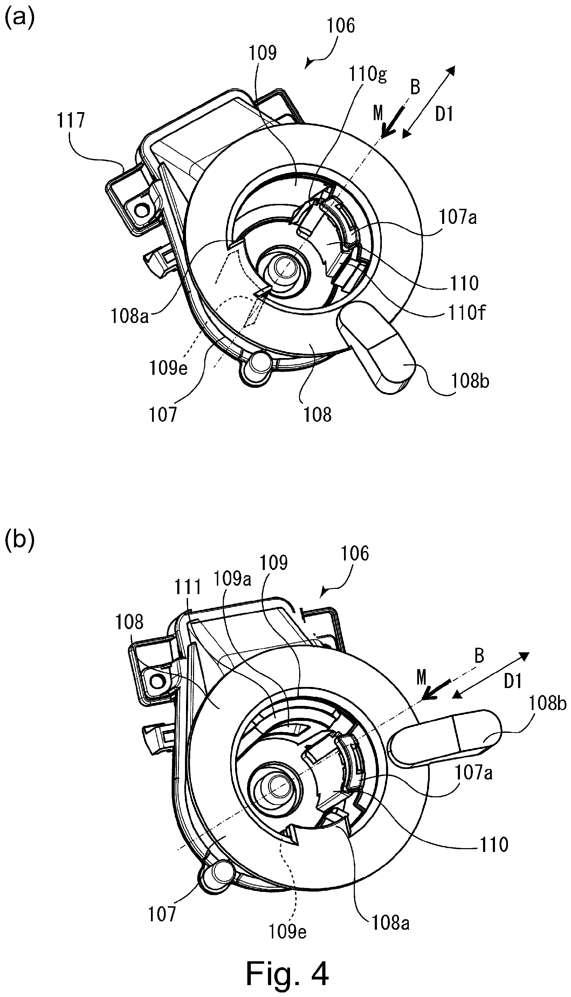

Part (a) of Figure 4 is a perspective view showing an outer appearance of the mounting portion when an operating lever is in a closed position, and part (b) of Figure 4 is a perspective view showing an outer appearance of the mounting portion when the operating lever is in an open position.

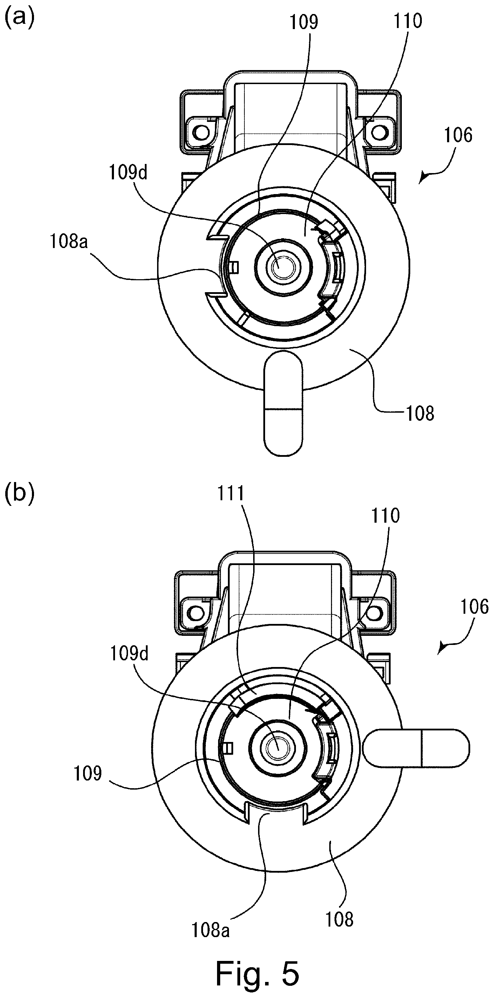

Part (a) of Figure 5 is a plan view showing the outer appearance of the mounting portion when the operating lever is in the closed position, and part (b) of Figure 5 is a plan view showing the outer appearance of the mounting portion when the operating lever is in the open position.

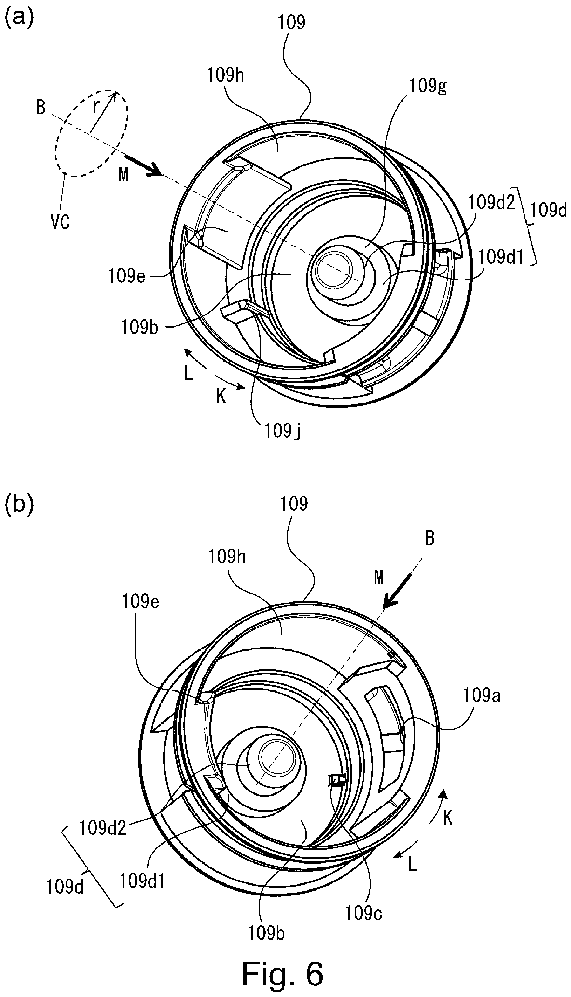

Part (a) of Figure 6 is a perspective view of an apparatus-side shutter as viewed from an upstream side of a mounting direction, and part (b) of Figure 6 is a perspective view of the apparatus-side shutter different in point of view from part (a) of Figure 6.

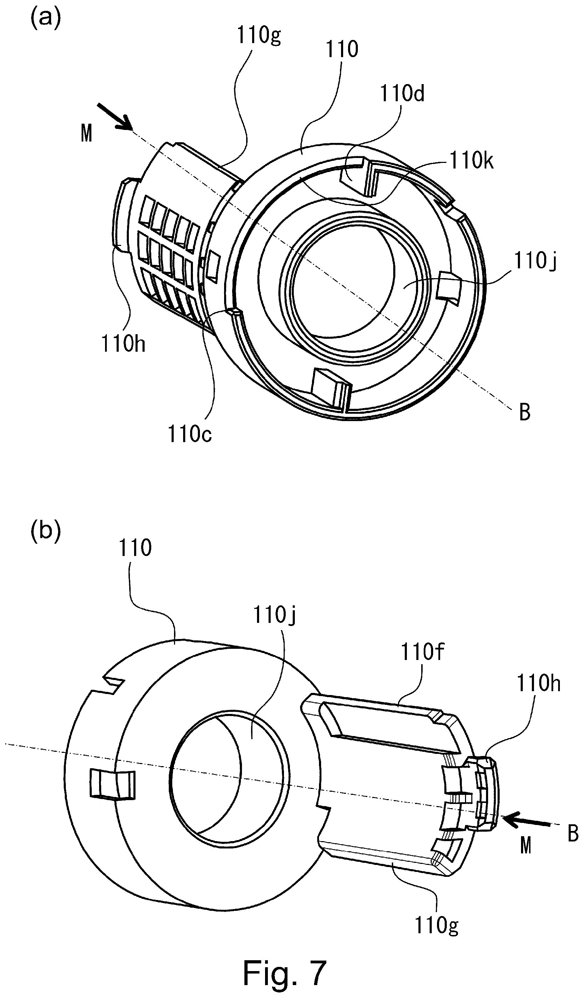

Part (a) of Figure 7 is a perspective view of a cover as viewed from a downstream side of the mounting direction, and part (b) of Figure 7 is a perspective view of the cover as viewed from the upstream side of the mounting direction.

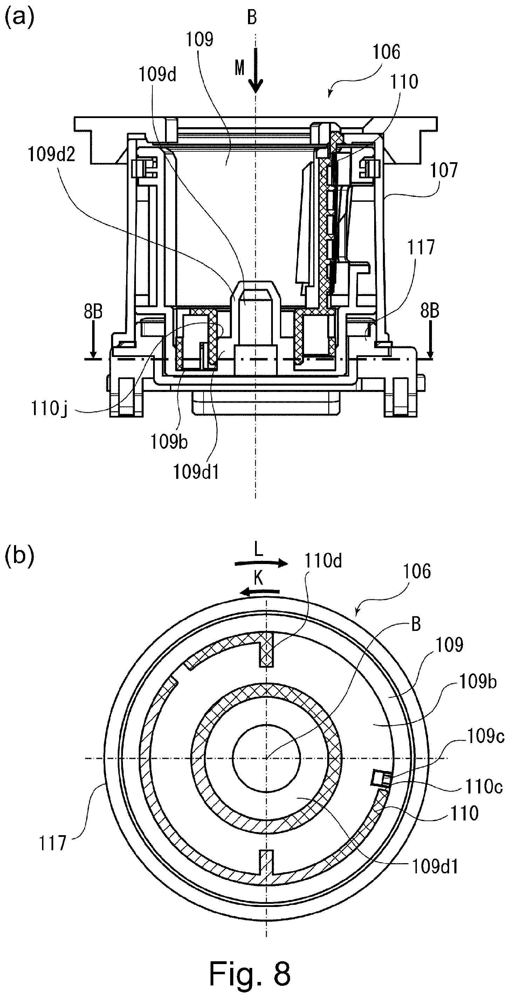

Part (a) of Figure 8 is a sectional view showing the mounting portion, and part (b) of Figure 8 is a sectional view showing an 8B-8B cross section.

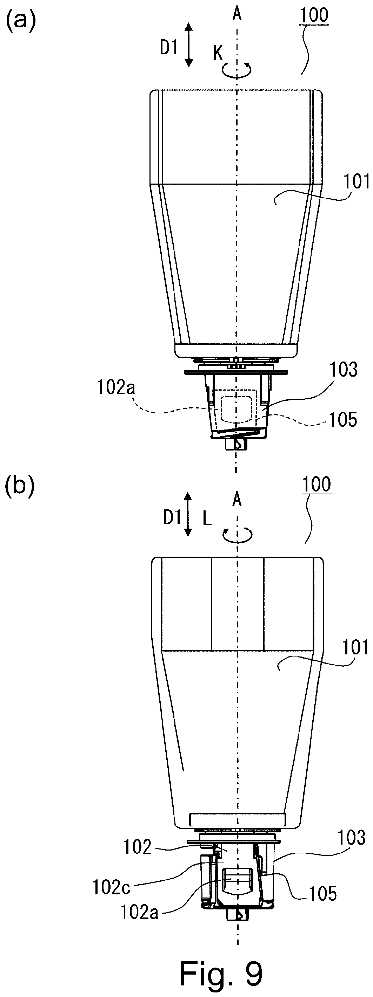

Part (a) of Figure 9 is a side view of a toner pack when a pack-side shutter is in a shielding position and part (b) of Figure 9 is a side view of the toner pack when the pack-side shutter is in an open position.

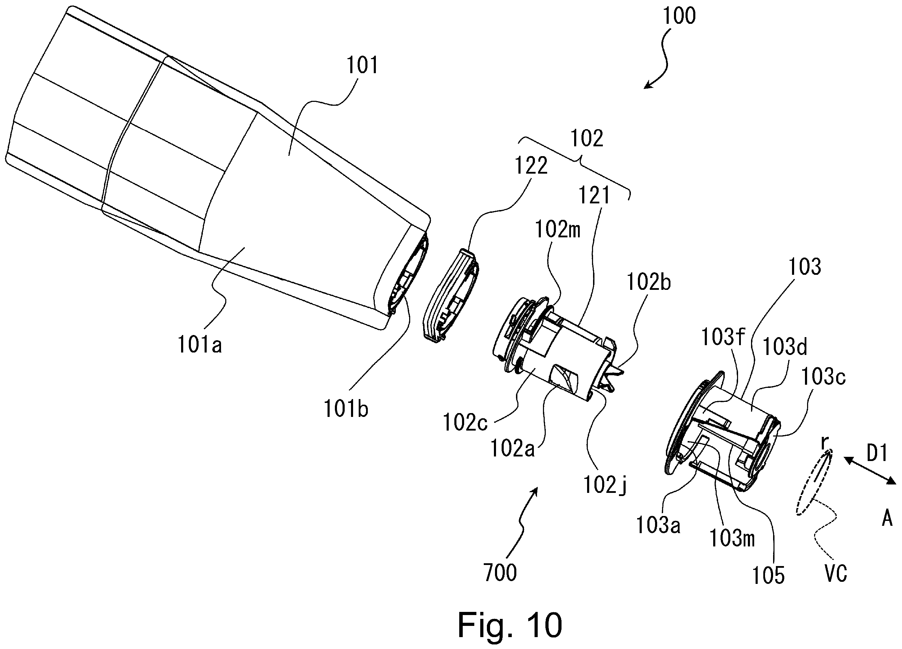

Figure 10 is an exploded perspective view showing the toner pack when the pack-side shutter is in the shielding position.

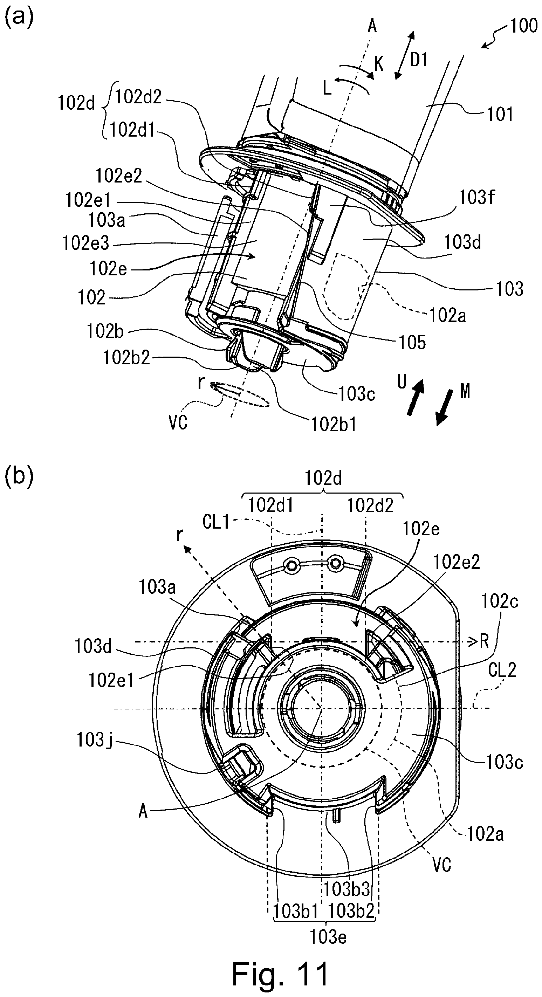

Part (a) of Figure 11 is an enlarged perspective view showing a neighborhood of a nozzle when the pack-side shutter is in the shielding position, and part (b) of Figure 11 is a view of the toner pack as viewed in a dismounting direction.

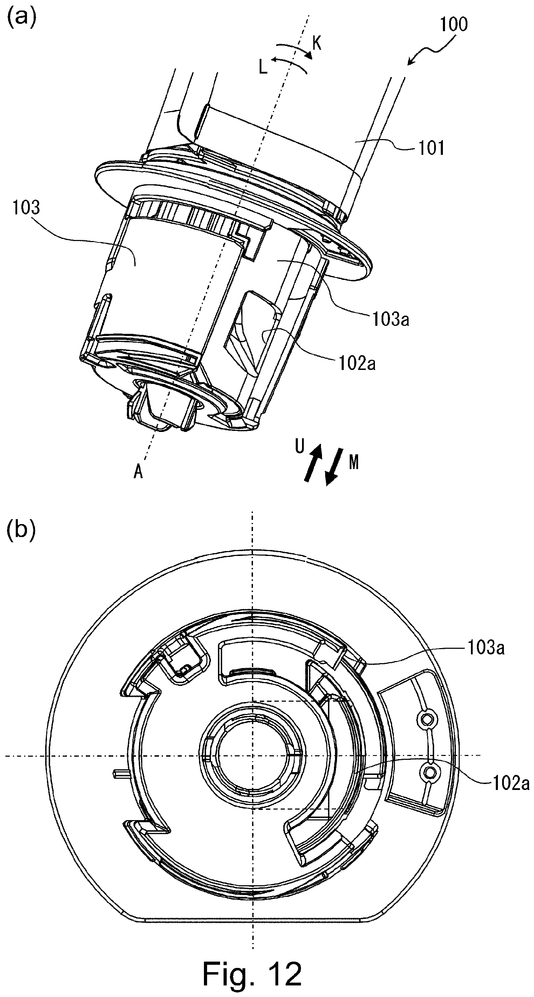

Part (a) of Figure 12 is an enlarged perspective view showing a neighborhood of a nozzle when the pack-side shutter is in the open position, and part (b) of Figure 12 is a view of the toner pack as viewed in the dismounting direction.

Figure 13 is an enlarged perspective view showing a neighborhood of the nozzle.

Figure 14 is a side view showing the nozzle and the pack-side shutter.

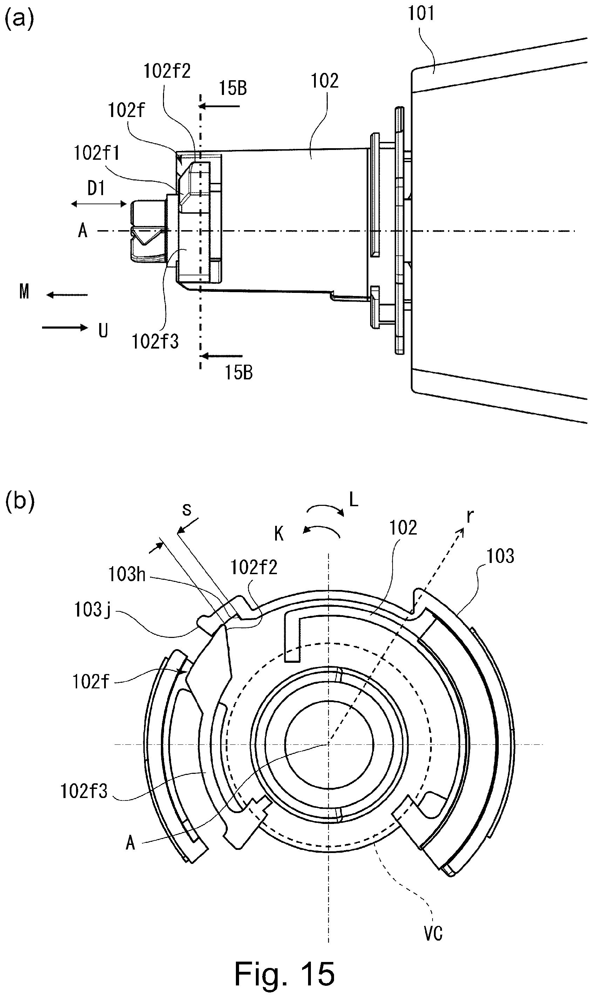

Part (a) of Figure 15 is a front view showing a claw portion and part (b) of Figure 15 is a sectional view showing a 15B-15B cross section of part (a) of Figure 15.

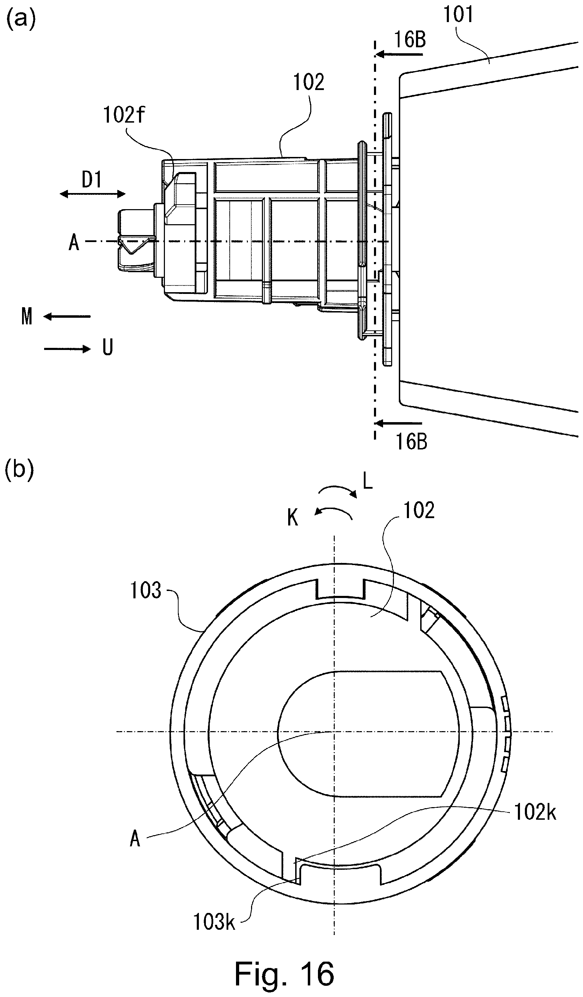

Part (a) of Figure 16 is a front view showing the claw portion, and part (b) of Figure 16 is a sectional view showing a 16B-16B cross section of part (a) of Figure 16.

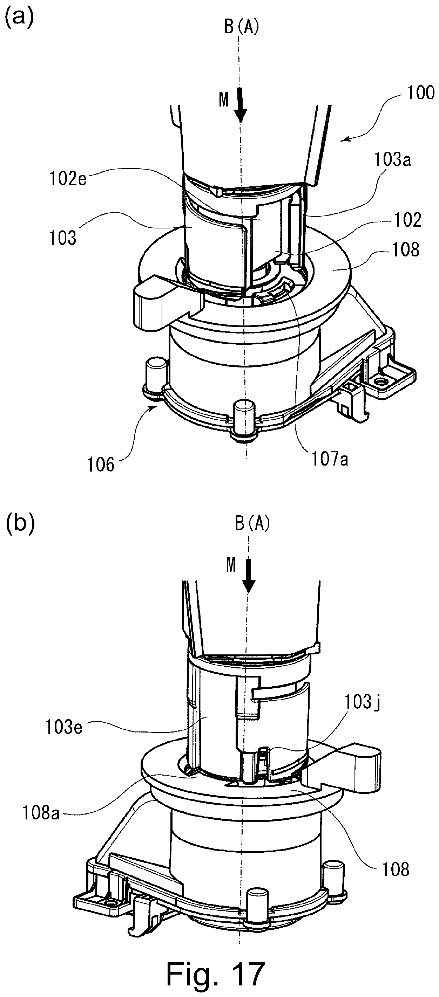

Part (a) of Figure 17 is a perspective view showing a state in which the toner pack is being mounted toward the mounting portion, and part (b) of Figure 17 is a perspective view showing the state in which the toner pack is being mounted toward the mounting portion as viewed from another angle.

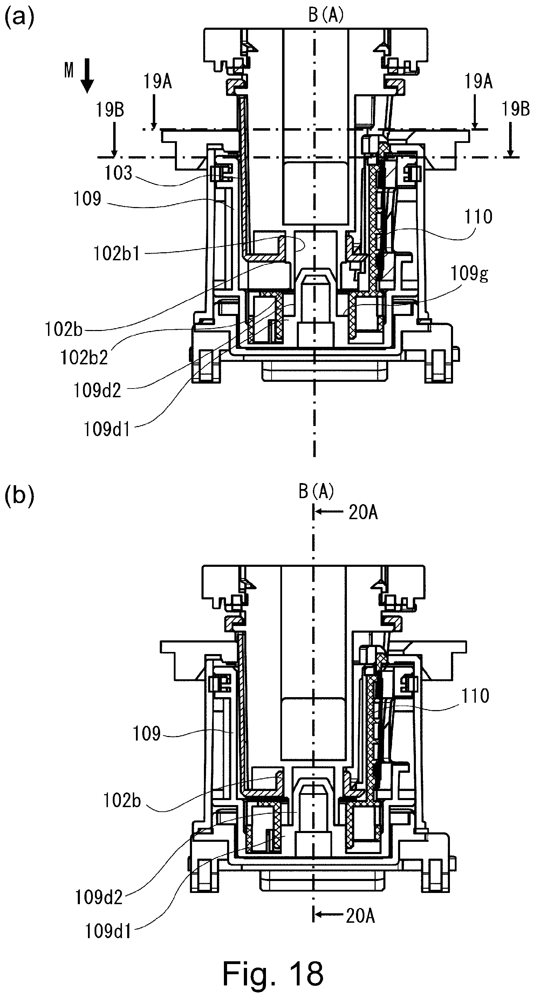

Part (a) of Figure 18 is a sectional view showing the state when the toner pack is being mounted toward the mounting portion, and part (b) of Figure 18 is a sectional view showing a state when the mounting of the toner pack to the mounting portion is completed.

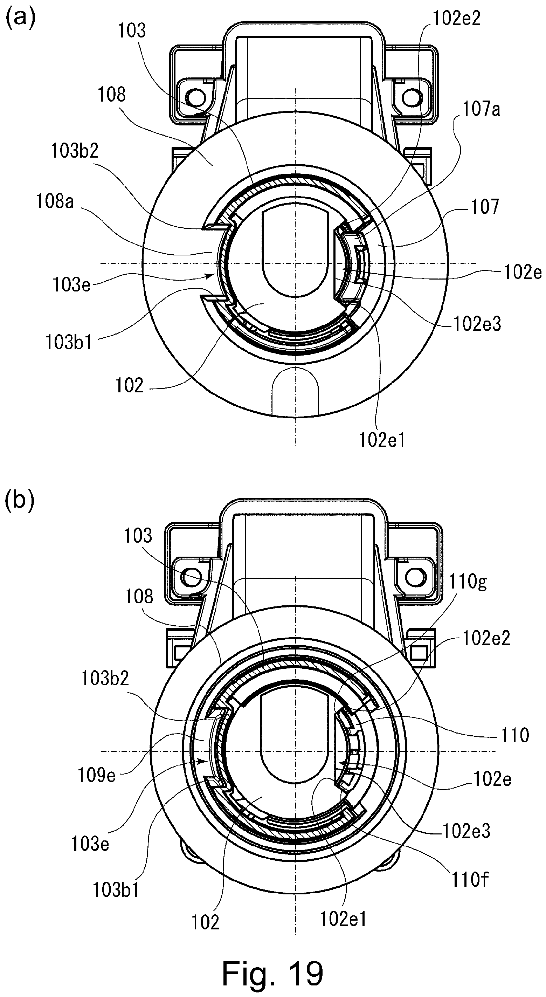

Part (a) of Figure 19 is a sectional view showing a 19A-19A cross section of part (a) of Figure 18, and part (b) of Figure 19 is a sectional view showing a 19B-19B cross section of part (a) of Figure 18.

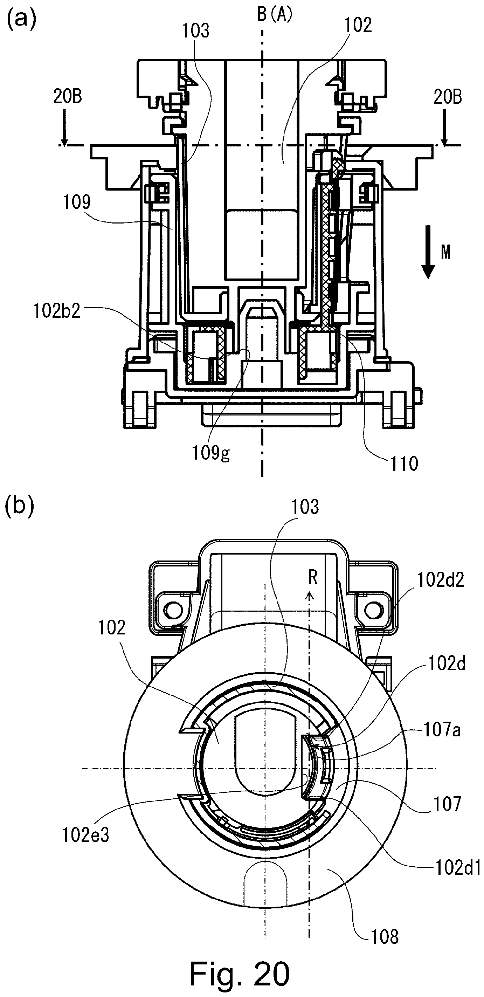

Part (a) of Figure 20 is a sectional view showing a 20A-20A cross section of part (b) of Figure 18, and part (b) of Figure 20 is a sectional view showing a 20B-20B cross section of part (a) of Figure 20.

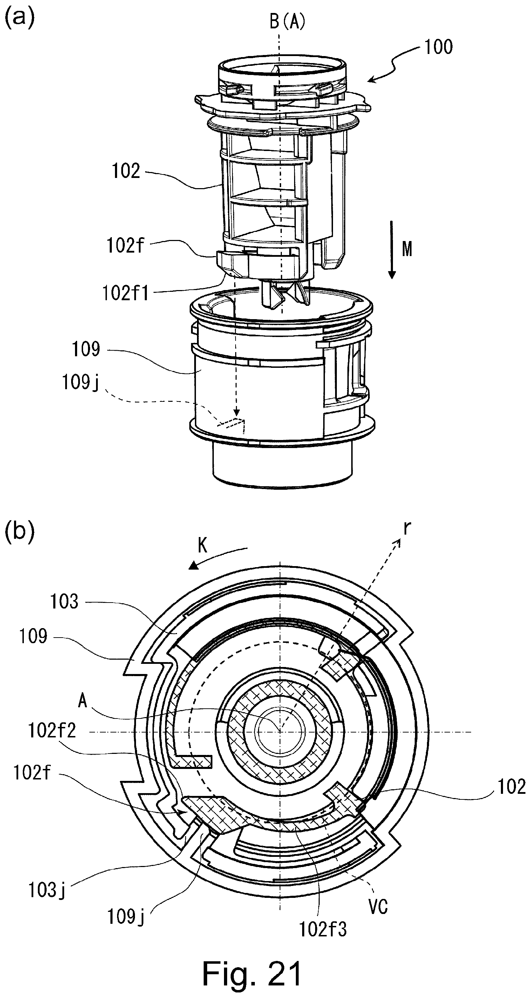

Part (a) of Figure 21 is a perspective view showing a state when the toner pack is being mounted toward the apparatus-side shutter, and part (b) of Figure 21 is a sectional view showing a 16B-16B cross section of part (a) of Figure 16 in a state in which the mounting of the toner pack to the mounting portion is completed.

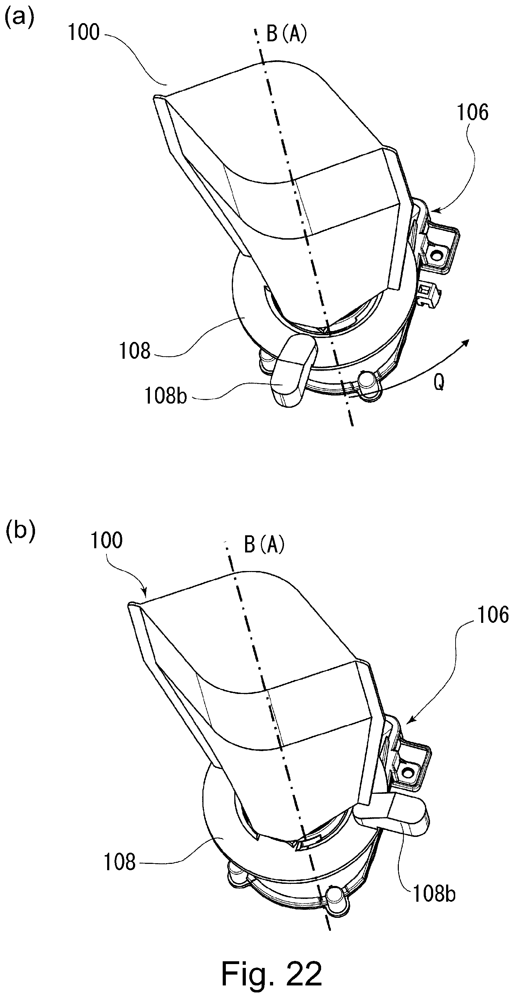

Part (a) of Figure 22 is a perspective view showing the operating lever positioned in the closed position and the toner pack, and part (b) of Figure 22 is a perspective view showing the operating lever positioned in the open position and the toner pack.

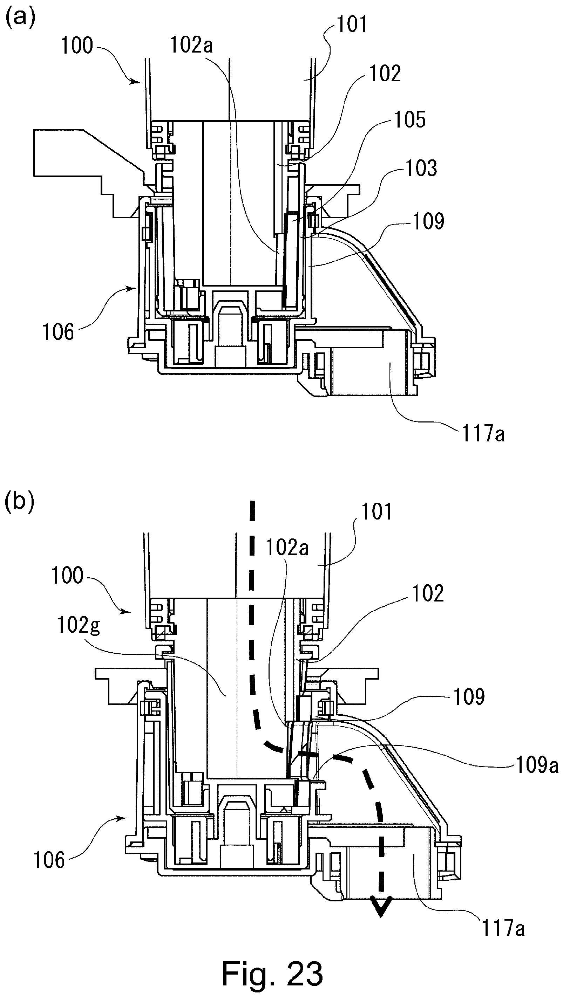

Part (a) of Figure 23 is a sectional view showing the toner pack and the mounting portion when both the apparatus-side shutter and the pack-side shutter are in the shielding positions, and part (b) of Figure 23 is a sectional view showing the toner pack and the mounting portion when both the apparatus-side shutter and the pack-side shutter are in the open positions.

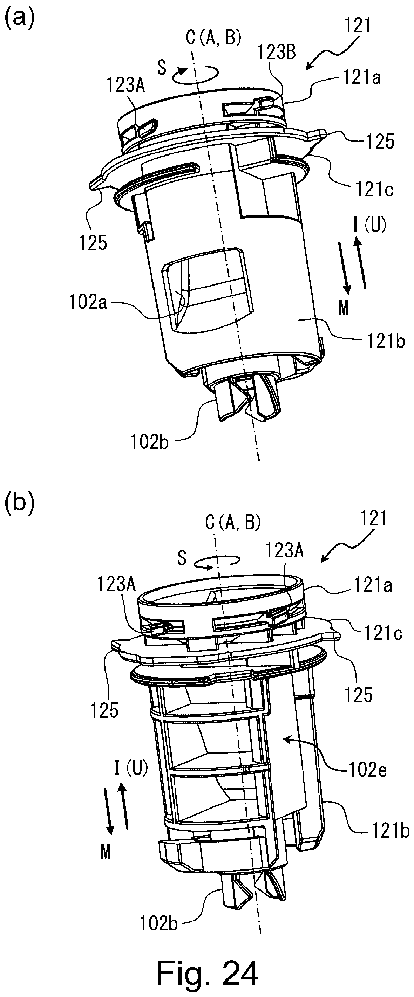

Part (a) of Figure 24 is a perspective view of a nozzle main body of the toner pack according to this embodiment, and part (b) of Figure 24 is a perspective view of the nozzle main body of the toner pack according to this embodiment different in point of view from part (a) of Figure 24.

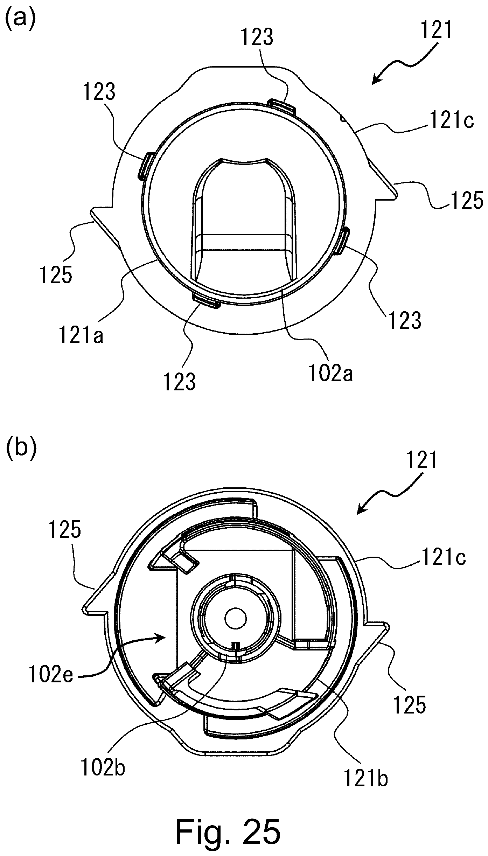

Part (a) of Figure 25 is a view (plan view) of the nozzle main body of the toner pack according to this embodiment as viewed in an opposite direction to an inserting and removing direction to a coupling member, and part (b) of Figure 25 is a view (bottom view) of the nozzle main body of the toner pack according to this embodiment as viewed in the inserting and removing direction to the coupling member.

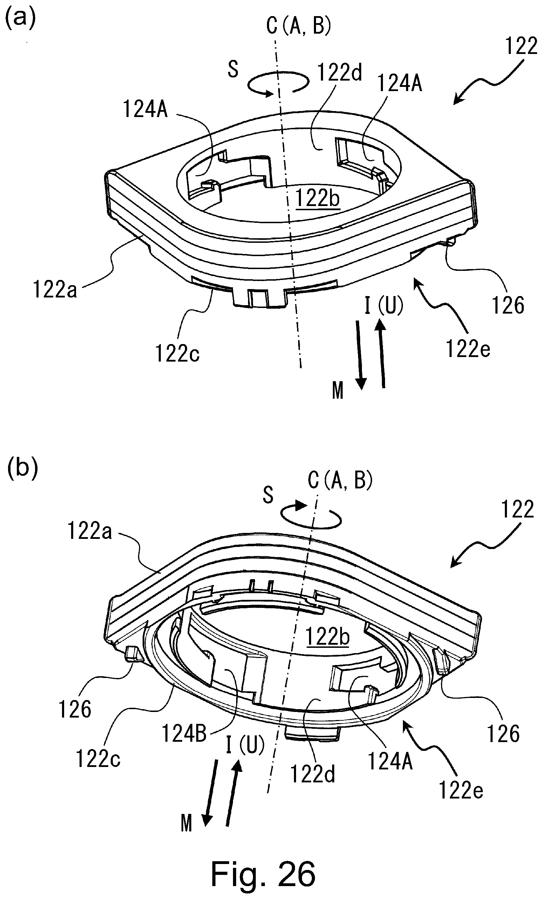

Part (a) of Figure 26 is a perspective view of the coupling member of the toner pack according to this embodiment, and part (b) of Figure 26 is a perspective view of the coupling member of the toner pack according to this embodiment different in point of view from part (a) of Figure 26.

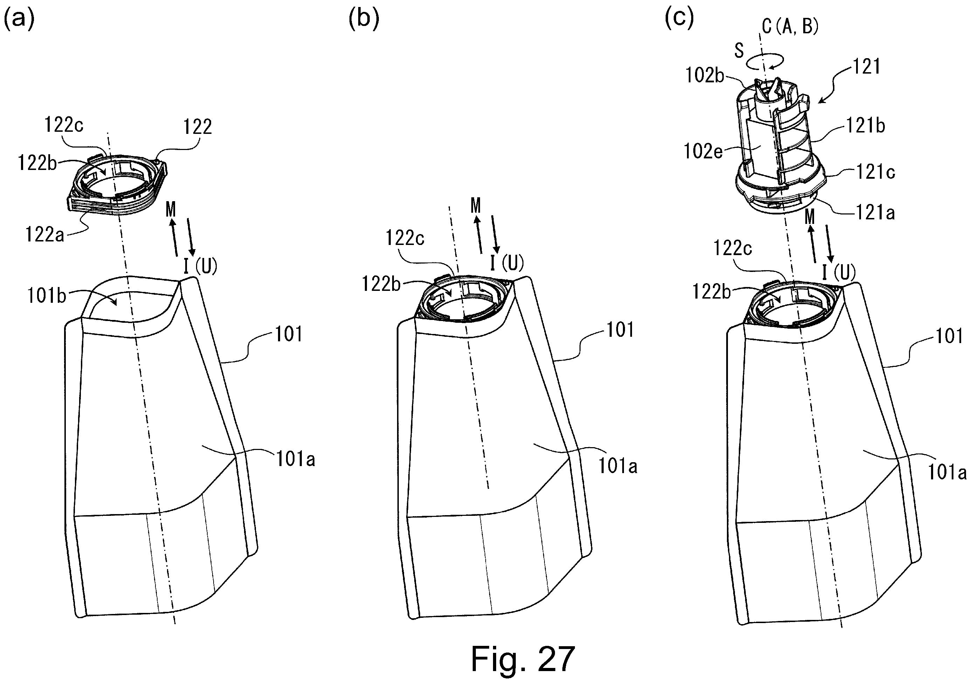

Part (a) of Figure 27 is a perspective view showing a separated state before the coupling member is coupled to a pouch, part (b) of Figure 27 is a perspective view showing a state after the coupling member is coupled to the pouch, and part (c) of Figure 27 is a perspective view showing a form for toner filling in which the coupling member is coupled to the pouch.

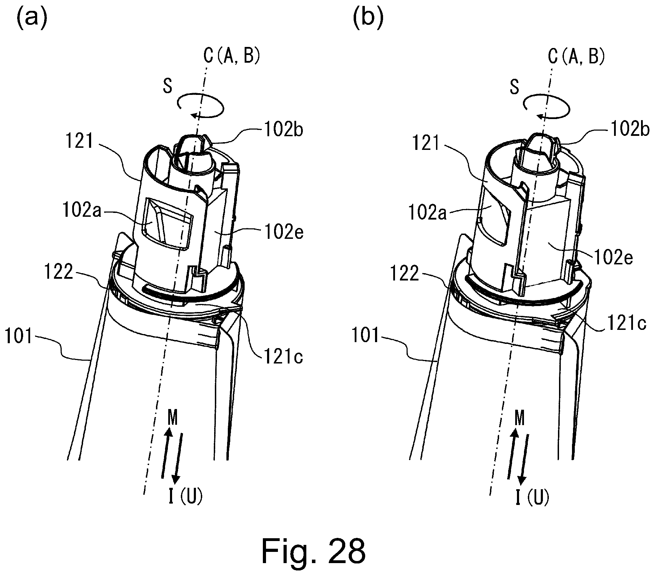

Part (a) of Figure 28 is an enlarged perspective view of the pouch and the nozzle showing a state in which the nozzle main body is in an insertion completed position relative to the coupling member. Part (b) of Figure 28 is an enlarged perspective view of a pouch-nozzle assembly showing a state in which the nozzle main body is rotated relative to the coupling member from the insertion completed position shown in part (a) of Figure 28 to an engagement completed position.

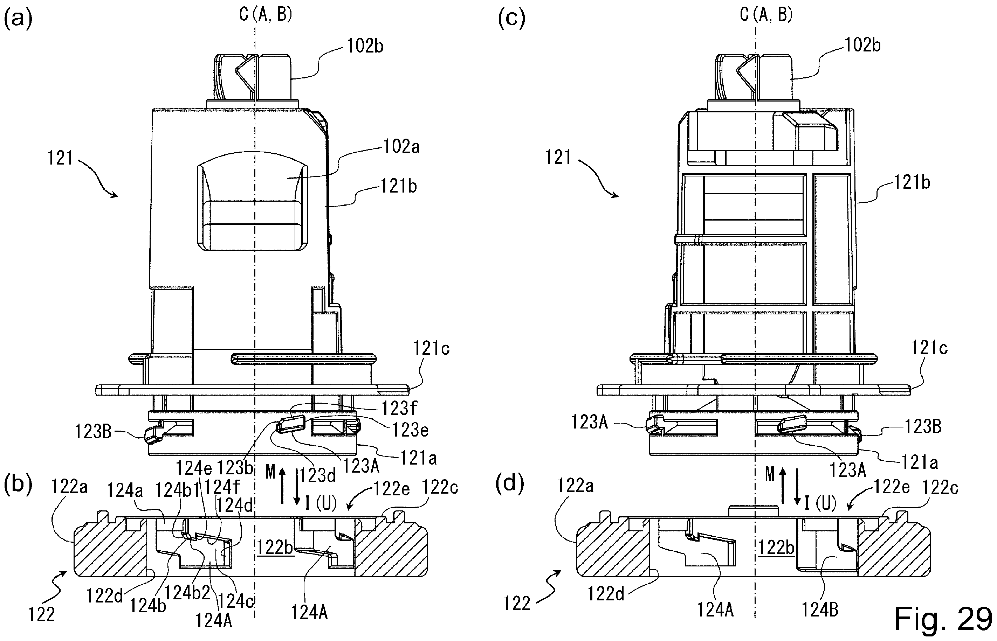

Part (a) of Figure 29 is a side view showing a side of the nozzle main body on which the discharging opening is provided, and part (b) of Figure 29 is a sectional view of the coupling member including a rotational axis of relative rotation between the nozzle main body and the coupling member. Part (c) of Figure 29 is a side view showing an opposite side of the nozzle main body to the side shown in part (a) of Figure 29, and part (d) of Figure 29 is a sectional view of the coupling member including the rotational axis of the relative rotation between the nozzle main body and the coupling member.

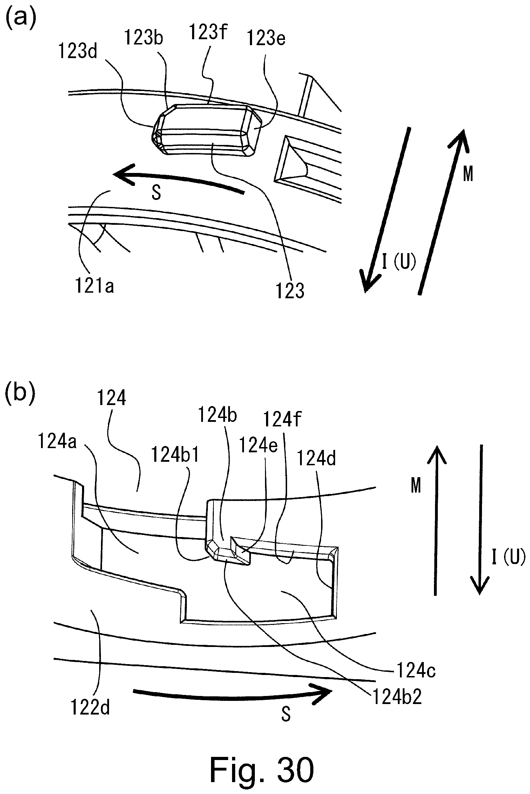

Part (a) of Figure 30 is an enlarged perspective view showing a structure of an inside engaging projection, and part (b) of Figure 30 is an enlarged perspective view showing a structure of an engaged groove.

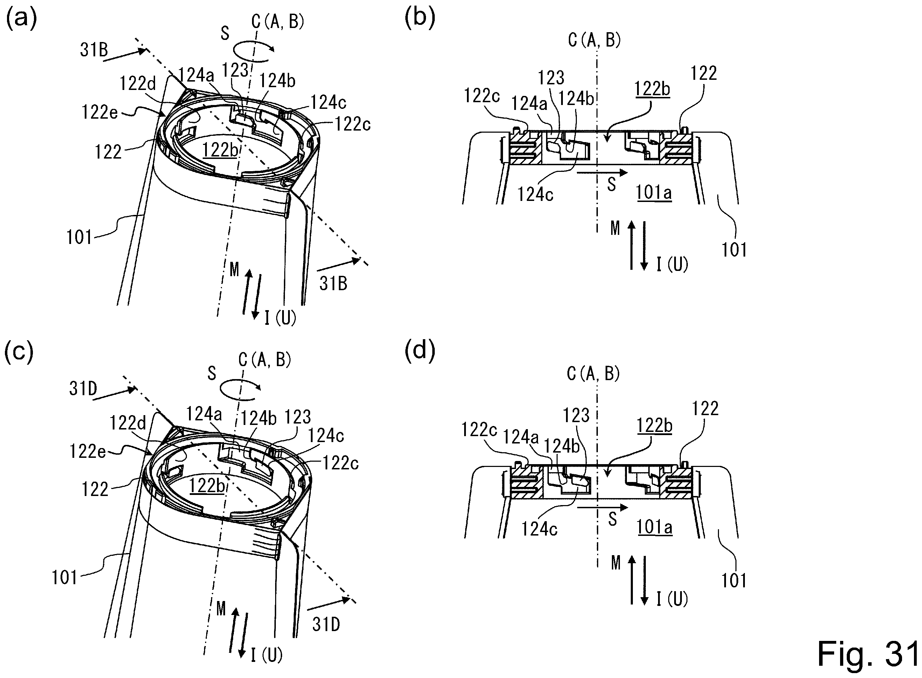

Part (a) of Figure 31 is a schematic enlarged perspective view showing a state of an inside of the opening portion of the coupling member attached to the pouch, illustrating only the inside engaging projection of the nozzle main body, and a view showing a state when the nozzle main body is in the insertion completed position relative to the coupling member. Part (b) of Figure 31 is a 31B-31B sectional view of part (a) of Figure 31. Part (c) of Figure 31 is a schematic enlarged perspective view showing a state of the inside of the opening portion of the coupling member attached to the pouch, illustrating only the inside engaging projection of the nozzle main body, and a view showing a state when the nozzle main body is in the engagement completed position relative to the coupling member. Part (d) of Figure 31 is a 31D-31D sectional view of part (c) of Figure 31.

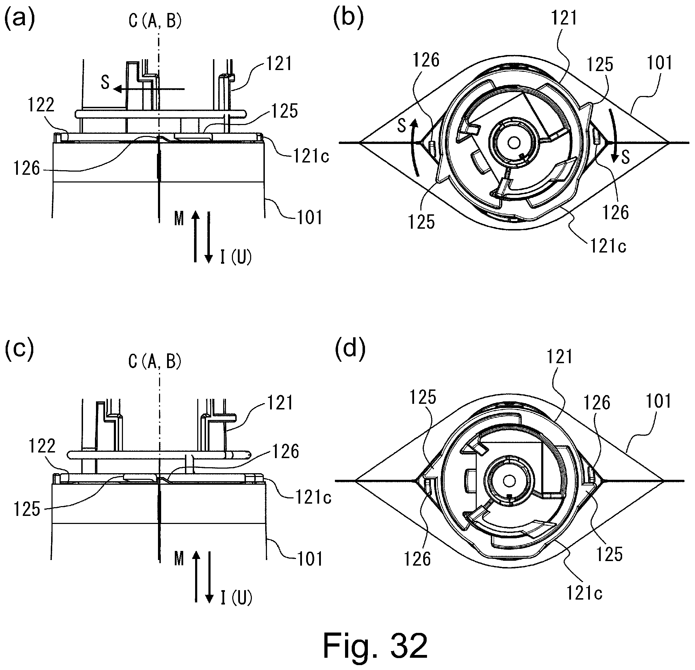

Part (a) of Figure 32 is an enlarged side view of the pouch and the nozzle showing a state of a second engagement structure (outside engaging projection of the nozzle main body and an engaged projection of the coupling member) when the nozzle main body is in the insertion completed position. Part (b) of Figure 32 is a view (bottom view) of the pouch and the nozzle shown in part (a) of Figure 32 as viewed in an inserting direction. Part (c) of Figure 32 is an enlarged side view of the pouch-nozzle assembly showing a state of the second engagement structure (outside engaging projection of the nozzle main body and the engaged projection of the coupling member) when the nozzle main body is in the engagement completed position. Part (d) of Figure 32 is a view (bottom view) of the pouch-nozzle assembly shown in part (c) of Figure 32 as viewed in the inserting direction.

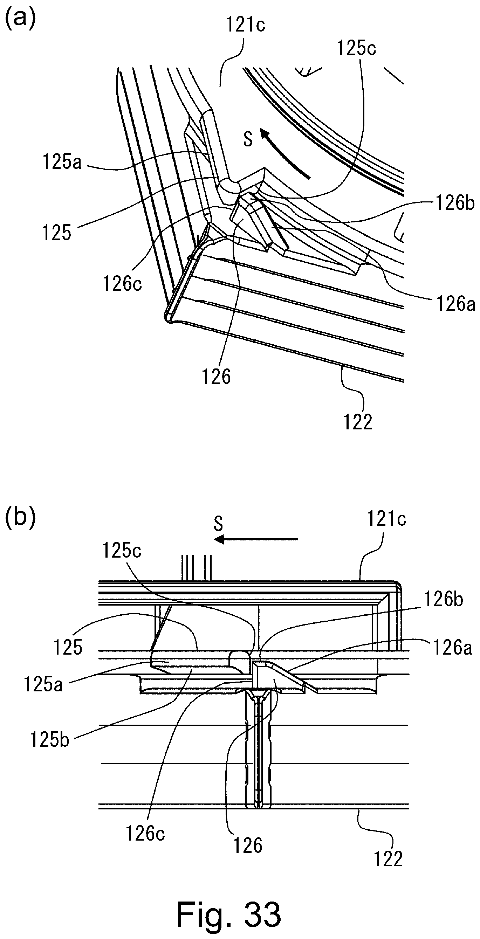

Part (a) of Figure 33 is an enlarged perspective view showing a state of the second engagement structure (outside engaging projection of the nozzle main body and the engaged projection of the coupling member) when the nozzle main body is in the engagement completed position. Part (b) of Figure 33 is an enlarged side view showing a state of the second engagement structure (outside engaging projection of the nozzle main body and the engaged projection of the coupling member) when the nozzle main body is in the engagement completed position.

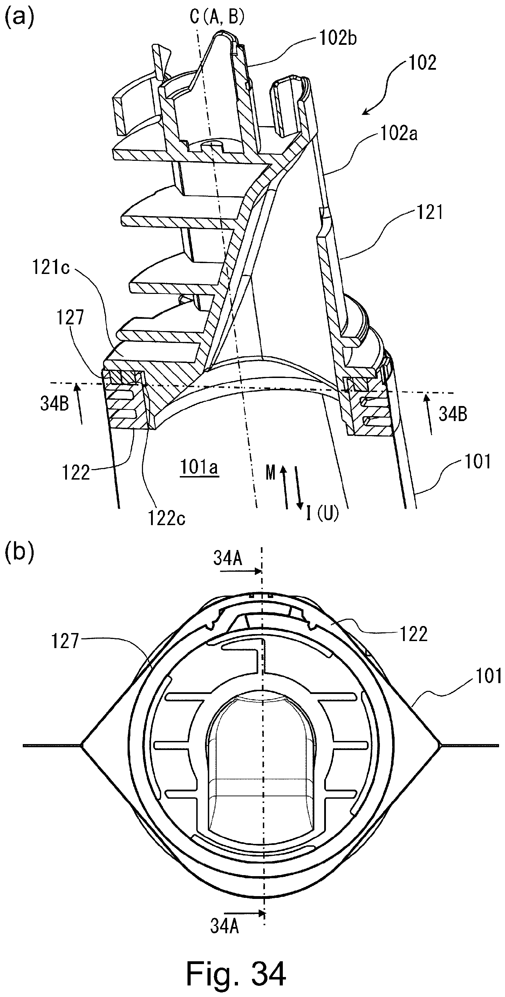

Part (a) of Figure 34 is a perspective sectional view around the nozzle of the pouch-nozzle assembly and is a 34A-34A sectional view of part (b) of Figure 34, and part (b) of Figure 34 is a sectional view showing a structure of a seal member and a 34B-34B sectional view of part (a) of Figure 34.

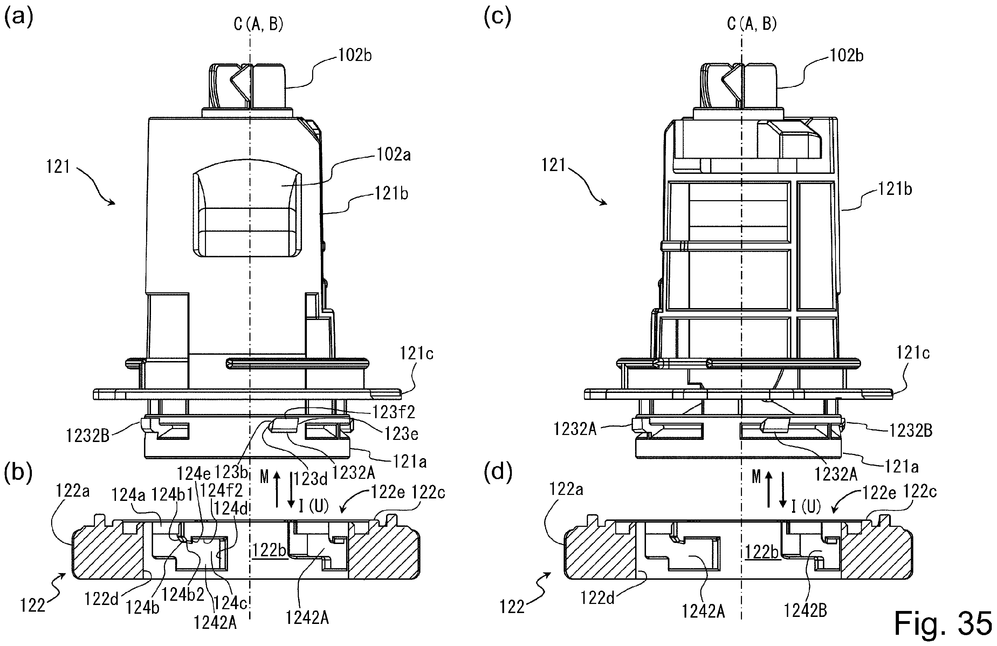

Part (a) of Figure 35 is, in a modified example of a first engagement structure, a side view showing a side of a nozzle main body in which the discharging opening is provided, and part (b) of Figure 35 is a sectional view of a coupling member including a rotational axis of relative rotation of the nozzle main body and the coupling member. Part (c) of Figure 35 is, in the modified example of the first engagement structure, a side view showing an opposite side of the nozzle main body to the side shown in part (a) of Figure 35, and part (d) of Figure 35 is a sectional view of the coupling member including the rotational axis of the relative rotation of the nozzle main body and the coupling member.

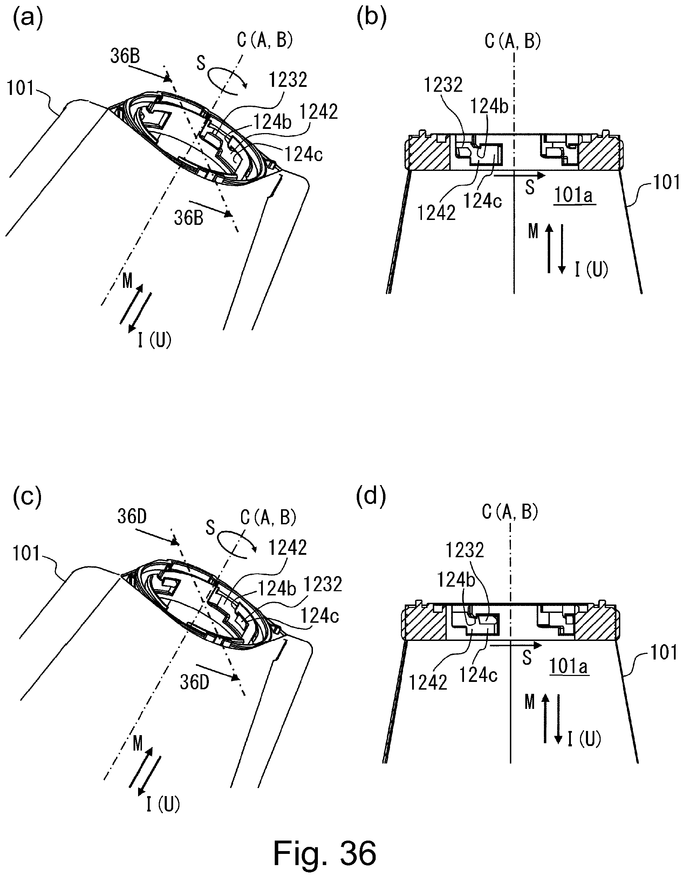

Part (a) of Figure 36 is, in the modified example of the first engagement structure, a schematic enlarged perspective view showing a state of an inside of an opening portion of the coupling member attached to the pouch, illustrating only an inside engaging projection of the nozzle main body, and a view showing a state when the nozzle main body is in an insertion completed position relative to the coupling member. Part (b) of Figure 36 is a 36B-36B sectional view of part (a) of Figure 36. Part (c) of Figure 36 is, in the modified example of the first engagement structure, a schematic enlarged perspective view showing a state of the inside of the opening portion of the coupling member attached to the pouch, illustrating only the inside engaging projection of the nozzle main body, and a view showing a state when the nozzle main body is in an engagement completed position relative to the coupling member. Part (d) of Figure 36 is a 36D-36D sectional view of part (c) of Figure 36.

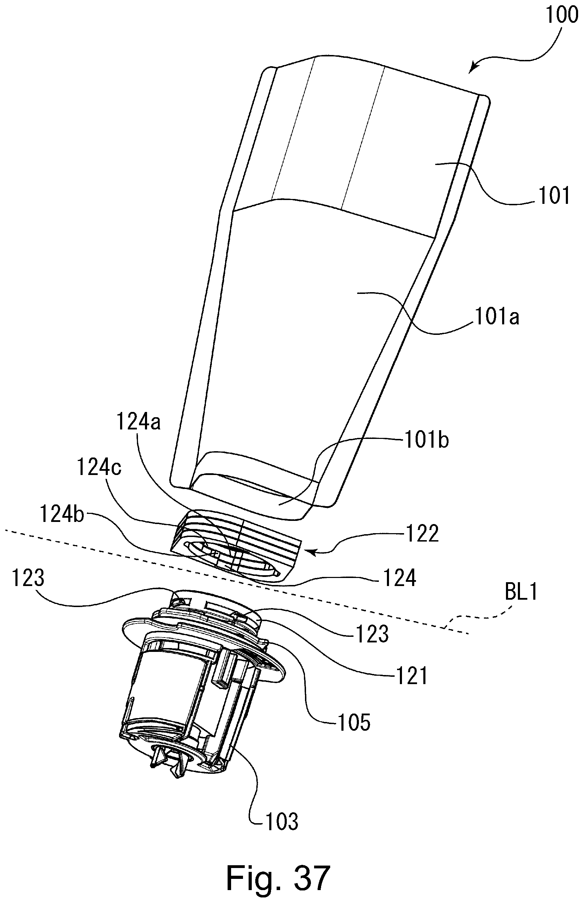

Figure 37 is an exploded perspective view showing the toner pack.

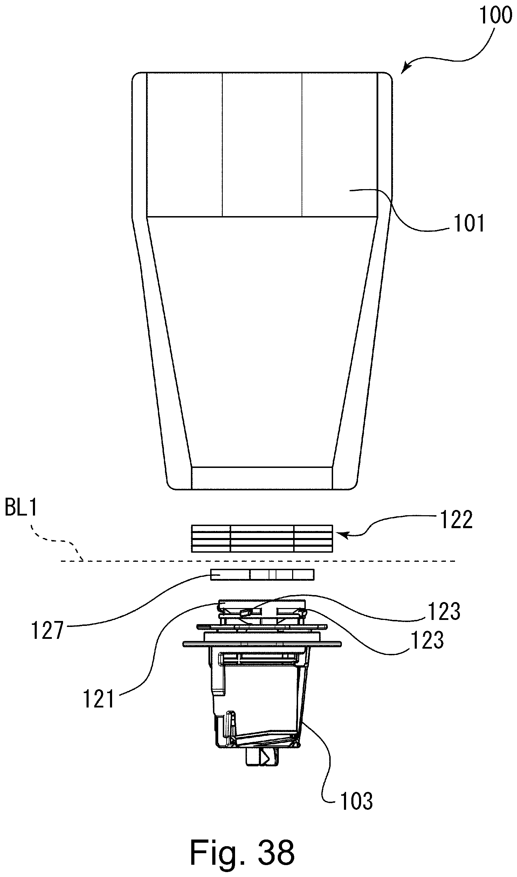

Figure 38 is an exploded front view showing the toner pack.

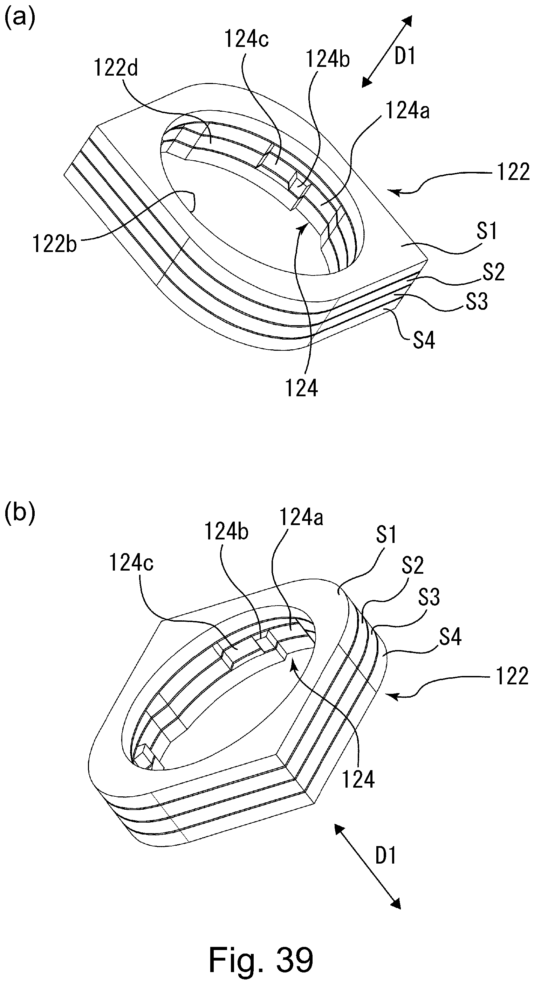

Part (a) of Figure 39 is a perspective view showing the coupling member, and part (b) of Figure 39 is another perspective view showing the coupling member.

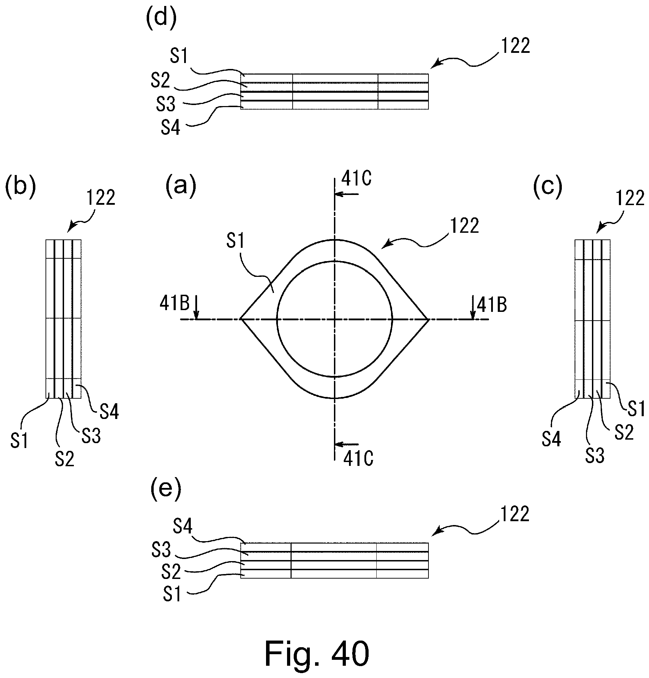

Part (a) of Figure 40 is a front view showing the coupling member, part (b) of Figure 40 is a left side view showing the coupling member, part (c) of Figure 40 is a right side view showing the coupling member, part (d) of Figure 40 is a plan view showing the coupling member, and part (e) of Figure 40 is a bottom view showing the coupling member.

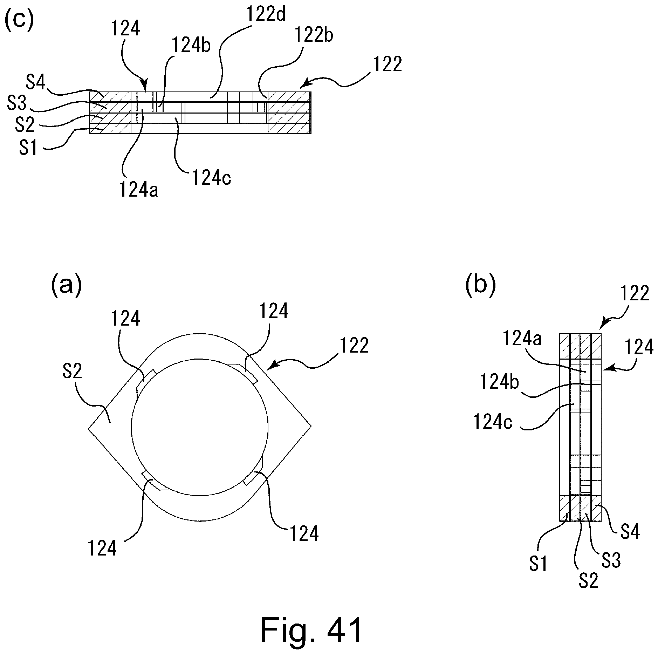

Part (a) of Figure 41 is a sectional view showing the coupling member, part (b) of Figure 41 is a sectional view showing a 41B-41B cross section of part (a) of Figure 40, and part (c) of Figure 41 is a sectional view showing a 41C-41C cross section of part (a) of Figure 40.

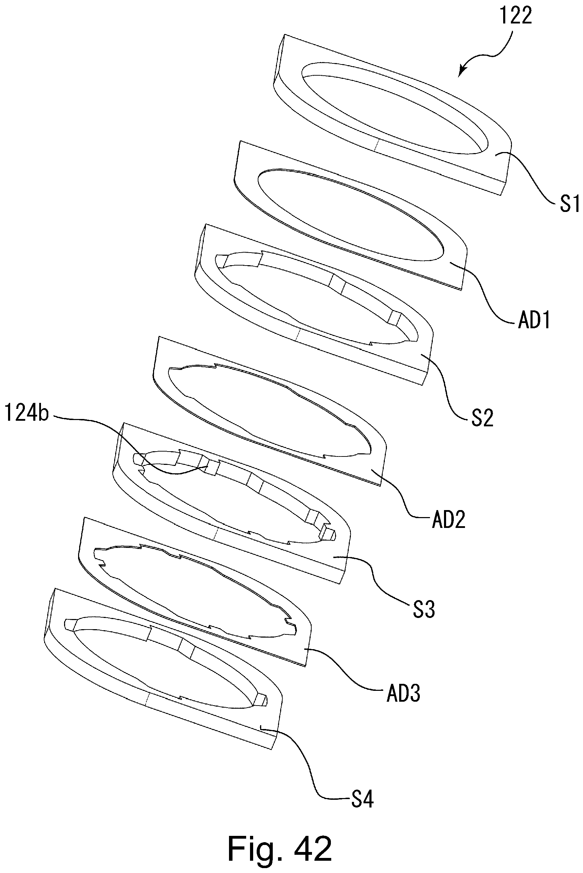

Figure 42 is an exploded perspective view showing the coupling member.

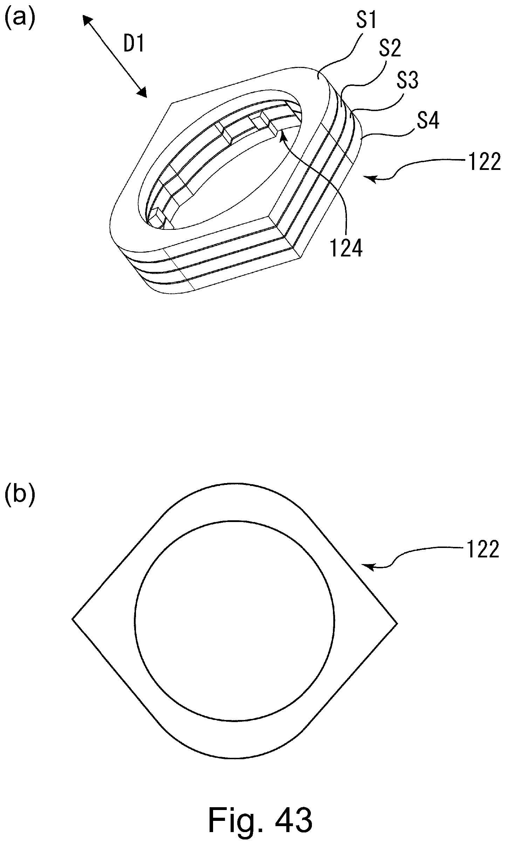

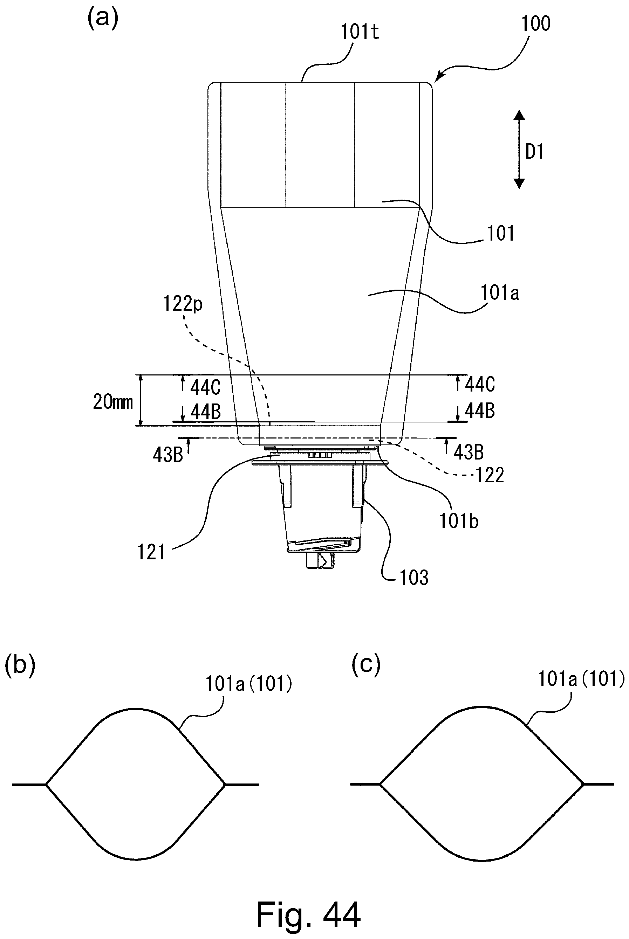

Part (a) of Figure 43 is a perspective view showing the coupling member, and part (b) of Figure 43 is a sectional view showing a 43B-43B cross section of part (a) of Figure 44.

Part (a) of Figure 44 is a front view showing the toner pack, part (b) of Figure 44 is a sectional view showing a 44B-44B cross section of part (a) of Figure 44, and part (c) of Figure 44 is a sectional view showing a 44C-44C cross section of part (a) of Figure 44.

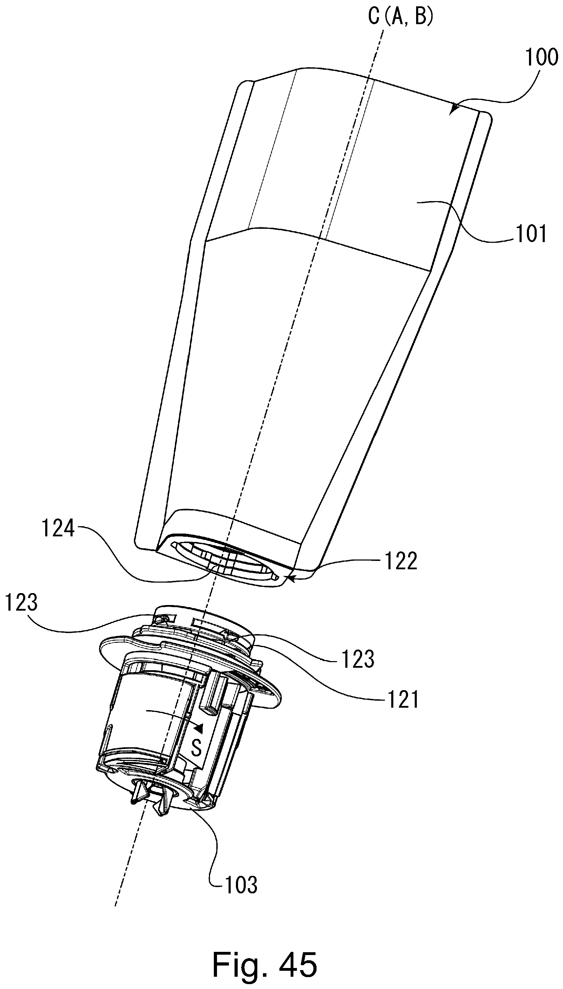

Figure 45 is an exploded perspective view showing a state in which the coupling member and the nozzle main body are separated.

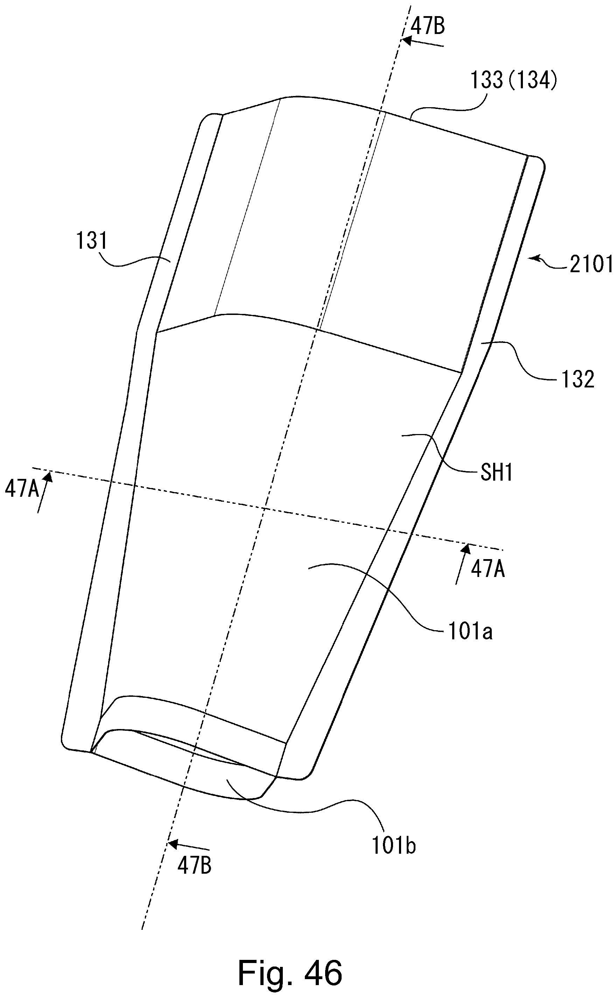

Figure 46 is a perspective view showing a pouch according to a second embodiment.

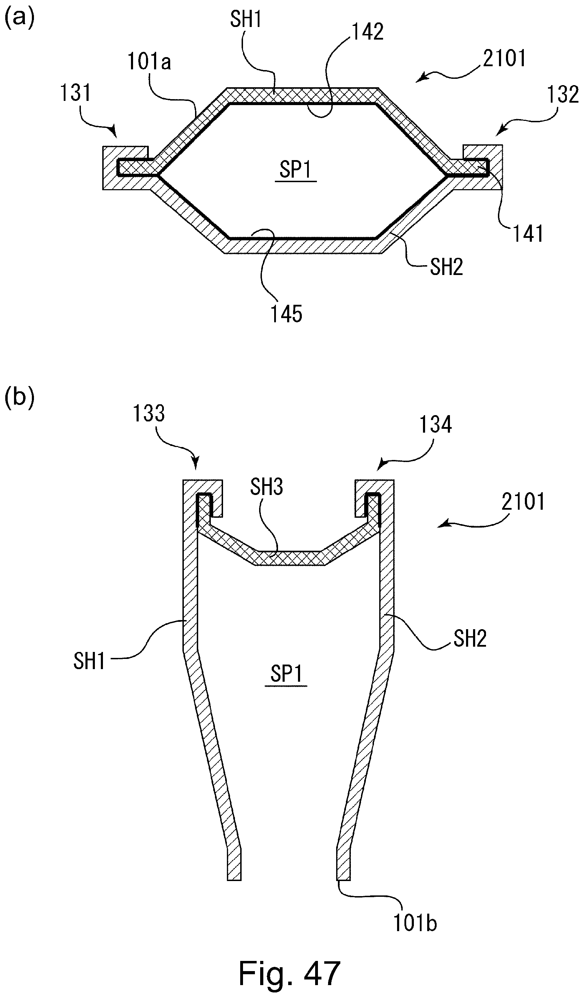

Part (a) of Figure 47 is a sectional view showing a 47A-47A cross section of Figure 46, and part (b) of Figure 47 is a sectional view showing a 47B-47B cross section of Figure 46.

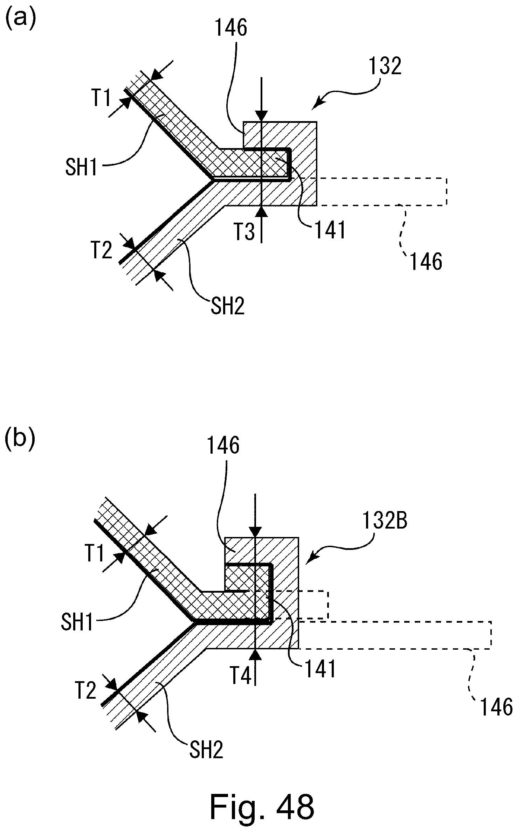

Part (a) of Figure 48 is an enlarged view showing an edge portion, and part (b) of Figure 48 is an enlarged view showing an edge portion according to a first modified example of the second embodiment.

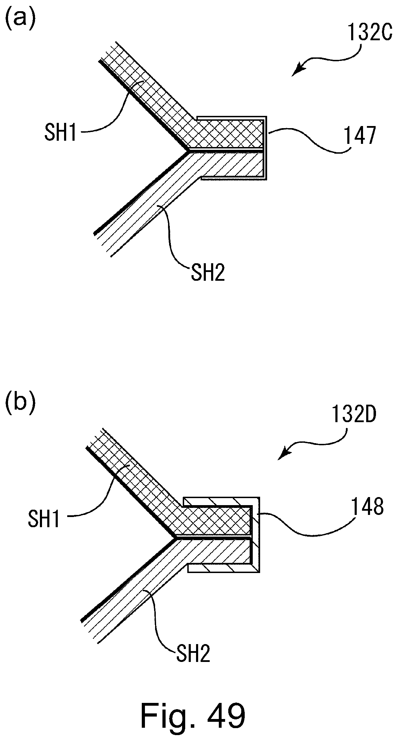

Part (a) of Figure 49 is an enlarged view showing an edge portion according to a second modified example of the second embodiment, and part (b) of Figure 49 is an enlarged view showing an edge portion according to a third modified example of the second embodiment.

## DESCRIPTION OF THE EMBODIMENTS

Technologies described in this description can contribute to realization of a sustainable society such as a decarbonized/recycling society. In embodiments below, modes of practice in this disclosure will be described by way of example. However, constitutions disclosed in the embodiments below, for example, functions, material, and shapes of components and relative dispositions thereof are what represent an example of modes associated with the scope of the claims, and are not intended to limit the scope of the claims to the constitutions disclosed in these embodiments. Further, problems which the constitutions disclosed in the embodiments below solve, or actions or effects obtained from the disclosed constitutions are not intended to limit the scope of the claims.

<First embodiment>

Hereinafter, an electrophotographic image forming apparatus according to a first embodiment of this disclosure will be described using the drawings. Here, the electrophotographic image forming apparatus (hereinafter referred to as an image forming apparatus) is what forms an image on a recording material using an electrophotographic image forming type. As an example of the image forming apparatus, a copy machine, a facsimile device, and a printer (laser beam printer, LED printer, etc.), and a multifunction machine of these (multifunction printer), etc. are included.

Part (a) of Figure 1 is a schematic view showing a structure of an image forming apparatus 1 according to this embodiment. Part (b) of Figure 1 is a perspective view showing the structure of the image forming apparatus 1. Figure 2 is a perspective view showing an openable/closable member 83 and a supplying opening 32a.

The image forming apparatus 1 is a monochromatic printer for forming an image on a recording material P on the basis of image information inputted from an external device. In the recording material P, various sheet materials different in material including papers such as plain paper and thick paper, a plastic film such as a sheet for an overhead projector, special shaped sheets such as an envelope and index paper, a cloth, and the like are included.

[General structure]

The image forming apparatus 1 includes, as shown in part (a) of Figure 1 and part(b) of Figure 1, an apparatus main assembly 400, a reading device (apparatus) 200 supported so as to be openable and closable relative to the apparatus main assembly 400, and an operating portion 300 mounted to an outer casing surface of the apparatus main assembly 400. The apparatus main assembly 400 includes an image forming portion 10 for forming a toner image on the recording material, a feeding portion 60 for feeding the recording material to the image forming portion 10, a fixing portion 70 for fixing the toner image, formed by the image forming portion 10, on the recording material, and a discharging roller pair 80.

The image forming portion 10 includes a scanner unit 11, a process unit 20 of an electrophotographic type, and a transfer roller 12 for transferring the toner image, formed on a photosensitive drum 21 of the process unit 20, onto the recording material. The process unit 20 includes the photosensitive drum 21, a charging roller 22 disposed at a periphery of the photosensitive drum 21, a pre-exposure device 23, and a developing device 30 including a developing roller 31.

The photosensitive drum 21 is a photosensitive member molded in a cylindrical shape. The photosensitive drum 21 in this embodiment includes, on a drum shaped base material molded with aluminum, a photosensitive layer formed with a negatively chargeable organic photosensitive member. Further, the photosensitive drum 21 is rotationally driven at a predetermined process speed in a predetermined direction (clockwise direction in the figure) by a motor.

The charging roller 22 contacts the photosensitive drum 21 at a predetermined press contact force and forms a charging portion. Further, a desired charging voltage is applied to the charging roller 22 by a high charging voltage power source, so that the charging roller 22 electrically charges a surface of the photosensitive drum 21 uniformly to a predetermined potential. In this embodiment, the photosensitive drum 21 is charged to a negative polarity by the charging roller 22. The pre-exposure device 23 discharges (removes) a surface potential of the photosensitive drum 21, at a position in front of the charging portion in order to generate stable electric discharge at the charging portion.

The scanner unit 11 irradiates the photosensitive drum 21, by using a polygonal mirror, with laser light corresponding to the image information inputted from the external device or the reading device 200, so that the surface of the photosensitive drum 21 is subjected to scanning exposure. By this light exposure, an electrostatic latent image depending on the image information is formed on the surface of the photosensitive drum 21. Incidentally, the scanner unit 11 is not limited to a laser scanner device, but for example, an LED exposure device including an LED array in which a plurality of LEDs are arranged along a longitudinal direction of the photosensitive drum 21 may be employed.

The developing device 30 includes the developing roller 31 for carrying a developer, a developing container 32 which is a casing for the developing device 30, and a supplying roller 33 capable of supplying the developer to the developing roller 31. The developing roller 31 and the supplying roller 33 are rotatably supported by the developing container 32. Further, the developing roller 31 is disposed at an opening portion of the developing container 32 so as to oppose the photosensitive drum 21. The supplying roller 33 rotatably contacts the developing roller 31, and toner as a content accommodated in the developing container 32 is applied onto the surface of the developing roller 31 by the supplying roller 33. Incidentally, when a constitution capable of supplying the toner sufficiently to the developing roller 31 is employed, the supplying roller 33 is not necessarily be required.

The developing device 30 in this embodiment uses a contact development type as a development type. That is, a toner layer carried on the developing roller 31 contacts the photosensitive drum 21 at a developing portion (developing region) where the photosensitive drum 21 and the developing roller 31 oppose each other.

To the developing roller 31, a developing voltage is applied by a high developing voltage power source. Under application of the developing voltage, the toner carried on the developing roller 31 is transferred from the developing roller 31 onto the drum surface in accordance with a potential distribution of the surface of the photosensitive drum 21, so that the electrostatic latent image is developed into a toner image. Incidentally, in this embodiment, a reversal development type is employed. That is, the toner image is formed by deposition of the toner on a surface region of the photosensitive drum 21 attenuated in charge amount by being exposed to light in an exposure step after being charged in a charging step.

Further, in this embodiment, the toner which is 6 [$\mu$m] in particle diameter and of which normal charge polarity is a negative polarity is used. As the toner in this embodiment, a polymerization toner formed by a polymerization method as an example is employed. Further, the toner in this embodiment is a so called non-magnetic one-component developer which does not contain a magnetic component and in which the toner is carried on the developing roller 31 principally by an intermolecular force or an electrostatic force (mirror force). However, a one-component developer containing the magnetic component may also be used. Further, in the one-component developer, an additive (for example, wax or silica fine particles) for adjusting flowability and charging performance of the toner is contained in addition to toner particles in some cases. Further, as the developer, a two-component developer constituted by non-magnetic toner and a magnetic carrier may also be used. In the case where the developer having a magnetic property is used, as the developer carrying member, for example, a cylindrical developing sleeve inside which a magnet is disposed is used.

The developing container 32 is provided with an accommodating portion 36 for accommodating the toner and a stirring member 34 provided inside the accommodating portion 36. The stirring member 34 is rotated by being driven by an unshown motor, and thus stirs the toner in the developing container 32 and sends the toner toward the developing roller 31 and the supplying roller 33. Further, the stirring member 34 has a function of circulating the toner, peeled off from the developing roller 31 without being used for the development, in the developing container and of uniformizing the toner in the developing container. Incidentally, the stirring member 34 is not limited to a rotatable form. For example, a stirring member in a swingable form may also be employed.

Further, at the opening of the developing container 32 where the developing roller 31 is disposed, a developing blade 35 for regulating an amount of the toner carried on the developing roller 31 is disposed. The toner supplied to the surface of the developing roller 31 passes through an opposing portion to the developing blade 35 with rotation of the developing roller 31, so that the toner is uniformly formed in a thin layer and is charged to the negative polarity by triboelectric charge.

A feeding portion 60 includes, as shown in part (a) of Figure 1 and part(b) of Figure 1, a front door 61 supported so as to be openable and closable by the apparatus main assembly 400, a tray portion 62, an intermediary plate 63, a tray spring 64, and a pick up roller 65. The tray portion 62 constitutes a bottom of a recording material accommodating space which appears by opening the front door 61, and the intermediary plate 63 is supported by the tray portion 62 so as to be capable of being raised and lowered. The tray spring 64 urges the intermediary plate 63 upward and presses the recording materials P, stacked on the intermediary plate 63, against the pick up roller 65. Incidentally, the front door 61 closes the recording material accommodating space in a state in which the front door 61 is closed relative to the apparatus main assembly 400, and supports the recording materials P together with the tray portion 62 and the intermediary plate 63 in a state in which the front door 61 is opened relative to the apparatus main assembly 400.

The fixing portion 70 is of a heat fixing type in which an image fixing process is performed by heating and melting the toner on the recording material. The fixing portion 70 includes a fixing film 71, a fixing heater such as a ceramic heater for heating the fixing film 71, a thermistor for measuring a temperature of the fixing heater, and a pressing roller 72 for press contacting the fixing film 71.

Next, an image forming operation of the image forming apparatus 1 will be described. When an instruction of image formation is inputted to the image forming apparatus 1, on the basis of the image information inputted from an external computer connected to the image forming apparatus 1 or from the reading device 200, an image forming process by the image forming portion 10 is started. The scanner unit 11 emits the laser light toward the photosensitive drum 21 on the basis of the inputted image information. At this time, the photosensitive drum 21 is charged in advance by the charging roller 22, and is irradiated with the laser light, so that the electrostatic latent image is formed on the photosensitive drum 21. Thereafter, this electrostatic latent image is developed by the developing roller 31, so that the toner image is formed on the photosensitive drum 21.

In parallel to the above-described image forming process, the pick up roller 65 of the feeding portion 60 sends the recording material P supported by the front door 61, the tray portion 62, and the intermediary plate 63. The recording material P is fed to a registration roller pair 15 by the pick up roller 65, and is abutted against a nip of the registration roller pair 15, so that oblique movement of the recording material P is corrected. Then, the registration roller pair 15 is driven by being timed to a transfer timing of the toner image, and is conveyed toward a transfer nip formed by a transfer roller 12 and the photosensitive drum 21.

To the transfer roller 12, a transfer voltage is applied from a high transfer voltage power source, so that the toner image carried on the photosensitive drum 21 is transferred onto the recording material P conveyed by the registration roller pair 15. The recording material P onto which the toner image is transferred is conveyed to the fixing portion 70, where the toner image is heated and pressed when the recording material P passes through a nip between the fixing film 71 and the pressing roller 72 of the fixing portion 70. By this, the toner particles are melted and are thereafter fixed, so that the toner image is fixed on the recording material P. The recording material P passed through the fixing portion 70 is discharged to an outside of the image forming apparatus 1 (outside of the printer) by the discharging roller pair 80, so that the discharged recording materials P are stacked on a discharge tray 81 formed at an upper portion of the apparatus main assembly 400.

The discharge tray 81 is inclined upward toward a downstream in a discharging direction of the recording material, and the recording material discharged on the discharge tray 81 slides down on the discharge tray 81, so that a trailing end of the recording material is aligned by a restricting surface 84.

The reading device 200 includes a reading unit 201 in which an unshown reading portion is built, and a platen (pressure plate) 202 supported by the reading unit 201 so as to be openable and closable. At an upper surface of the reading unit 201, an original supporting platen glass 203 which permits transmission of light emitted from the reading portion and on which an original is to be placed.

In a case where a user intends to cause the reading device 200 to read an image of the original, the user places the original on the original supporting platen glass 203 in a state in which the platen 202 is opened. Then, the platen 202 is closed and thus a positional deviation of the original on the original supporting platen glass 203 is prevented, so that a reading instruction is outputted to the image forming apparatus 1 by operating the operating portion 300, for example. When a reading operation is started, the reading portion in the reading unit 201 reciprocates in a sub scan direction, i.e., a left-right direction in a state in which the user faces the operating portion 300 of the image forming apparatus 1 on a front (surface) side. The reading portion receives light reflected by the original by a light receiving portion while emitting light from a light emitting portion toward the original, and photoelectrically converts the light, so that the reading portion reads the image of the original. Incidentally, in the following, on the basis of a state in which the user faces the operating portion 300 on the front side, a front-rear direction, the left-right direction, and an up-down direction are defined.

At an upper portion of the apparatus main assembly 400, a top cover 82 is provided, and at an upper surface of the top cover 82, the discharge tray 81 is formed. As shown in part (b) of Figure 1 and Figure 2, the openable/closable member 83 is supported by the top cover 82 so as to be openable and closable about a rotation shaft 83a extending in the front-rear direction. On the discharge tray 81 of the top cover 82, an opening portion 82a which opens upward is formed.

The openable/closable member 83 is constituted so as to be movable between a closed position where the openable/closable member 83 covers a supplying opening 32a so that a toner pack 100 cannot be mounted to the developing container 32 and an open position where the supplying opening 32a is exposed so that the toner pack 100 can be mounted to the developing container 32. In a state in which the openable/closable member 83 is positioned in the open position, the toner pack 100 as a developer container is moved in a mounting direction M and is detachably mounted to the supplying opening 32a.

The openable/closable member 83 functions as a part of the discharge tray 81 in the closed position. The openable/closable member 83 and the opening portion 82a are formed on a left (hand) side of the discharge tray 81. Further, the openable/closable member 83 is opened in a left (hand) direction by being hooked with user's finger(s) from a groove portion 82b provided on the top cover 82. The openable/closable member 83 is formed in a substantially L shape along a shape of the top cover 82.

The opening portion 82a of the discharge tray 81 opens so that the supplying opening 32a for toner supply formed at the upper portion of the developing container 32 is exposed, and the openable/closable member 83 is opened, so that the user can access the supplying opening 32a. Incidentally, in this embodiment, a type (direct supply type) in which the user supplies the toner from the toner pack 100 (see, parts (a) and (b) of Figure 1), filled with the toner for supply, to the developing device 30 kept in a state in which the developing device 30 is mounted in the image forming apparatus 1 is employed. The toner pack 100 is exposed to the outside at least at a part thereof in a state in which the toner pack 100 is mounted to a mounting portion 106 (see, parts (a) and (b) of Figure 17).

For this reason, in the case where a remaining toner amount of the process unit 20 becomes small, an operation in which the process unit 20 is taken out of the apparatus main assembly 400 and is exchanged with a new process unit becomes unnecessary, so that usability can be improved. Further, the toner can be supplied to the developing container 32 more inexpensively than exchange of entirety of the process unit 20. Incidentally, the direct supply type can reduce cost since there is no need to exchange various rollers and gears, and the like even when compared with the case where only the developing device 30 of the process unit 20 is exchanged. Incidentally, the image forming apparatus 1 and the toner pack 100 constitute an image forming system 1000.

[Mounting portion]

Next, using part (a) of Figure 3 to part (b) of Figure 8, a constitution (structure) of the mounting portion 106 to which the toner pack 100 is mounted will be described. In this embodiment, the mounting portion 106 is a unit for mounting the toner pack 100 including the supplying opening 32a and is provided in the image forming apparatus 1 (see, Figure 2). Part (a) of Figure 3 is an exploded perspective view of the mounting portion 106. Part (b) of Figure 3 is an exploded perspective view of the mounting portion 106 as viewed from a direction different from the direction in part (a) of Figure 3. Part (a) of Figure 4 is a perspective view showing an outer appearance of the mounting portion 106 when an operating lever 108 is in a closed position, and part (a) of Figure 5 is a view of the mounting portion 106 as viewed in the mounting direction M when the operating lever 108 is in the closed position. Part (b) of Figure 4 is a perspective view showing an outer appearance of the mounting portion 106 when the operating lever 108 is in an opening position, and part (b) of Figure 5 is a view of the mounting portion 106 as viewed in the mounting direction M when the operating lever 108 is in the open position.

Part (a) of Figure 6 is a perspective view of an apparatus-side shutter 109 as viewed from an upstream side of the mounting direction M. Part (b) of Figure 6 is a perspective view of the apparatus-side shutter 109 different in point of view from part (a) of Figure 6. Part (a) of Figure 7 is a perspective view of a cover 110 as viewed from a downstream side of the mounting direction M. Part (b) of Figure 7 is a perspective view of the cover 110 as viewed from the upstream side of the mounting direction M. Part (a) of Figure 8 is a sectional view showing the mounting portion 106, and part (b) of Figure 8 is a sectional view showing an 8B-8B cross section of part (a) of Figure 8.

As shown in part (a) of Figure 3 to part (b) of Figure 4, the mounting portion 106 includes a main body base portion 2, and the main body base portion 2 includes a first frame 107, a second frame 117, and the cover 110. The cover 110 and the second frame 117 are fixed to the first frame 107. As shown in part (a) of Figure 7 and part (b) of Figure 7, the cover 110 includes a portion to be engaged 110h engaged with an engaging portion 107b of a positioning portion 107a of the first frame 107 so as not to be rotated about a rotational axis B relative to the first frame 107. Further, with respect to the mounting portion M, on a side downstream of the cover 110, i.e., on a bottom side, a cut away portion 110k is provided, and the cut away portion 110k is provided with a first restricting surface 110c and a second restricting surface 110d. The first restricting surface 110c and the second restricting surface 110d are provided so as to oppose each other with respect to a circumferential direction about the rotational axis B.

Incidentally, the first frame 107, the cover 110, and the second frame 117 may be integrally constituted, not as separate members. As shown in part (a) of Figure 3 and part (b) of Figure 3, the second frame 117 is provided with an apparatus side-opening 117a, and the apparatus-side opening 117a communicates with the accommodating portion 36 (see, part (a) of Figure 1) of the developing container 32.

Each of the operating lever 108 and the apparatus-side shutter 109 is mounted to the main body base portion 2 so as to be rotatable about the rotational axis B. The first frame 107 is provided with the positioning portion 107a. The positioning portion 107a projects inward than an inner peripheral surface 107c about the rotational axis B of the first frame 107 in a radial direction r of a virtual circle VC about the rotational axis B.

Further, the operating lever 108 as an operating portion is provided with a drive transmitting portion 108a and an operating portion 108b. A user is capable of rotating the operating lever 108 about the rotational axis B relative to the main body base portion 2 by operating the operating portion 108b. The drive transmitting portion 108a is a projected portion projected inward than an inner peripheral surface about the rotational axis B of the operating lever 108 in the radial direction r of the virtual circle VC about the rotational axis B, as shown in part (a) of Figure 3.

As shown in part (a) of Figure 6 and part (b) of Figure 6, the apparatus-side shutter 109 as a main body shutter includes an inner peripheral surface 109h, a receiving opening 109a provided in the inner peripheral surface 109h and for receiving the toner from the toner pack 100, and a bottom 109b. The apparatus-side shutter 109 further includes a center boss 109d provided on the bottom 109b, a pack contact surface 109g, a rib to be restricted 109c, and a portion 109e to which drive is transmitted and which is provided on the inner peripheral surface 109h. The portion 109e to which drive is transmitted is a projected portion projected inward in the radial direction r of the virtual circle VC about the rotational axis B as shown in part (a) of Figure 6. To the inner peripheral surface 109h, an apparatus-side seal 111 is applied so as to surround the receiving opening 109a (see, part (b) of Figure 4).

The apparatus-side shutter 109 is constituted so as to take a shielding position as a second shielding position and an open position as a second open position relative to the main body base portion 2. More specifically, the apparatus-side shutter 109 is, as shown in part (a) of Figure 6 and part (b) of Figure 6, rotated in an arrow K direction from the shielding position toward the open position and rotated in an arrow L direction from the open position toward the shielding position. Incidentally, these arrow K direction and arrow L direction are to the same as an arrow K direction and an arrow L direction, respectively, of a pack-side shutter 103 shown in part (a) of Figure 11. As regards the apparatus-side shutter 109, in the shielding position, the receiving opening 109a is shielded by the apparatus-side seal 111 and the cover 110, and in the open position, the receiving opening 109a is opened without being covered by the cover 110. That is, the receiving opening 109a does not communicate with the apparatus-side opening 117a of the second frame 117 when the apparatus-side shutter 109 is positioned in the shielding position, and communicates with the apparatus-side opening 117a of the second frame 117 when the apparatus-side shutter 109 is positioned in the open position.

In part (a) of Figure 4 and part (a) of Figure 5, the apparatus-side shutter 109 is positioned in the shielding position, and at this time, the receiving opening 109a of the apparatus-side shutter 109 does not communicate with the apparatus-side opening 117a of the second frame 117. Further, in part (b) of Figure 4 and part (b) of Figure 5, the apparatus-side shutter 109 is positioned in the open position, and at this time, the receiving opening 109a of the apparatus-side shutter 109 communicates with the apparatus-side opening 117a of the second frame 117. The apparatus-side shutter 109 is moved to the open position, whereby the toner can be replenished (supplied) from the toner pack 100 to the accommodating portion 36 of the developing container 32 through the receiving opening 109a.

Incidentally, drive of the operating lever 108 and the apparatus-side shutter 109 are not connected to each other, and therefore, even when the operating lever 108 is operated in a state in which the toner pack is not mounted, the apparatus-side shutter 109 is not rotated.

As shown in part (a) of Figure 8 and part (b) of Figure 8, the apparatus-side shutter 109 is constituted so as to be rotatable about the center boss 109d by engaging of a large diameter portion 109d1 of the center boss 109d with a cylindrical portion 110j of the cover 110. Here, the rib to be restricted 109c provided on the bottom 109b of the apparatus-side shutter 109 is positioned between the first restricting surface 110c and the second restricting surface 110d of the cover 110. For this reason, the apparatus-side shutter 109 is rotatable only in movable range of the rib to be restricted 109c between the first restricting surface 110c and the second restricting surface 110d. In other words, the apparatus-side shutter 109 is restricted in rotation range between the shielding position and the open position by the first restricting surface 110c and the second restricting surface 110d of the cover 110. For example, as shown in part (b) of Figure 8, in a state in which the rib to be restricted 109c contacts the first restricting surface 110c, the apparatus-side shutter 109 positioned in the shielding position cannot be rotated in the arrow L direction, i.e., a direction opposite to a direction toward the open position.

[Structure of toner pack]

Next, using part (a) of Figure 9 to Figure 10, a basic structure of the toner pack 100 will be described. The toner pack 100 is mounted on the above-described mounting portion 106. Part (a) of Figure 9 is side view of the toner pack 100 when the pack-side shutter 103 is in the shielding position. Part (b) of Figure 9 is a side view of the toner pack 100 when the pack-side shutter 103 is in the open position. Figure 10 is an exploded perspective view showing the toner pack 100 when the pack-side shutter 103 is in the open position.

The toner pack 100 includes, as shown in part (a) of Figure 9 to Figure 10, a pouch 101 accommodating the toner, a nozzle 102 connected to the pouch 101, and the pack-side shutter 103. The nozzle 102 and the pack-side shutter 103 are connected to the pouch 101 and constitute a portion to be mounted 700 mounted to the mounting portion 106.

The pouch 101 as a container member has flexibility, and is provided on one end side of the toner pack 100 with respect to an axial direction D1 which is a direction of a rotational axis A of the pack-side shutter 103. The rotational axis A coincides with the rotational axis B of the apparatus-side shutter 109 when the toner pack 100 is mounted on the mounting portion 106, and therefore, in the following, both axial directions of the rotational axis A and the rotational axis B are referred to as the axial direction D1. The nozzle 102 and the pack-side shutter 103 are provided on the other end side of the toner pack 100 with respect to the axial direction D1. The pouch 101 has a bag shape such that one end portion thereof opens by bonding edge portions of a plurality of sheet-like papers.

The pouch 101 as a container member constitutes an accommodating portion 101a accommodating the toner. To the accommodating portion 101a, an opening portion 101b is provided. The nozzle 102 is coupled to the opening portion 101b of the pouch 101 so that the accommodating portion 101a of the pouch 101 communicates outside the toner pack 100 solely by a toner discharging passage formed by the nozzle 102 (see, part (b) of Figure 23). The nozzle 102 is constituted by a nozzle main body 121 forming the discharging passage for discharging the toner from the accommodating portion 101a of the pouch 101 and a coupling member 122 for attaching the nozzle main body 121 to the pouch 101. Incidentally, the nozzle main body 121 alone may be referred to as a nozzle. The coupling member 122 is coupled to the opening portion 101b of the pouch 101. A coupling method is not limited to a specific method. For example, the coupling methods include a method using various types of adhesives such as hot melt and a method to couple by heat welding the pouch 101 to an outer periphery of the coupling member 122. The nozzle 102 is coupled to the pouch 101 by the nozzle main body 121 being engaged with the coupling member 122. Details on an engagement structure of the nozzle main body 121 and the coupling member 122 will be described below.

The nozzle 102 includes a side surface 102c as an outer surface and a first outer surface extending along the rotational axis A, and the side surface 102c is provided with a discharging opening 102a constituted so as to communicate with an inside of the pouch 101 and for discharging the toner to an outside, and provided with a recessed portion 102e. The recessed portion 102e is provided in a position different from the discharging opening 102a with respect to the rotational direction of the pack-side shutter 103. The toner accommodated in the pouch 101 is constituted so as to be discharged to the outside of the toner pack 100 through the discharging opening 102a by the pouch 101 being compressed (squeezed) by the user and thus by a volume of the pouch 101 being decreased. That is, inside the nozzle 102, a passage 102g (see, part (b) of Figure 23) constituted so that the toner (content) can pass to the discharging opening 102a from an opening portion 101b of the accommodating portion 101a is formed.

Outside the side surface 102c of the nozzle 102, the pack-side shutter 103 as a shutter is disposed. The pack-side shutter 103 is provided rotatably about the rotational axis A extending in the direction along the axial direction D1 and is provided with an opening 103a. Specifically, an inner peripheral surface 103m of the pack-side shutter 103 is slidably supported by an annular rib 102m of the nozzle 102. The pack-side shutter 103 is provided outside the side surface 102c with respect to the radial direction r of the virtual circle VC about the rotational axis A. An arcuate surface of the side surface 102c is a curved surface projected toward an outside with respect to the radial direction r. An inside surface of the pack-side shutter 103, i.e., a surface opposing the side surface 102c is a curved surface along the side surface 102c of the nozzle 102, and a substantially rectangular pack-side seal 105 is attached to the curved surface.

The pack-side shutter 103 is constituted so as to be rotatable about the rotational axis A between the shielding position (position shown in part (a) of Figure 9) where the pack-side seal 105 shields the discharging opening 102a of the nozzle 102 and the open position (position shown in part (b) of Figure 9) where the pack-side seal 105 opens the discharging opening 102a. When the pack-side shutter 103 is in the open position, the discharging opening 102a of the nozzle 102 is exposed from the opening 103a provided in the pack-side shutter 103.

When the pack-side shutter 103 positioned in the shielding position as a first shielding position shown in part (a) of Figure 9 is rotated about the rotational axis A in the arrow K direction, the pack-side shutter 103 reaches the open position as a first open position shown in part (b) of Figure 9. On the contrary, when the pack-side shutter 103 positioned in the open position is rotated in the arrow L direction, the pack-side shutter 103 reaches the shielding position. That is, the arrow K direction as a first rotational direction is a direction from the shielding position toward the open position about the rotational axis A, and the arrow L direction as a second rotational direction is a direction from the open position toward the shielding position about the rotational axis A. In a rotating operation of the pack-side shutter 103, the pack-side shutter 103 slides with the side surface 102c of the nozzle 102 through the pack-side seal 105.

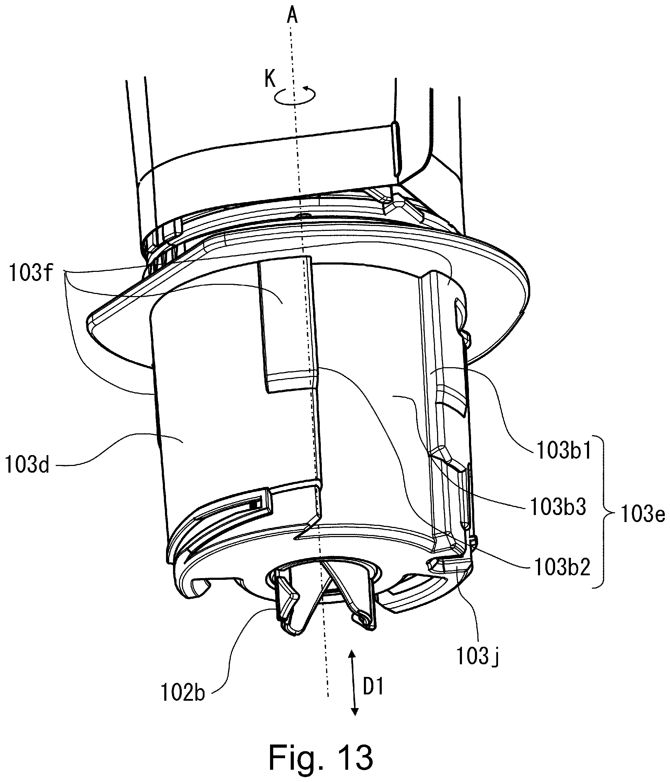

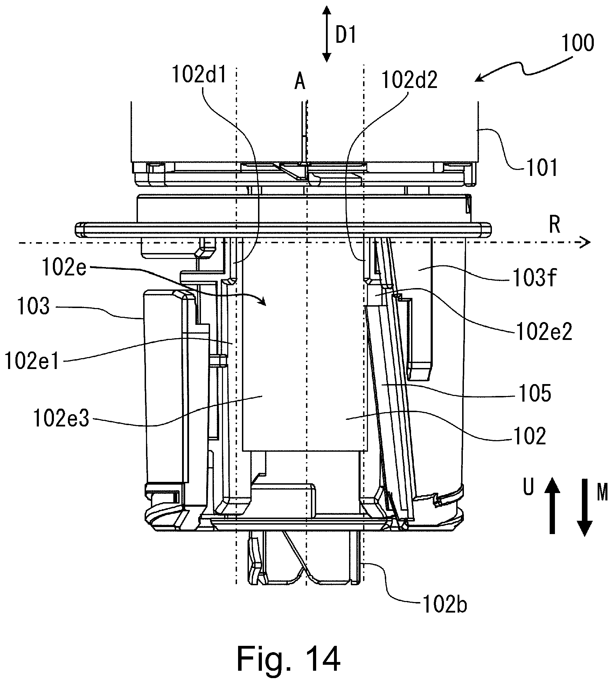

Next, using part (a) of Figure 11 to Figure 14, a detailed structure of the nozzle 102 and the pack-side shutter 103 will be described. Part (a) of Figure 11 is an enlarged perspective view showing a neighborhood of the nozzle 102 when the pack-side shutter 103 is in the shielding position. Part (b) of Figure 11 is a view (bottom view) of the toner pack 100 as viewed in a dismounting direction U in part (a) of Figure 11. Part (a) of Figure 12 is an enlarged perspective view showing the neighborhood of the nozzle 102 when the pack-side shutter 103 is in the open position. Part (b) of Figure 12 is a view (bottom view) of the toner pack 100 as viewed in the dismounting direction U in part (a) of Figure 12. Figure 13 is an enlarged perspective view showing a neighborhood of the nozzle 102. Figure 14 is a side view showing the nozzle 102 and the pack-side shutter 103. Incidentally, the dismounting direction U is a direction opposite to the mounting direction M and is a direction in which the toner pack 100 is moved when the toner pack 100 is dismounted from the mounting portion 106.

As shown in part (a) of Figure 11 and part (b) of Figure 11, the nozzle 102 is provided with a portion to be positioned 102d including a surface 102d1 and a surface 102d2 which are arranged in an arrow R direction with an interval from each other and which extends in a direction crossing the arrow R direction. As shown in part (b) of Figure 11, the surface 102d1 and the surface 102d2 in this embodiment are extended in a direction perpendicular to the arrow R direction and are parallel to each other. That is, in this embodiment, the arrow R direction is a normal direction of the surface 102d1 and the surface 102d2. The portion to be positioned 102d engages with the positioning portion 107a (part (a) of Figure 4) of the first frame 107 when the toner pack 100 is mounted to the mounting portion 106. By this, a position of the nozzle 102 relative to the first frame 107 (main body base portion 2) (a position thereof with respect to the rotational direction about the rotational axis A) is determined. In part (b) of Figure 11, a rectilinear line CL1 passing through a center between the surface 102d1 and the surface 102d2 in the arrow R direction and extending in a direction perpendicular to the arrow R direction is in a phase such that the rectilinear line CL1 is rotated about 90° relative to a rectilinear line CL2 passing through the rotational axis A and a center of the discharging opening 102a.

Further, as shown in part (a) of Figure 11 and Figure 14, with respect to the direction of the rotational axis A, on a side downstream of the surface 102d1 and the surface 102d2 with respect to the mounting direction M, a surface 102e1 and a surface 102e2 are provided, respectively. The surface 102e1 and the surface 102e2 extend in the radial direction r of the virtual circle VC about the rotational axis A as shown in part (b) of Figure 11. However, the directions in which the surface 102e1 and the 102e2 extend are not limited to the directions in this embodiment, but may be settable to directions in which these surfaces do not interfere with the positioning portion 107a of the first frame 107.

As shown in Figure 14, a side surface 102e3 is provided between the surface 102d1 and the surface 102d2 and between the surface 102e1 and the surface 102e2 in the arrow R direction. The side surface 102e3 is recessed inward from the side surface 102c in the radial direction r. The surface 102d1, the surface 102d2, the surface 102e1, the surface 102e2, and the side surface 102e3 form the recessed portion 102e.

Incidentally, the surface 102d1 and the surface 102d2 are not necessarily required to be parallel to each other as in this embodiment. For example, the surface 102d1 and the surface 102d2 may also be surfaces extending in the radial direction r of the virtual circle VC about the rotational axis A. In this case, the arrow R direction becomes a tangential direction of the virtual circle VC, so that the rectilinear line CL1 perpendicular to the arrow R direction is settable at an arbitrary angle relative to the rectilinear line CL2.

Further, as shown in part (a) of Figure 11 and part (b) of Figure 11, as viewed in a direction perpendicular to the axial direction D1 of the rotational axis A, a side surface 103d of the pack-side shutter 103 is provided with the opening 103a. As shown in part (a) of Figure 11, when the pack-side shutter 103 is positioned in the shielding position, at least a part of the recessed portion 102e of the nozzle 102 is exposed from the opening 103a. This is because when the toner pack 100 is mounted to the mounting portion 106 in the state in which the pack-side shutter 103 is positioned in the shielding position, in order to make the surface 102d1 and the surface 102d2 of the recessed portion 102e, i.e., the portion to be positioned 102d be engaged with the positioning portion 107a.

Further, as shown in part (b) of Figure 11, the pack-side shutter 103 is provided with a portion 103e to which drive is transmitted, on a side opposite from the opening 103a across the rotational axis A. In the case where the pack-side shutter 103 is positioned in the shielding position, the portion 103e to which drive is transmitted is provided on a side opposite from the recessed portion 102e of the nozzle across the rotational axis A. The portion 103e to which drive is transmitted includes surfaces 103b1 and 103b2, and a side surface 103b3, and is capable of engaging with the drive transmitting portion 108a of the operating lever 108 described later. Each of the surface 103b1 and the surface 103b2 extends in a direction perpendicular to the arrow R direction. Figure 13 is an enlarged perspective view of a neighborhood of the pack-side shutter 103 as viewed from a side where the portion 103e to which drive is transmitted is disposed. Between the surfaces 103b1 and 103b2, the side surface 103b3 recessed inward than the side surface 103d in the radial direction r is provided.

Further, using part (a) of Figure 11 to Figure 14, a projected portion 102b of the nozzle 102 will be described. As shown in parts (a) and (b) of Figure 9, the toner pack 100 is directed to an attitude such that a second end portion side (the nozzle 102 side) of the toner pack 100 is below a first end portion side (the pouch 101 side) of the toner pack 100. Or, the toner pack 100 is directed so that at least a part of the nozzle 102 is positioned below the pouch 101 and so that the rotational axis A is parallel to a vertical direction. This attitude is an attitude when the toner pack 100 is mounted to the mounting portion 106 of the image forming apparatus 1. At this time, in part (a) of Figure 11 and part (a) of Figure 12, the mounting direction M becomes a downward direction, and the dismounting direction U becomes an upward direction.

The pack-side shutter 103 has an end surface 103c as a shutter end surface which is a lower end surface with respect to a vertical direction VD and which constitutes a bottom of the pack-side shutter 103. The nozzle 102 includes the projected portion 102b as a first projecting portion projected toward a downstream of the end surface 103c of the pack-side shutter 103 with respect to the mounting direction M, i.e., projected below the end surface 103c. As shown in part (a) of Figure 11, the projected portion 102b is a cylindrical portion (portion having a cylindrical shape) about the rotational axis A. The projected portion 102b has a projected portion end surface 102b2 which is a lower end surface thereof. The projected portion end surface 102b2 is provided with a hole including an inner peripheral surface 102b1 about the rotational axis A. Further, as shown in Figure 10, the projected portion 102b is projected downward than a lower end surface 102j of the nozzle 102. Incidentally, in this embodiment, the end surface 103c of the pack-side shutter 103 and the end surface 102j of the nozzle 102 are end surfaces perpendicular to the rotational axis A, but it is not limited thereto. These surfaces may only be required to be surfaces extending in a direction crossing the rotational axis A as viewed from a direction perpendicularly to the rotational axis A. Further, the projected portion 102b is not necessarily be provided to the nozzle 102.

Here, as shown in part (a) of Figure 15, the nozzle 102 of the toner pack 100 is provided with a claw portion 102f as a locking mechanism so that the pack-side shutter 103 is not rotated relative to the nozzle 102 during transportation or when the user treats the toner pack 100 alone. The pack-side shutter 103 is held in the shielding position by the claw portion 102f, so that the toner which is the content in the toner pack 100 can be prevented from leaking out.

Part (a) of Figure 15 is a front view showing the claw portion 102f. Part (b) of Figure 15 is a sectional view showing a 15B-15B cross section of part (a) of Figure 15. Part (a) of Figure 16 is a front view showing the claw portion 102f. Part (b) of Figure 16 is a sectional view showing a 16B-16B cross section of part (a) of Figure 16.

The claw portion 102f as a second restricting portion includes, as shown in part (a) of Figure 15 and part (b) of Figure 15, an arm portion 102f3, an inclined releasing surface 102f1, and an abutting portion 102f2. The claw portion 102f is movable in the radial direction r of the virtual circle VC about the rotational axis A by elastic deformation of the arm portion 102f3. Specifically, the claw portion 102f is movable to a restricting position shown in part (b) of Figure 15 and a non-restricting position which is an inside position than the restricting position with respect to the radial direction r and which is shown in part (b) of Figure 21.

The abutting portion 102f2 opposes a restricting portion 103h of the pack-side shutter 103 positioned in the shielding position when the claw portion 102f is positioned in the restricting position as shown in part (b) of Figure 15, with respect to the circumferential direction about the rotational axis A. At this time, a gap s is provided between the abutting portion 102f2 and the restricting portion 103h. Rotation of the pack-side shutter 103 in the arrow K direction is restricted by abutment of the restricting portion 103h against the abutting portion 102f2. Incidentally, a size of the gap s may be set arbitrarily, and a rotation range in which the pack-side shutter 103 is rotatable within a range of the gap s is regarded as the shielding position. That is, the rotation of the pack-side shutter 103 from the shielding position in the arrow K direction is restricted by the claw portion 102f positioned in the restricting position.

Further, when the claw portion 102f is positioned in the non-restricting position, the abutting portion 102f2 is positioned inside the restricting portion 103h of the pack-side shutter 103 with respect to the radial direction r of the virtual circle VC about the rotational axis A. For this reason, the pack-side shutter 103 is capable of being rotated about the rotational axis A without interfering with the abutting portion 102f2.

As shown in part (a) of Figure 6 and part (b) of Figure 21, the apparatus-side shutter 109 is provided with a restriction releasing rib 109j extending in the axial direction D1. The restriction releasing rib 109j is contactable to the inclined releasing surface 102f1 of the claw portion 102f when the toner pack 100 is mounted to the mounting portion 106. Incidentally, as shown in part (b) of Figure 11, part (b) of Figure 15, part (b) of Figure 17, and part (b) of Figure 21, the pack-side shutter 103 is provided with an opening portion 103j, and the opening portion 103j extends from the end surface (bottom) 103c toward the side surface 103d of the pack-side shutter 103. The restriction releasing rib 109j provided to the apparatus-side shutter 109 penetrates through the opening portion 103j and is capable of contacting the inclined releasing surface 102f1 of the claw portion 102f disposed inside the pack-side shutter 103.

The inclined releasing surface 102f1 is inclined with respect to the mounting direction M (axial direction D1) so as to extend inward in the radial direction r toward a downstream of the mounting direction M. Then when the toner pack 100 is mounted to the mounting portion 106, the inclined releasing surface 102f1 converts a direction of a force received from the restriction releasing rib 109j by the claw portion 102f into an inward direction with respect to the radial direction r. By this, the claw portion 102f is moved inward from the restricting position to the non-restricting position in the radial direction r by the inclined releasing surface 102f1 being pressed by the restriction releasing rib 109j. In other words, when the toner pack 100 is mounted to the mounting portion 106, the claw portion 102f is moved from the restricting position to non-restricting position by being pressed by the mounting portion 106.

The above-described abutting portion 102f2 of the claw portion 102f abuts against the restricting portion 103h of the pack-side shutter 103 and thus restricts the rotation of the pack-side shutter 103 in the arrow K direction. Next, a constitution which restricts the rotation of the pack-side shutter 103 in the arrow L direction opposite to the arrow K direction will be described.

As shown in part (b) of Figure 16, the pack-side shutter 103 includes a rotation restricting rib 103k, and the nozzle 102 includes a rotation restricting surface 102k as a first restricting portion opposing the rotation restricting rib 103k with respect to the circumferential direction about the rotational axis A. When the pack-side shutter 103 is positioned in the shielding position, the rotation restricting rib 103k opposes the rotation restricting surface 102k with a small gap therebetween. Then, when the pack-side shutter 103 positioned in the shielding position is intended to be rotated in the arrow L direction, the rotation restricting rib 103k abuts against the rotation restricting surface 102k, so that the rotation of the pack-side shutter 103 in the arrow L direction is restricted.

As shown in part (a) of Figure 16 and part (b) of Figure 16, the claw portion 102f is disposed downstream of the rotation restricting surface 102k and the rotation restricting rib 103k with respect to the mounting direction M. This is because the claw portion 102f is disposed in a position where the claw portion 102f is easily pressed by the restriction releasing rib 109j of the apparatus-side shutter 109 when the toner pack 100 is mounted to the mounting portion 106. By this, a size of the opening portion 103j provided in the pack-side shutter 103 can be made small, so that it is possible to not only ensure rigidity of the pack-side shutter 103 but also suppress access to the claw portion 102f by the user. Incidentally, arrangement of the claw portion 102f, the rotation restricting surface 102k, and the rotation restricting rib 103k is not limited thereto, but may also be arbitrarily changed.

As described above, in a state in which the toner pack 100 is not mounted to the mounting portion 106, the rotation of the pack-side shutter 103 in each of the arrow K direction and the arrow L direction is restricted, so that the pack-side shutter 103 is easily held at the shielding position. When the pack-side shutter 103 is rotated in the arrow K direction in a state in which the toner pack 100 is mounted to the mounting portion 106 and the claw portion 102f is positioned in the non-restricting position, the discharging opening 102a of the nozzle 102 is exposed as shown in part (a) of Figure 12.

Further, as shown in part (a) of Figure 11 and Figure 13, the pack-side shutter 103 is provided with three radial direction positioning portions 103f. These radial direction positioning portions 103f project toward an outside than the side surface 103d in the radial direction r. Each of the radial direction positioning portions 103f is disposed on the upstream side of the pack-side shutter 103 with respect to the mounting direction M.

[Mounting of toner pack to mounting portion]

Next, using part (a) of Figure 17 to part (b) of Figure 21, a state when the toner pack 100 is mounted to the mounting portion 106 will be described. Part (a) of Figure 17 and part (b) of Figure 17 are perspective views each showing a state in which the toner pack 100 is being mounted to the mounting portion 106 as viewed in different angles. Part (a) of Figure 18 is a sectional view showing a state in which the toner pack 100 is being mounted to the mounting portion 106. Part (b) of Figure 18 is a sectional view showing a state in which mounting of the toner pack 100 to the mounting portion 106 is completed.

Part (a) of Figure 19 is a sectional view showing a 19A-19A cross section of part (a) of Figure 18. Part (b) of Figure 19 is a sectional view showing a 18B-18B cross section of part (a) of Figure 18. Part (a) of Figure 20 is a sectional view showing a 20A-20A cross section of part (b) of Figure 18. Part (b) of Figure 20 is a sectional view showing a 20B-20B cross section of part (a) of Figure 20. Part (a) of Figure 21 is a perspective view showing a state when the toner pack 100 is mounted to the apparatus-side shutter 109. Incidentally, in part (a) of Figure 21, the pouch 101 of the toner pack 100 and the pack-side shutter 103 are omitted, so that only the nozzle 102 is illustrated. Part (b) of Figure 21 is a sectional view showing the 16B-16B cross section of part (a) of Figure 16 in the state in which mounting of the toner pack 100 to the mounting portion 106 is completed. Incidentally, for ease of view, in part (a) of Figure 18 to part (b) of Figure 20, cut surfaces of the pack-side shutter 103 and the cover 110 are hatched, and in part (b) of Figure 21, cut surfaces of the nozzle 102 is hatched.

Then, the user mounts, as shown in part (a) of Figure 17 and part (b) of Figure 17, the toner pack 100 to the mounting portion 106 in a state in which the apparatus-side shutter 109 is in the shielding position, by moving the toner pack 100, in a state in which the pack-side shutter 103 is in the shielding position, in the mounting direction M. At this time, the user positionally aligns the recessed portion 102e of the nozzle 102 and the opening 103a of the pack-side shutter 103 with the positioning portion 107a of the first frame 107. At the same time, the user also aligns a position of the portion 103e, to which drive is transmitted, of the pack-side shutter 103 with a position of the drive transmitting portion 108a of the operating lever 108.

After such positional alignment of the toner pack 100 with the mounting portion 106, the user gradually mounts the toner pack 100 to the mounting portion 106 by moving the toner pack 100 in the mounting direction M. Then, as shown in part (a) of Figure 18, into the inner peripheral surface 102b1 of the projected portion 102b of the nozzle 102, a small diameter portion 109d2 of the center boss 109d of the apparatus-side shutter 109 is fitted. By this, a position of the nozzle 102 relative to the apparatus-side shutter 109 with respect to the radial direction r is determined.

At this time, the drive transmitting portion 108a of the operating lever 108 and the portion 103e, to which drive is transmitted, of the pack-side shutter 103 engage with each other, as shown in part (a) of Figure 19. At the same time, as shown in part (b) of Figure 19, the side surface 110f and the side surface 110g of the cover 110 come close to or engage with the surface 102e1 and the surface 102e2, respectively, forming the recessed portion 102e of the nozzle 102. Further, as shown in part (a) of Figure 19 and part (b) of Figure 19, the portion 103e, to which drive is transmitted, of the pack-side shutter 103 engages with the portion 109e, to which drive is transmitted, of the apparatus-side shutter 109 and the drive transmitting portion 108a of the operating lever 108. By this, the rotational axis A of the pack-side shutter 103 and the rotational axis B of the apparatus-side shutter 109 are substantially coaxial with each other.

Further, the surfaces 102e1 and 102e2 of the recessed portion 102e of the nozzle 102 engage with the side surfaces 110f and 110g, respectively, of the cover 110, so that the nozzle 102 of the toner pack 100 does not rotate relative to the main body base portion 2 including the cover 110. In other words, when the toner pack 100 is mounted to the image forming apparatus 1, the recessed portion 102e engages with the cover 110 of the image forming apparatus 1, and thus restricts the rotation of the nozzle 102 relative to the image forming apparatus 1. Then, the operating lever 108, the pack-side shutter 103, and the apparatus-side shutter 109 become rotatable substantially integrally relative to the main body base portion 2 and the nozzle 102 about the rotational axis B.

Specifically, when the operating lever 108 is rotated, the drive transmitting portion 108a of the operating lever 108 presses the surface 103b1 or 103b2 of the pack-side shutter 103, so that the pack-side shutter 103 is rotated. Thereafter, the surface 103b1 or 103b2 constituting the portion 103e to which drive is transmitted of the pack-side shutter 103 presses the portion 109e, to which drive is transmitted of the apparatus-side shutter 109, so that the apparatus-side shutter 109 is rotated.

In the state in which the mounting of the toner pack 100 to the mounting portion 106 is completed, the three radial direction positioning portions 103f (see, part (a) of Figure 11 and Figure 13) of the pack-side shutter 103 is contacting the inner peripheral surface 109h (see, part (a) of Figure 6) of the apparatus-side shutter 109. By this, a position, with respect to the radial direction r, of the toner pack 100 on the upstream side of the mounting direction M is determined.

Further, as shown in part (a) of Figure 20, the projected portion end surface 102b2 of the projected portion 102b of the nozzle 102 abuts against the pack contact surface 109g, so that a position of the toner pack 100 with respect to the mounting direction M is determined. Incidentally, as regards the positioning of the projected portion 102b of the nozzle 102, a constitution in which the outer peripheral surface of the projected portion 102b is fitted into the cylindrical portion 110j of the cover 110 (see, part (a) of Figure 7 and part (b) of Figure 7) may be employed.

Further, as shown in part (b) of Figure 20, the portion to be positioned 102d provided on the nozzle 102 engages with the positioning portion 107a of the first frame 107. By this, the rotation of the nozzle 102 of the toner pack 100 relative to the first frame 107 (main assembly base portion 2) is restricted.

Further, as shown in part (a) of Figure 21 and part (b) of Figure 21, when the toner pack 100 is mounted to the mounting portion 106, as described above, the claw portion 102f provided on the nozzle 102 is moved from the restricting position to the non-restricting position (position shown in part (b) of Figure 21). In more detail, the claw portion 102f is moved inside from the restricting position toward the non-restricting position in the radial direction r by the inclined releasing surface 102f1 being pressed by the restriction releasing rib 109j. By this, the rotation restriction of the pack-side shutter 103 in the arrow K direction is released.

[Operation of operating lever]

Parts (a) of Figure 22 is a perspective view showing the operating lever 108 positioned in the closed position and the toner pack 100. Part (b) of Figure 22 is a perspective view showing the operating lever 108 positioned in the open position and the toner pack 100. Part (a) of Figure 23 is a sectional view showing the toner pack 100 and the mounting portion 106 when both the apparatus-side shutter 109 and the pack-side shutter 103 are positioned in the shielding positions. Part (b) of Figure 23 is a sectional view showing the toner pack 100 and the mounting portion 106 when both the apparatus-side shutter 109 and the pack-side shutter 103 are positioned in the open positions.

As described above, in the state in which the toner pack 100 is mounted to the mounting portion 106, the operating lever 108, the pack-side shutter 103, and the apparatus-side shutter 109 are integrally rotatable about the rotational axis B relative to the main assembly base portion 2 and the nozzle 102. In a state in which the toner pack 100 is mounted to the mounting portion 106 and in which the operating lever 108 is positioned in the closed position, as shown in part (a) of Figure 23, the discharging opening 102a is shielded by the pack-side shutter 103, the pack-side seal 105, and the apparatus-side shutter 109. Therefore, it is constituted so that the toner in the pouch 101 cannot reach the apparatus-side opening 117a of the second frame 117.

As shown in part (a) of Figure 22 and part (b) of Figure 22, when the operating lever 108 is rotated from the closed position to the open position in an arrow Q direction in the state in which the toner pack 100 is mounted to the mounting portion 106, the pack-side shutter 103 and the apparatus-side shutter 109 are rotated from the shielding positions to the open positions.

More specifically, the drive transmitting portion 108a of the operating lever 108 presses the surface 103b1 of the pack-side shutter 103. By this, the pack-side shutter 103 is rotated together with the operating lever 108 from the shielding position to the open position. In other words, the pack-side shutter 103 is rotated from the shielding position to the open position in interrelation with the rotation of the operating lever 108 through the engagement between the drive transmitting portion 108a and the surface 103b1. Further, the surface 103b2 of the pack-side shutter 103 rotated from the shielding position to the open position presses, the portion 109e, to which the drive is transmitted, of the apparatus-side shutter 109. By this, the apparatus-side shutter 109 is rotated together with the pack-side shutter 103 from the shielding position to the open position. In other words, the apparatus-side shutter 109 is rotated in interrelation with the rotation of the operating lever 108 through the engagement between the surface 103b2, and the portion 109e to which drive is transmitted.

Then, as shown in part (b) of Figure 23, the discharging opening 102a of the nozzle 102 is opened by movement of the pack-side shutter 103, the pack-side seal 105, and the apparatus-side shutter 109. That is, the pouch 101 of the toner pack 100 and the accommodating portion 36 communicate with each other by way of the discharging opening 102a, the receiving opening 109a, and the apparatus-side opening 117a. The toner in the pouch 101 is supplied together with air to the accommodating portion 36 of the developing container 32 by way of the discharging opening 102a, the receiving opening 109a, and the apparatus-side opening 117a by the pouch 101 being compressed by the user.

The user rotates the operating lever 108 from the open position to the closed position when the supply of the toner from the toner pack 100 to the developing container 32 is completed. When the operating lever 108 is rotated from the open position to the closed position, the drive transmitting portion 108a of the operating lever 108 presses the surface 103b2 of the pack-side shutter 103. By this, the pack-side shutter 103 is rotated together with the operating lever 108 from the open position to the shielding position. Further, the surface 103b1 of the pack-side shutter 103 rotated from the open position to the shielding position presses the portion 109e, to which the drive is transmitted, of the apparatus-side shutter 109. By this, the apparatus-side shutter 109 is rotated together with the pack-side shutter 103 from the open position to the shielding position.

In this state, the user pulls out the toner pack 100 from the mounting portion 106, so that the supplying operation of the toner is completed.

[Details of toner pack]

With reference to part (a) of Figure 24 to part (b) of Figure 34, a manufacturing method of the toner pack 100 according to this embodiment and details of an engagement structure between the nozzle main body and the coupling member will be described.

[Manufacturing steps of toner pack]

First, with reference to part (a) of Figure 27 to part (b) of Figure 28, the manufacturing steps of the toner pack according to this embodiment will be described.

Part (a) of Figure 27 is a perspective view showing a separated state before the coupling member is coupled to the pouch. Part (b) of Figure 27 is a perspective view showing a state after the coupling member is coupled to the pouch. Part (c) of Figure 27 is a perspective view showing a form for toner filling in which the coupling member is coupled to the pouch. Part (a) of Figure 28 is an enlarged perspective view of the pouch and the nozzle showing a state in which the nozzle main body is in an insertion completed position relative to the coupling member. Part (b) of Figure 28 is an enlarged perspective view of a pouch-nozzle assembly showing a state in which the nozzle main body is rotated from the insertion completed position shown in part (a) of Figure 28 to an engagement completed position relative to the coupling member.

The toner pack 100 according to this embodiment includes, as described above, the pouch 101 as a container member accommodating the toner, the nozzle 102 coupled to the pouch 101, and the pack-side shutter 103. Then, in this embodiment, the nozzle 102 is constituted by the nozzle main body 121 and the coupling member 122. In manufacturing of the toner pack 100, in addition to assembly of each of the above-described members, filling of the toner to the pouch 101 is performed.

Specifically, as shown in part (a) of Figure 27 and part (b) of Figure 27, first, the coupling member 122 is attached to the pouch 101 (first assembly step). The attaching method is as described above. Next, as shown in part (c) of Figure 27, in the form for toner filling in which only the coupling member 122 is coupled to the pouch 101, the toner is filled into the pouch 101 via an opening portion (through hole 122b) of the coupling member 122 (filling step). Then, as shown in part (c) Figure 27 to part (b) of Figure 28, the nozzle main body 121 is engaged with the coupling member 122 to make the nozzle 102 be in a state coupled to the pouch 101 (in a state in which the pouch-nozzle assembly is formed) (second assembly step).

More specifically, as shown in part (c) of Figure 27, in the assembling of the nozzle main body 121 to the coupling member 122, first, an inserting portion 121a is inserted into the through hole 122b in an inserting direction I and move the nozzle main body 121 relative to the coupling member 122 in the inserting direction I. The inserting direction I is parallel to the mounting direction M and an opposite direction to the mounting direction M (parallel to the dismounting direction U and the same direction as the dismounting direction U). As shown in part (a) of Figure 28, the nozzle main body 121 is inserted relative to the coupling member 122 to the insertion completed position in which a flange 121c is in a state abutting an opposing portion 122c as an abutted portion of the coupling member 122 (insertion step). Then, as shown in part (b) of Figure 28, while keeping the state in which the flange 121c abuts the opposing portion 122c, the nozzle main body 121 is rotated relative to the coupling member 122 in a rotational direction S about a rotational axis C which is parallel to the inserting direction I (rotation step). The rotational axis C is substantially coaxial with the rotational axes A and B.

Finally, the pack-side shutter 103 is attached thereto, so that the toner pack 100 shown in Figure 9, Figure 10, etc. is completed (third assembly step).

[Filling of toner]

As described above, in this embodiment, the filling of the toner to the pouch 101 is performed, before the nozzle main body 121 is attached, in the state in which the coupling member 122 is attached to the pouch 101 (part (b) of Figure 27). In other words, the toner filling step is performed after the first assembly step and before the second assembly step.

It may be considered that the toner filling step is performed, for example, before the coupling member 122 is attached thereto, via the opening portion 101b of the pouch 101. However, the pouch 101 is the flexible member and some device is needed to keep the shape of the opening portion 101b during the toner filling. According to this embodiment, since the coupling member 122 is attached to the opening portion 101b of the pouch 101, and the opening portion of the coupling member 122 is used as a filling opening of the toner, the device to keep the shape of the filling opening becomes unnecessary.

Further, for example, it may be considered that, in the state in which the nozzle is attached to the pouch, filling the toner is performed with utilizing the toner discharging opening of the nozzle. However, depending on a form of the discharging opening, the filling of the toner may not be easy and a filling operation may not be performed efficiently. In particular, as the nozzle 102 in this embodiment, in the constitution in which the discharging opening 102a opens laterally when the toner pack 100 is erected in a longitudinal direction thereof, it may be difficult to efficiently perform the toner filling via the discharging opening 102a. In this embodiment, it is constituted so that the toner is filled with utilizing the opening portion of the coupling member 122, which has a larger opening area than the discharging opening 102a and opens along the longitudinal direction of the toner pack 100 and straight to the accommodating portion 101a of the pouch 101. By this, the filling of the toner becomes easier and it becomes possible to perform filling work efficiently.

[Engagement constitution of nozzle main body and coupling member]

With reference to part (a) of Figure 24 to part (b) of Figure 34, the engagement structure of the nozzle main body 121 and the coupling member 122 in the toner pack 100 according to this embodiment will be described.

Part (a) of Figure 24 is a perspective view of the nozzle main body of the toner pack according to this embodiment. Part (b) of Figure 24 is a perspective view of the nozzle main body of the toner pack according to this embodiment different in point of view from part (a) of Figure 24. Part (a) of Figure 25 is a view (plan view) of the nozzle main body of the toner pack according to this embodiment as viewed in an opposite direction to an inserting and removing direction to the coupling member. Part (b) of Figure 25 is a view (bottom view) of the nozzle main body of the toner pack according to this embodiment as viewed in the inserting and removing direction to the coupling member. Part (a) of Figure 26 is a perspective view of the coupling member of the toner pack according to this embodiment. Part (b) of Figure 26 is a perspective view of the coupling member of the toner pack according to this embodiment different in point of view from part (a) of Figure 26. Part (a) of Figure 29 is a side view showing a side of the nozzle main body on which the discharging opening is provided. Part (b) of Figure 29 is a sectional view of the coupling member including a rotational axis of relative rotation between the nozzle main body and the coupling member. Part (c) of Figure 29 is a side view showing an opposite side of the nozzle main body to the side shown in part (a) of Figure 29. Part (d) of Figure 29 is a sectional view of the coupling member including the rotational axis of the relative rotation between the nozzle main body and the coupling member.

As shown in part (a) of Figure 26, part (b) of Figure 26, part (a) of Figure 27, part (b) of Figure 27, part (b) of Figure 29, and part (d) of Figure 29, the coupling member 122 is a substantially annular member attached along an inner periphery of the opening portion 101b of the pouch 101. The coupling member 122 includes an outer peripheral portion 122a having a shape corresponding to the shape of the opening portion 101b of the pouch 101 and the through hole 122b for communicating the accommodating portion 101a of the pouch 101 with the outside thereof upon the coupling member 122 being coupled to the opening portion 101b of the pouch 101. The coupling member 122 includes the opposing portion 122c which is exposed to the outside of the pouch 101 in the mounting direction M upon coupled to the opening portion 101b of the pouch 101 and is opposed to the nozzle main body 121 in the mounting direction M when the nozzle main body 121 is coupled to the coupling member 122.

The opening portion 101b of the pouch 101 is open toward the mounting direction M, and in a state in which the coupling member 122 is coupled to the opening portion 101b, the through hole 122b is penetrated by the coupling member 122 along the mounting direction M. This through hole 122b serves, in the filling step of the toner described above, as the filling opening for filling the toner into the accommodating portion 101a of the pouch 101. Further, the through hole 122b is formed by an inner peripheral surface 122d of the coupling member 122 about an axial line parallel to the mounting direction M and engaged grooves 124, which will be described below. Such a constituent portion forms, upon the assembly of the nozzle main body 121 (second assembly step), an inserted portion 122e into which the inserting portion 121a of the nozzle main body 121 is inserted.

As shown in part (a) of Figure 24, part (b) of Figure 24, part (a) of Figure 25, part (b) of Figure 25, part (a) of Figure 29, and part (c) of Figure 29, the nozzle main body 121 includes the inserting portion 121a, a mounted portion 121b, and the flange 121c. The inserting portion 121a is a portion, in the nozzle main body 121, inserted into the through hole 122b of the coupling member 122. The mounted portion 121b is a portion which is provided on an opposite side of the inserting portion 121a across the flange 121c, and is a portion, when the toner pack 100 is mounted to the image forming apparatus 1, mounted to the mounting portion 106 of the image forming apparatus 1 in the nozzle main body 121. Further, the mounted portion 121b is a portion which is exposed to the outside of the pouch 101 in the state in which the nozzle main body 121 is coupled to the coupling member 122 upon assembly of the toner pack 100, and is provided with the discharging opening 102a and the projected portion 102b.

The flange 121c is provided between the inserting portion 121a and the mounted portion 121b, i.e., in the inserting direction I of the inserting portion 121a to the through hole 122b, on an upstream side with respect to the inserting portion 121a, and extends in a direction perpendicular to the inserting direction I. The flange 121c includes an opposing surface as an abutting portion which opposes the opposing portion 122c of the coupling member 122 in the inserting direction I when the inserting portion 121a is inserted into the through hole 122b. The flange 121c defines, at a time of insertion of the inserting portion 121a into the through hole 122b, by abutting the opposing portion 122c in the inserting direction I, the insertion completed position of the nozzle main body 121 with respect to the coupling member 122.

Part (a) of Figure 34 is a perspective sectional view around the nozzle of the pouch-nozzle assembly and is a 34A-34A sectional view of part (b) of Figure 34. Part (b) of Figure 34 is a sectional view showing a structure of a seal member and a 34B-34B sectional view of part (a) of Figure 34. As shown in parts (a) and (b) of Figure 34, between the flange 121c of the nozzle main body 121 and the opposing portion 122c of the coupling member 122, a seal member 127 is disposed in an annular manner so as to surround an outer periphery of the through hole 122b. The seal member 127 seals, by being compressed between the flange 121c and the opposing portion 122c in the inserting direction I, a gap between the flange 121c and the opposing portion 122c, and prevents toner leakage.

With reference to part (a) of Figure 24 to part (b) of Figure 26 and part (a) of Figure 29 to part (b) of Figure 33, the engagement structure of the nozzle main body 121 and the coupling member 122 will be described in more detail.

Part (a) of Figure 30 is an enlarged perspective view showing a structure of an inside engaging projection. Part (b) of Figure 30 is an enlarged perspective view showing a structure of the engaged groove. Part (a) of Figure 31 is a schematic enlarged perspective view showing a state of an inside of the opening portion of the coupling member attached to the pouch, illustrating only the inside engaging projection of the nozzle main body, and is showing a state when the nozzle main body is in the insertion completed position relative to the coupling member. Part (b) of Figure 31 is a 31B-31B sectional view of part (a) of Figure 31. Part (c) of Figure 31 is a schematic enlarged perspective view showing a state of the inside of the opening portion of the coupling member attached to the pouch, illustrating only the inside engaging projection of the nozzle main body, and is showing a state when the nozzle main body is in the engagement completed position relative to the coupling member. Part (d) of Figure 31 is a 31D-31D sectional view of part (c) of Figure 31. Part (a) of Figure 32 is an enlarged side view of the pouch and the nozzle showing a state of a second engagement structure (an outside engaging projection of the nozzle main body and an engaged projection of the coupling member) when the nozzle main body is in the insertion completed position. Part (b) of Figure 32 is a view (bottom view) of the pouch and the nozzle shown in part (a) of Figure 32 as viewed in the inserting direction. Part (c) of Figure 32 is an enlarged side view of the pouch-nozzle assembly showing a state of the second engagement structure (outside engaging projection of the nozzle main body and the engaged projection of the coupling member) when the nozzle main body is in the engagement completed position. Part (d) of Figure 32 is a view (bottom view) of the pouch-nozzle assembly shown in part (c) of Figure 32 as viewed in the inserting direction. Part (a) of Figure 33 is an enlarged perspective view showing a state of the second engagement structure (outside engaging projection of the nozzle main body and the engaged projection of the coupling member) when the nozzle main body is in the engagement completed position. Part (b) of Figure 33 is an enlarged side view showing a state of the second engagement structure (outside engaging projection of the nozzle main body and the engaged projection of the coupling member) when the nozzle main body is in the engagement completed position.

As described above, in the assembly of the nozzle main body 121 to the coupling member 122, after the nozzle main body 121 is inserted into the coupling member 122 to the insertion completed position, the nozzle main body 121 is rotated relative to the coupling member 122 in the rotational direction S about the rotational axis C. Between the nozzle main body 121 and the coupling member 122, an engagement structure, which are configured so as to be in an engaged state with each other by the rotation, is provided and by such engagement structure, the nozzle main body 121 is in the coupled state with the coupling member 122. As the engagement structure for forming this coupled state, between the nozzle main body 121 and the coupling member 122, at least two kinds of the engagement structure different in distance in a radial direction from the rotational axis C are provided.

As shown in part (a) of Figure 24 to part (b) of Figure 26 and part (a) of Figure 29 to part (d) of Figure 29, the nozzle main body 121 includes an inside engaging projection 123 as an engaging portion provided on an inner diameter side in the radial direction about the rotational axis C and a first engaging portion and an outside engaging projection 125 as a second engaging portion provided on an outer diameter side. Correspondingly, the coupling member 122 includes the engaged groove 124 as an engaged portion and a first engaged portion, and an engaged projection 126 as a second engaged portion. Incidentally, as described below, the nozzle main body 121 includes four inside engaging projections (123), and when these four inside engaging projections are not specifically distinguished, it will be described as the inside engaging projection 123. On the other hand, of the four inside engaging projections, three inside engaging projections may be described as inside engaging projections 123A and a remaining one inside engaging projection as an inside engaging projection 123B to distinguish between the inside engaging projection 123A and the inside engaging projection 123B. Similarly, the coupling member 122 includes four engaged grooves (124), and when these four engaged grooves are not specifically distinguished, it will be described as the engaged groove 124. On the other hand, of the four engaged grooves, three engaged grooves which are engaged with the inside engaging projections 123A may be described as engaged grooves 124A, and one engaged groove which is engaged with the inside engaging projection 123B as an engaged groove 124B. The inside engaging projection 123 engages with the engaged groove 124, and the outside engaging projection 125 engages with the engaged projection 126. In other words, the inside engaging projection 123 and the engaged groove 124 form the engagement structure on the inner diameter side (first engagement structure), and the outside engaging projection 125 and the engaged projection 126 form the engagement structure on the outer diameter side (second engagement structure). Both engagement structures are configured, in the relative rotation about the rotational axis C between the nozzle main body 121 and the coupling member 122, so as to be in the engaged state engaged with each other through a process of elastic deformation. In such the engaged state, relative movement between the nozzle main body 121 and the coupling member 122 in the rotational axis direction is restricted.

[First engagement structure]

The engagement structure (first engagement structure) by the inside engaging projection 123 and the engaged groove 124 has a so-called fixed fitting structure. Relative rotation phase which the inside engaging projection 123 and the engaged groove 124 can take, after the nozzle main body 121 reaches the insertion completed position and upon the relative rotation of both, includes a non-engagement phase, a deforming phase, and an engaged phase.

In the state in which the nozzle main body 121 reaches the insertion completed position, the inside engaging projection 123 and the engaged groove 124 are in the non-engagement phase. As the nozzle main body 121 is rotated relative to the coupling member 122 in the rotational direction S, the inside engaging projection 123 and the engaged groove 124 go from the non-engagement phase, through the deforming phase, to the engaged phase. The inside engaging projection 123 and the engaged groove 124 are structured so as to, by elastic deformation being generated in at least one of the inside engaging projection 123 and the engaged groove 124 in the deforming phase, be in the engaged phase.

In a state in which the inside engaging projection 123 and the engaged groove 124 are in the engaged phase, the nozzle main body 121 is in a state in which, relative to the coupling member 122, relative movement in the circumferential direction and relative movement in a direction of a rotational center axis are restricted. Once the inside engaging projection 123 and the engaged groove 124 reach the engaged phase, after that, even if the nozzle main body 121 is attempted to be rotated in an opposite direction (second direction) to the rotational direction S (first direction) relative to the coupling member 122, the inside engaging projection 123 and the engaged groove 124 do not return again to the deforming phase and the non-engagement phase.

The inside engaging projection 123 is projected, as shown in part (a) of Figure 24 to part (b) of Figure 25, in the radial direction from an outer peripheral surface of the inserting portion 121a of the nozzle main body 121. The inside engaging projection 123 spirally extends, with respect to the outer peripheral surface of the inserting portion 121a, as it goes downstream in the rotational direction S of the nozzle main body 121 when the nozzle main body 121 is coupled to the coupling member 122, so as to go downstream in the inserting direction I of the inserting portion 121a into the through hole 122b.

The inside engaging projection 123 includes, as shown in part (a) of Figure 29, part (c) of Figure 29, and part (a) of Figure 30, a first side surface 123d on a leading end side in the rotational direction S, a second side surface 123e on a trailing end side in the rotational direction S, and a third side surface 123f on a trailing end side in the inserting direction I. The first side surface 123d and the second side surface and 123e are side surfaces extending along the inserting direction I, and the third side surface 123f is a side surface extending in an inclined direction, which is a direction inclined relative to each of the inserting direction I and the rotational direction S, and as it goes to the downstream side in the rotational direction S, goes to the downstream side in the inserting direction I.

Further, the inside engaging projection 123 includes, between the first side surface 123d and the third side surface 123f, a force receiving surface 123b (first guided inclined surface), which is a side surface inclined relative to each side surface. In the deforming phase, the force receiving surface 123b is a surface for receiving pressing force, which makes deformation permitting the inside engaging projection 123 and the engaged groove 124 to relatively move into the engaged phase be generated in at least one of the inside engaging projection 123 and the engaged groove 124, from the engaged groove 124.

The engaged groove 124 is, as shown in part (a) of Figure 26 and part (b) of Figure 26, a groove provided inside the through hole 122b of the coupling member 122, i.e., on the inner peripheral surface 122d forming the through hole 122b. The engaged groove 124 is recessed, in a radial direction with respect to a center axis of the inner peripheral surface 122d which is parallel to the inserting direction I, outward in the radial direction to the inner peripheral surface 122d.

The engaged groove 124 has a structure which includes, as shown in part (b) of Figure 29, part (d) of Figure 29, and part (b) of Figure 30, overall, an insertion guiding portion 124a, a deformation guiding portion 124b, and an engagement holding portion 124c. As shown in part (a) of Figures 31 to part (d) of Figure 31, the inside engaging projection 123 introduced into the engaged groove 124 is guided, by the relative rotation of the nozzle main body 121 in the rotational direction S relative to the coupling member 122, from the insertion guiding portion 124a, through contact with a force applying surface of the deformation guiding portion 124b, to the engagement holding portion 124c.

The insertion guiding portion 124a includes an inserted opening, which is opened to a direction parallel to the inserting direction I, at an end surface of the opposing portion 122c of the coupling member 122 in an opposite direction to the inserting direction I. The insertion guiding portion 124a extends in the inserting direction I from the inserted opening and, when the inserting portion 121a of the nozzle main body 121 is inserted into the through hole 122b, guides the inside engaging projection 123 by drawing the inside engaging projection 123 in the inserting direction I.

In the engaged groove 124, a leading side (downstream side in the inserting direction I) of the insertion guiding portion 124a extends in the rotational direction S, and the deformation guiding portion 124b is provided before the engagement holding portion 124c. The deformation guiding portion 124b has a structure so as to be projecting to the downstream side in the inserting direction I with respect to the engagement holding portion 124c, and as a part of a groove side surface of the engaged groove 124, includes a first inclined surface 124b 1 and a second inclined surface 124b2 as a force applying surface (first guiding inclined surface).

The first inclined surface 124b 1 and the second inclined surface 124b2 are structured so that an inclined angle of a direction guiding the inside engaging projection 123 with respect to the circumferential direction decreases in steps. The first inclined surface 124b1 and the second inclined surface 124b2 are, as shown in part (b) of Figure 30, respectively, the groove side surfaces which extend in directions inclined to each of the inserting direction I and the rotational direction S and in inclined directions which go to the downstream side in the inserting direction I as it goes to the downstream side in the rotational direction S. The first inclined surface 124b 1 and the second inclined surface 124b2 oppose, respectively, in the opposite direction to the inserting direction I and the rotational direction S to the force receiving surface 123b of the inside engaging projection 123 in the deformation phase. With respect to the inside engaging projection 123, the first inclined surface 124b1 guides first, then the second inclined surface 124b2 guides. It is structured that the second inclined surface 124b2 has a smaller angle to the circumferential direction than the first inclined surface 124b 1 has.

In the inside engaging projection 123, the force receiving surface 123b contacts the first inclined surface 124b 1 due to a movement in the rotational direction S caused by the relative rotation between the nozzle main body 121 and the coupling member 122. Due to the deformation in at least one of the inside engaging projection 123 and the engaged groove 124 caused by the pressing force generated between the force receiving surface 123b and the first inclined surface 124b 1, the inside engaging projection 123 is displaced relatively on the downstream side in the inserting direction I against the deformation guiding portion 124b of the engaged groove 124.

When the relative rotation between the nozzle main body 121 and the coupling member 122 is further advanced while the force receiving surface 123b and the first inclined surface 124b1 are sliding with each other, it is in a state such that the inside engaging projection 123 rides up the deformation guiding portion 124b on the downstream side in the inserting direction I. In other words, it is in a state in which the third side surface 123f of the inside engaging projection 123 and the second inclined surface 124b2 of the deformation guiding portion 124b of the engaged groove 124 contact and slide. Due to the deformation in at least one of the inside engaging projection 123 and the engaged groove 124 caused by the pressing force generated between the force receiving surface 123b and the second inclined surface 124b2, the inside engaging projection 123 is, further, displaced relatively on the downstream side in the inserting direction I against the deformation guiding portion 124b of the engaged groove 124.

As the relative rotation between the nozzle main body 121 and the coupling member 122 advances further from this state, the inside engaging projection 123 moves to the downstream side of the deformation guiding portion 124b in the rotational direction S, and the pressing force is released. By this, the inside engaging projection 123 is released from the deformed state and is displaced relatively in an opposite direction to the inserting direction I with respect to the engaged groove 124. In other words, the inside engaging projection 123 makes the relative move, due to the deformation in at least one of the inside engaging projection 123 and the engaged groove 124, so as to overcome the deformation guiding portion 124b, in the rotational direction S with respect to the engaged groove 124, and makes a move to settle into the engagement holding portion 124c. By this, the relative rotation phase between the inside engaging projection 123 and the engaged groove 124 is changed from the deforming phase to the engaged phase.

The engagement holding portion 124c is structured so that a groove width of the engaged groove 124 in the inserting direction I is widened in the opposite direction to the inserting direction I with respect to the deformation guiding portion 124b. The elastic deformation of the inside engaging projection 123 or the engaged groove 124 generated in the deformation phase is released by the transition to the engaged phase of the relative rotation phase between both, and it is in a state in which the inside engaging projection 123 is accommodated in the engagement holding portion 124c.

The engagement holding portion 124c includes, with respect to the inside engaging projection 123 in the engaged phase, along the circumferential direction of the inner peripheral surface 122d, a first groove side surface 124d opposing in the opposite direction to the rotational direction S and a second groove side surface 124e opposing in the rotational direction S. The first groove side surface 124d is a groove side surface extending along the inserting direction I, and is opposing in the opposite direction to the rotational direction S against the first side surface 123d of the inside engaging projection 123 as a first circumferential direction restricting portion. The second groove side surface 124e is also a groove side surface extending along the inserting direction I, and is opposing in the rotational direction S against the second side surface 123e of the inside engaging projection 123 as a second circumferential direction restricting portion.

By these opposing surfaces in each circumferential direction between the inside engaging projection 123 and the engagement holding portion 124c, the relative rotational movement in the circumferential direction between the inside engaging projection 123 and the engaged groove 124 in the engaged phase is restricted. For the opposing surfaces in each circumferential direction between the inside engaging projection 123 and the engagement holding portion 124c, it is ideal to oppose each other without gaps, however, it may be structured to oppose each other with slight gaps. In other words, as far as a permissible range, in which the relative rotation is possible after the nozzle main body 121 and the coupling member 122 is engaged with each other, is kept within a range which does not affect the function of the toner pack 100, it may be structured to engage in a loose fitting state.

Further, the engagement holding portion 124c also includes a third groove side surface 124f opposing in the inserting direction I to the inside engaging projection 123 in the engaged phase. The third groove side surface 124f is a groove side surface which extends in a direction inclined to the inserting direction I and the rotational direction S, respectively, corresponding to the third side surface 123f of the inside engaging projection 123, and in an inclined direction which goes to the downstream side in the inserting direction I as it goes to the downstream side in the rotational direction S.

By the third groove side surface 124f as a counter inserting direction restricting portion contacting the third side surface 123f of the inside engaging projection 123 in the engaged phase in the inserting direction I, a relative movement in which the nozzle main body 121 is separated from the coupling member 122 in a counter inserting direction opposite to the inserting direction I is restricted. In contrast, the relative movement in the inserting direction I of the nozzle main body 121 relative to the coupling member 122 is restricted, as described above, by the opposing portion 122c of the coupling member 122 as an inserting direction restricting portion abuts the flange 121c of the nozzle main body 121 in the counter inserting direction. By this, the relative movements of the nozzle main body 121 relative to the coupling member 122 in both the inserting direction I and the counter inserting direction are restricted.

The third groove side surface 124f is inclined so as to push the inside engaging projection 123 to the downstream side in the inserting direction I as it goes to the downstream side in the rotational direction S. By wedge effect according to the inclined structure, the relative movement between the inside engaging projection 123 and the engaged groove 124 is further restricted, and closeness in the contact between the nozzle main body 121 and the coupling member 122 in the inserting direction I is enhanced. In other words, it becomes possible to absorb dimensional errors between the nozzle main body 121 and the coupling member 122 and obtain a stable close contact.

A plurality of the inside engaging projections 123 are provided at different positions (different phases about a center axis of the inserting portion 121a) in the circumferential direction of the outer peripheral surface of the inserting portion 121a, and in this embodiment, provided at four locations equally spaced in the circumferential direction. The engaged grooves 124 are also provided at four locations equally spaced in the circumferential direction, corresponding to the inside engaging projections 123. Incidentally, the provided number of the engagement structures constituted by the inside engaging projection 123 and the engaged groove 124 is not limited to four locations, but may be three locations or less or five locations or more.

In this embodiment, as a structure to prevent incorrect mounting of the nozzle main body 121 to the coupling member 122, a position of only one of the four sets of the engagement structure in the inserting direction I is made to be different from those of the other sets. In other words, a position of the inside engaging projection 123B, which is one of the four inside engaging projections 123, in the inserting direction I is set to a position shifted to the downstream side in the inserting direction I relative to positions of the other three inside engaging projections 123A. Correspondingly, a position of the engagement holding portion 124c in the engaged groove 124B, which corresponds to the inside engaging projection 123B, in the inserting direction I is set to a position shifted to the downstream side in the inserting direction I relative to positions of the engagement holding portions 124c in the other three engaged grooves 124A. By this, unless otherwise the relative phase about the inserting direction I of the nozzle main body 121 and the coupling member 122 is in a phase, in which the inside engaging projection 123B and the engaged groove 124B is aligned, the nozzle main body 121 cannot be assembled to the coupling member 122. Therefore, a phase (direction) about the inserting direction I of the nozzle main body 121 relative to the coupling member 122 upon being engaged with the coupling member 122, i.e., a phase about the inserting direction I of the nozzle main body 121 relative to the pouch 101 becomes constant (determined to one attitude).

Incidentally, the structure for prevent the incorrect mount is not limited to the above structure. For example, for the shifting manner of the positions in the inserting direction I between the inside engaging projections 123A and the inside engaging projection 123B, it may be structured so that the inside engaging projection 123B is shifted to an upstream side in the inserting direction I relative to the inside engaging projections 123A. Further, for example, positions in the inserting direction I of two adjacent inside engaging projections 123 may be set to be different with respect to the other two inside engaging projections. Further, three or less or five or more of the inside engaging projections 123 may be provided, and in such cases, combination of the inside engaging projection 123A and the inside engaging projection 123B may be arbitrarily combined as long as the incorrect mount preventing function is obtained. Further, the shifting manner of the positions in the inserting direction I of the inside engaging projections 123 is not limited to two steps as in this embodiment, but may be structured to be different in three or more steps.

In this embodiment, the engaging projection is provided to the nozzle main body 121 and the engaged groove is provided to the coupling member 122, however, it may be structured so that the engaging projection is provided to the coupling member 122 and the engaged groove is provided to the nozzle main body 121. However, in the latter structure, since it becomes a structure in which the engaged groove provided in the nozzle main body 121 communicates with the accommodating portion 101a of the pouch 101, it may be necessary to consider a seal structure so that such engagement constituent portion does not result in a toner leaking path.

[Second engagement structure]

The engagement structure (second engagement structure) by the outside engaging projection 125 (third projection) and the engaged projection 126 (second projection) also has the so-called fixed fitting structure. After the nozzle main body 121 reaches the insertion completed position, upon relatively rotating both, the relative rotation phase which the outside engaging projection 125 and the engaged projection 126 can take includes the non-engagement phase, the deforming phase, and the engaged phase.

In the state in which the nozzle main body 121 reaches the insertion completed position, the outside engaging projection 125 and the engaged projection 126 are in the non-engagement phase. As the nozzle main body 121 is rotated relative to the coupling member 122 in the rotational direction S, the outside engaging projection 125 and the engaged projection 126 go from the non-engagement phase, through the deforming phase, to the engaged phase. The outside engaging projection 125 and the engaged projection 126 are structured so as to, by elastic deformation being generated in at least one of the outside engaging projection 125 and the engaged projection 126 in the deforming phase, be in the engaged phase.

In a state in which the outside engaging projection 125 and the engaged projection 126 are in the engaged phase, the nozzle main body 121 is in the state in which, relative to the coupling member 122, the relative movement in the circumferential direction and the relative movement in the rotational center axis direction are restricted. Once the outside engaging projection 125 and the engaged projection 126 reach the engaged phase, after that, even if the nozzle main body 121 is attempted to be rotated in the opposite direction to the rotational direction S relative to the coupling member 122, unless otherwise some external force such as one which deforms the outside engaging projection 125 or the engaged projection 126 is applied, the outside engaging projection 125 and the engaged projection 126 do not return again to the deforming phase and the non-engagement phase.

The outside engaging projection 125 is, as shown in part (a) of Figure 24 to part (b) of Figure 25 and part (a) of Figures 32 to part (d) of Figure 32, a projection, which is projected in an outer diameter direction from an outer peripheral end portion of the flange 121c of the nozzle main body 121 and has a substantially triangular wing shape. Specifically, the outside engaging projection 125 is projected in the rotational direction S, which is the relative rotational direction of the nozzle main body 121 relative to the coupling member 122, so that a projected height in the radial direction gets higher as it goes to the opposite direction to the rotational direction S.

The outside engaging projection 125 includes, as shown in part (a) of Figure 33 and part (b) of Figure 33, a force receiving surface 125a, a sliding surface 125b, and an engaging surface 125c. The force receiving surface 125a (a second guided inclined surface) is a leading end surface of the outside engaging projection 125 in the rotational direction S, and an inclined surface extending along a direction inclined so as to go to the outer diameter direction as it goes to the upstream side in the rotational direction S and along the inserting direction I. The sliding surface 125b is an end surface of the outside engaging projection 125 on the downstream side in the inserting direction I and extends in a direction perpendicular to the inserting direction I. The engaging surface 125c is a trailing end surface of the outside engaging projection 125 in the rotational direction S and extends in the inserting direction I and the radial direction.

The engaged projection 126 is, as shown in part (a) of Figure 24 to part (b) of Figure 25 and part (a) of Figure 32 to part (d) of Figure 32, a projection having a substantially triangular rib shape, which is projected from the opposing portion 122c of the coupling member 122 in the opposite direction to the inserting direction I. Specifically, the engaged projection 126 is disposed outside of the outer periphery of the flange 121c of the nozzle main body 121 in the radial direction and is projected so that a projected height thereof in the counter inserting direction, which is the opposite direction to the inserting direction I, gets higher as it goes to the rotational direction S, which is the relative rotational direction of the nozzle main body 121 relative to the coupling member 122.

The engaged projection 126 includes, as shown in part (a) of Figure 33 and part (b) of Figure 33, a force applying surface 126a, a slid surface 126b, and an engaged surface 126c. The force applying surface 126a (second guiding inclined surface) is an inclined surface of the engaged projection 126 on the upstream side in the rotational direction S and an inclined surface extending along a direction, which is inclined so that the projected height from the opposing portion 122c in the counter inserting direction gets higher as it goes on the downstream side in the rotational direction S, and along the radial direction. The slid surface 126b is an end surface of the engaged projection 126 on the upstream side in the inserting direction I and extends in the direction perpendicular to the inserting direction I. The engaged surface 126c is an end surface of the engaged projection 126 on the downstream side in the rotational direction S and a surface extending in the inserting direction I and the radial direction.

In the outside engaging projection 125, the force receiving surface 125a contacts the force applying surface 126a due to the movement in the rotational direction S caused by the relative rotation between the nozzle main body 121 and the coupling member 122. By deformation of at least one of the outside engaging projection 125 and the engaged projection 126 caused by pressing force generated between the force receiving surface 125a and the force applying surface 126a, the outside engaging projection 125 is displaced relatively with respect to the engaged projection 126 to the upstream side in the inserting direction I.

When the relative rotation between the nozzle main body 121 and the coupling member 122 is further advanced while the force receiving surface 125a and the force applying surface 126a are sliding with each other, it is in a state such that the outside engaging projection 125 rides up the engaged projection 126 on the upstream side in the inserting direction I. In other words, it is in a state in which the sliding surface 125b of the outside engaging projection 125 opposes in the inserting direction I to, contacts, and slides with the slid surface 126b of the engaged projection 126.

As the relative rotation between the nozzle main body 121 and the coupling member 122 advances further from this state, the outside engaging projection 125 moves to the downstream side of the engaged projection 126 in the rotational direction S, and the pressing force is released. By this, the outside engaging projection 125 is released from the deformed state and is displaced relatively in the inserting direction I with respect to the engaged projection 126. In other words, the outside engaging projection 125 is moved relatively, due to the deformation of at least one of the outside engaging projection 125 and the engaged projection 126, as climbing over the engaged projection 126, to the downstream side in the rotational direction S with respect to the engaged projection 126. By this, it is in a state in which the engaging surface 125c of the outside engaging projection 125 as a fourth circumferential direction restricting portion opposes the engaged surface 126c of the engaged projection 126 as a third circumferential direction restricting portion in the opposite direction to the rotational direction S. As a result, the relative rotation between the nozzle main body 121 relative to the coupling member 122 in the opposite direction to the rotational direction S is restricted. That is, the relative rotation phase between the outside engaging projection 125 and the engaged projection 126 is changed from the deforming phase to the engaged phase.

A plurality of the second engagement structures constituted by the outside engaging projection 125 and the engaged projection 126 are provided at different positions (different phases about the center axis of the inserting portion 121a) in the circumferential direction about the rotational axis C of the relative rotation between the nozzle main body 121 and the coupling member 122. In this embodiment, the second engagement structure is provided at two locations in the circumferential direction. Incidentally, the provided number of the second engagement structure is not limited to two, but may be one or three or more.

According to the above-described first engagement structure, the relative movement of the nozzle main body 121 relative to the coupling member 122 can be restricted in both of the inserting direction I and in the opposite direction thereof, i.e., the counter inserting direction (exit direction). Further, the relative rotational movement between the nozzle main body 121 and the coupling member 122 about the rotational axis along the inserting direction I can also be restricted. The restriction of the relative rotation is also be realized by the second engagement structure, and by this restriction of the relative rotation, the relative movement in the inserting and removing direction of the nozzle main body 121 relative to the coupling member 122 is also consequently restricted.

Further, the first engagement structure, which restricts both of the relative movement in the inserting and removing direction and the relative rotational movement, is disposed on the inner diameter side in the radial direction about the rotational axis of the relative rotation than the second engagement structure. By this, it becomes possible to make rotational torque required to form the engaged state relatively smaller than a case of other arrangements (for example, a case in which the arrangement of the first engagement structure and the second engagement structure in the radial direction are reversed). In particular, it becomes possible to reduce the force required to cause the deformation, with which the inside engaging projection 123 climbs over the deformation guiding portion 124b, and to make the assembly work easier.

The first engagement structure constituted by the inside engaging projection 123 and the engaged groove 124 has a structure which is not exposed to the outside after the assembly of the nozzle main body 121. That is, the first engagement structure is disposed inside the through hole 122b of the inserted portion 122e of the coupling member 122. Furthermore, the inserting portion 121a and the flange 121c of the nozzle main body 121 serve as a covering portion which covers the engaging portion of the inside engaging projection 123 and the engaged groove 124 from the outside. By this, contacting the first engagement structure from the outside, etc. is restricted and unless otherwise being broken down, the engaged state of the first engagement structure can be permanently maintained. Incidentally, as long as the structure is capable of restricting the access to the first engagement structure, visibility with respect to the first engagement structure from outside is not an issue. In other words, for example, even if it is a structure of which the engaging portion of the first engagement structure is visible via a small gap, if a size of the gap is a dimension which can restrict the user's contact to the first engagement structure, the effect of this invention is not affected.

In this embodiment, it is structured so that a timing at which the first engagement structure, i.e., the inside engaging projection 123 and the engaged groove 124, and a timing at which the second engagement structure, i.e., the outside engaging projection 125 and the engaged projection 126 coincide. While the first engagement structure is not exposed to the outside, the second engagement structure is provided outside the inserted portion 122e of the coupling member 122 and is exposed to the outside. Therefore, by checking a state of the engagement of the second engagement structure, a state of the engagement of the first engagement structure, which is not visible from the outside, can be indirectly checked.

[Modified example of first engagement structure]

With reference to part (a) of Figure 35 to part (d) of Figure 36, a modified example of the first engagement structure will be described.
Incidentally, in the modified example of the first engagement structure, for the same structures as in the above embodiment, the same reference numerals as in above the embodiment are used.

Part (a) of Figure 35 is, in a modified example of the first engagement structure, a side view showing a side of a nozzle main body where the discharging opening is provided. Part (b) of Figure 35 is a sectional view of the coupling member including the rotational axis of the relative rotation between the nozzle main body and a coupling member Part (c) of Figure 35 is, in the modified example of the first engagement structure, a side view showing an opposite side of the nozzle main body to the side shown in part (a) of Figure 35. Part (d) of Figure 35 is a sectional view of the coupling member including the rotational axis of the relative rotation between the nozzle main body and the coupling member Part (a) of Figure 36 is, in the modified example of the first engagement structure, a schematic enlarged perspective view showing a state of an inside of an opening portion of the coupling member attached to the pouch, illustrating only an inside engaging projection of the nozzle main body, and showing a state when the nozzle main body is in an insertion completed position relative to the coupling member. Part (b) of Figure 36 is a 36B-36B sectional view of part (a) of Figure 36. Part (c) of Figure 36 is, in the modified example of the first engagement structure, a schematic enlarged perspective view showing a state of the inside of the opening portion of the coupling member attached to the pouch, illustrating only the inside engaging projection of the nozzle main body, and showing a state when the nozzle main body is in an engagement completed position relative to the coupling member. Part (d) of Figure 36 is a 36D-36D sectional view of part (c) of Figure 36.

In the above embodiment, the inside engaging projection 123 is structured as the inclined projection extending in the spiral shape, however, the form of the inside engaging projection 123 is not limited to such a structure. For example, a third side surface 123f2 may be, instead of the inclined surface inclined to each of the inserting direction I and the rotational direction S as the third side surface 123f is in the above embodiment, a surface extending perpendicular to the rotational axis of the rotational direction S. In other words, as an overall shape of an inside engaging projection 1232, it may be structured as a form extending in the circumferential direction. In this case, a third groove side surface 124f2 opposing the third side surface 123f2 in the engagement holding portion 124c of an engaged groove 1242 may also be structured as a surface extending perpendicular to the rotational axis of the rotational direction S.

[Materials for each member of toner pack]

Next, materials for each member of the toner pack 100 will be described using Figure 37 and Figure 38. Figure 37 is an exploded perspective view showing the toner pack 100. Figure 38 is an exploded front view showing the toner pack 100.

As shown in Figure 37 and Figure 38, the toner pack 100 is mainly constituted by the pouch 101, the coupling member 122, the seal member 127, the nozzle main body 121, and pack-side shutter 103. Incidentally, in Figure 37, the seal member 127 is not shown.

A main component of the nozzle main body 121 and the pack-side shutter 103 is resin, and the nozzle main body 121 and the pack-side shutter 103 are formed by injection molding, etc. The seal member 127 is formed by urethane foam, which is made by foaming polyurethane. Therefore, the seal member 127 has flexibility and elasticity, and by being compressed between the nozzle main body 121 and the coupling member 122, seals the gap between the nozzle main body 121 and the coupling member 122.

A main component of the pouch 101 and the coupling member 122 is paper. For example, even in a case in which materials other than paper is mixed in the pouch 101 and the coupling member 122, if a main material among materials constituting the pouch 101 and the coupling member 122 (e.g., more than 50% of an overall mass) is paper, then it can be said that the main component of the pouch 101 and the coupling member 122 is paper. That is, the main material of the pouch 101 and the coupling member 122 is paper, and the pouch 101 and the coupling member 122 include a plurality of papers and an adhesive layer which adheres these plurality of papers. The adhesive layer may contain components other than paper. The pouch 101 is made by, for example, the plurality of papers being bonded by heat welding to form a pouch shape.

In this manner, the toner pack 100 can be divided into two parts, bounded by broken lines BL1 shown in Figure 37 and Figure 38: the pouch 101 and the coupling member 122, which are paper components made mainly of paper, and the seal member 127, the nozzle main body 121, and the pack-side shutter 103, which are resin components made mainly of resin.

In recent years, a product with a low environmental load is desired, and as a part of this trend, improving recyclability becomes a problem. In particular, for a consumed product such as the toner pack 100, a product with high recyclability is desired. In general, paper is recyclable through relatively simple processes, for example, in which used paper products can be converted back into pulp, which can then be used to make recycled paper. On the other hand, recycling of resin material is more complicated than that of paper. Therefore, by increasing paper components, it becomes possible to improve the recyclability of the toner pack 100. Thus, in this embodiment, by configuring the main component of the pouch 101 and the coupling member 122 to be paper, the recyclability of the toner pack 100 is improved.

[Detailed structure of coupling member]

Next, using part (a) of Figure 39 to Figure 42, detailed structure of the coupling member 122 will be described. Part (a) of Figure 39 is a perspective view showing the coupling member 122, and part (b) of Figure 39 is another perspective view showing the coupling member 122. Part (a) of Figure 40 is a front view showing the coupling member 122, part (b) of Figure 40 is a left side view showing the coupling member 122, and part (c) of Figure 40 is a right side view showing the coupling member 122. Part (d) of Figure 40 is a plan view showing the coupling member 122, and part (e) of Figure 40 is a bottom view showing the coupling member 122. Part (a) of Figure 41 is a sectional view showing the coupling member 122, part (b) of Figure 41 is a sectional view showing a 41B-41B cross section of part (a) of Figure 40, and part (c) of Figure 41 is a sectional view showing a 41C-41C cross section of part (a) of Figure 40. Figure 42 is an exploded perspective view showing the coupling member 122.

As shown in part (a) of Figure 39 to Figure 42, the coupling member 122 is structured by a plurality of sheet-like papers being laminated. More specifically, the coupling member 122 is structured, in a state attached to the opening portion 101b of the pouch 101, by the plurality of papers being laminated in the longitudinal direction of the toner pack 100, i.e., the axial direction D1, which is the direction of the rotational axis A of the pack-side shutter 103 (see, Figure 10). In this embodiment, the coupling member 122 is structured by four sheets of paper S1 to S4 being laminated.

Incidentally, the coupling member 122 shown in Figure 37 to Figure 45, in which the papers S1 to S4 are laminated, also includes the above-described engaged groove 124 and the engaged projection 126, and these engaged groove 124 and the engaged projection 126 are engaged with the inside engaging projection 123 and outside engaging projection 125 of the nozzle main body 121, respectively. In other words, the structures for the coupling member 122 shown in Figure 37 to Figure 45 to be assembled to the pouch 101 and the nozzle main body 121 are as described above.

Further, in Figure 37 to Figure 45, in the coupling member 122, the engaged projection 126 to be engaged with the outside engaging projection 125 provided to the nozzle main body 121 is omitted. In the description below, the engagement structure by the inside engaging projection 123 and the engaged groove 124, i.e., the first engagement structure is referred, but not to the engagement structure by the outside engaging projection 125 and the engaged projection 126, i.e., the second engagement structure. Further, to the nozzle main body 121 and the coupling member 122, the outside engaging projection 125 and the engaged projection 126 may not be provided, respectively.

The papers S1 to S4 forming the coupling member 122 have different shapes, respectively. In particular, the papers S1 to S4 are different from each other in shapes of portions which form the inner peripheral surface 122d. This is because in the inner peripheral surface 122d of the coupling member 122, the as-described engaged groove 124 is formed. In this embodiment, by these portions of the papers S1 to S4 different from each other in shape, the engaged groove 124 is formed. In other words, at least a part of the engaged groove 124 is formed by portions different from each other of the paper S1 as a first paper having a first shape and the paper S2 as a second paper having a second shape different from the first shape in shape. Incidentally, in an end surface on the nozzle main body 121 side of the paper S4, the engaged projection 126 (see, part (b) of Figure 26) may be formed.

As shown in Figure 42, the coupling member 122 includes the papers S1 to S4 and adhesive layers AD1 to AD3 which adhere these papers S1 to S4 adjacent to each other. More specifically, the adhesive layer AD1 adheres the papers S1 and S2 adjacent to each other. The adhesive layer AD2 adheres the papers S2 and S3 adjacent to each other. The adhesive layer AD3 adheres the papers S3 and S4 adjacent to each other.

The adhesive layers AD1 to AD3 also are different from each other in shape corresponding to the shapes of the two papers to adhere. The adhesive layers AD1 to AD3 are constituted by, for example, a double-sided tape, an adhesive such as hot-melt, or thermoplastic resin used for heat welding, etc. In any case, a volume of the adhesive layers AD1 to AD3 is sufficiently small compared to a volume of the papers S1 to S4, and the main component of the coupling member 122 is paper.

Further, in this embodiment, the papers S1 to S4 had different shapes, however, it is not limited thereto. For example, a part of the plurality of the papers structuring the coupling member 122 may have the same shape as each other. Further, the plurality of adhesive layers which adhere the plurality of papers may also include the adhesive layers having the same shape as each other.

[Torsional rigidity of coupling member and pouch]

Next, using part (a) of Figure 43 to part (c) of Figure 44, torsional rigidity of the coupling member 122 and of the pouch 101 will be described. Part (a) of Figure 43 is a perspective view showing the coupling member 122, and part (b) of Figure 43 is a sectional view showing a 43B-43B cross section of part (a) of Figure 44. Part (a) of Figure 44 is a front view showing the toner pack 100, part (b) of Figure 44 is a sectional view showing a 44B-44B cross section of part (a) of Figure 44, and part (c) of Figure 44 is a sectional view showing a 44C-44C cross section of part (a) of Figure 44.

In general, as a parameter associated with the torsional rigidity, a polar moment of inertia of area is known. Hereinafter, the polar moment of inertia of area of the pouch 101 and the polar moment of inertia of area of the coupling member 122 will be described, and since both the pouch 101 and the coupling member 122 are components whose main components are paper, and it can be said that the higher the polar moment of inertia of area, the higher the torsional rigidity.
In a case in which a cross-sectional shape is not circular, a polar moment of inertia of area $I_p$ in an XY cross section (cross section parallel to an X axis and a Y axis, which are perpendicular to each other) is expressed by the following equation (1).

$$I_p = I_x + I_y \qquad \ldots (1)$$

$I_x$ is a moment of inertia of area associated with the X axis and $I_y$ is a moment of inertia of area associated with the Y axis.

Part (b) of Figure 43 is a cross section of the coupling member 122 perpendicular to the axial direction D1 and assuming that it is a cross section with a smallest polar moment of inertia of area of the coupling member 122. The axial direction D1 is an alignment direction in which the pouch 101 and the nozzle main body 121 are aligned. At this time, the polar moment of inertia of area $I_p$ in the 43B-43B cross section of the coupling member 122 shown in part (b) of Figure 43 is expressed by the following equation (2).

$$I_p = 1.66 \times 10^5 \ [\text{mm}^4] \qquad \ldots (2)$$

As shown in part (a) and part (b) of Figure 44, the cross section 44B-44B does not include the coupling member 122 and is a cross section closer to the opening portion 101b of the pouch 101. Then, the polar moment of inertia of area $I_p$ at that cross section of the accommodating portion 101a of the pouch 101 is expressed by the following equation (3).

$$I_p = 9.9 \times 10^{\wedge}3 \ [\text{mm}^4] \qquad \ldots (3)$$

Furthermore, as shown in part (a) and part (c) of Figure 44, the cross section 44C-44C is a cross section at a position only 20 mm away from an end surface 122p of the coupling member 122 to an opposite side to the opening portion 101b of the pouch 101. Then, the polar moment of inertia of area $I_p$ at that cross section of the accommodating portion 101a of the pouch 101 is expressed by the following equation (4).

$$I_p = 1.2 \times 10^{\wedge}4 \ [\text{mm}^4] \qquad \ldots (4)$$

The polar moments of inertia of area expressed in these equations (3) and (4) are both the polar moments of inertia of area of the pouch 101 in a neighborhood of the opening portion 101b. In other words, it can be said that the position separated by 20 mm from the end surface 122p of the coupling member 122 to a distal end 101t side of the pouch 101 is the neighborhood of the opening portion 101b. In other words, a region within 20 mm from the end surface 122p of the coupling member 122 to the distal end 101t side is the neighborhood of the opening portion 101b. Incidentally, for example, a region within X mm from the end surface 122p to the distal end 101t side may be defined as the neighborhood of the opening portion 101b, and the X mm may be set to 1/5 of an entire length of the pouch 101 in the axial direction D1. Further, in the axial direction D1, the position of the cross section 43B-43B as a first cross section is defined as a first position and the position of the cross section 44C-44C as a second cross section is defined as a second position. The first position is a position closer to the opening portion 101b in the axial direction D1 than the second position is. Further, the second position is, for example, a position separated by 20 mm or 1/5 of the entire length of the pouch 101 from the end surface 122p to the distal end 101t side. At this time, the polar moment of inertia of area of the coupling member 122 at the first position is larger than the polar moment of inertia of area of the pouch 101 at the second position.

As can be seen from the above equations (2) to (4), in this embodiment, in the cross section perpendicular to the axial direction D1, the minimum polar moment of inertia of area of the coupling member 122 is larger than the polar moment of inertia of area of the pouch 101 in the neighborhood of the opening portion 101b. In other words, the torsional rigidity of the coupling member 122 is larger than the torsional rigidity of the pouch 101 in the neighborhood of the opening portion 101b. This is because the coupling member 122 is constituted by the plurality of papers S1 to S4 being laminated in the axial direction D1, the coupling member 122 becomes thick in the direction perpendicular to the axial direction D1 and have high rigidity.

[Separation of coupling member and nozzle main body]

Next, using Figure 45, separation of the coupling member 122 and the nozzle main body 121 will be described. Figure 45 is an exploded perspective view showing a state in which the coupling member and the nozzle main body are separated. When the toner pack 100 is in use, the coupling member 122 and the nozzle main body 121 are engaged by the above-described first engagement structure and the second engagement structure. Then, these first engagement structure and the second engagement structure have the so-called fixed fitting structure, and the coupling member 122 and the nozzle main body 121 are not separated during normal use.

On the other hand, it is desirable that the toner pack 100 which has used up the accommodated developer be separated at the broken line BL1 shown in Figure 37 and Figure 38 for recycling. This is because, as described above, the toner pack 100 can be divided into two parts, bounded by the broken line BL1, that is, the pouch 101 and the coupling member 122, which are paper components, and the seal member 127, the nozzle main body 121, and the pack-side shutter 103, which are resin components.

As described in part (a) and part (b) of Figure 28, after the nozzle main body 121 is inserted into the coupling member 122 in the inserting direction I, by being rotated in the rotational direction S about the rotation axis C, the nozzle main body 121 is coupled thereto. Upon separating the nozzle main body 121 from the coupling member 122, for example, a worker (including a user or a service representative) holds the nozzle main body 121 or the pack-side shutter 103 with one hand and holds the neighborhood of the opening portion 101b with the other hand. Then, the worker rotates (relatively rotates) the nozzle main body 121 relative to the coupling member 122 in the opposite direction to the rotational direction S about the rotational axis C. By this, at least one of the engaged groove 124 of the coupling member 122 and the inside engaging projection 123 of the nozzle main body 121 is deformed, and the engagement between the engaged groove 124 and the inside engaging projection 123 is released. Similarly, for the second engagement structure as well, the engagement is released. By this, it becomes possible for the coupling member 122 and the nozzle main body 121 to be separatable from each other.

Incidentally, the deformation of at least one of the engaged groove 124 and the inside engaging projection 123 includes the elastic deformation, plastic deformation, and/or rupture. In other words, the worker needs to relatively rotate, with strong force so that at least one of the engaged groove 124 and the inside engaging projection 123 is deformed, the nozzle main body 121 relative to the coupling member 122 in the opposite direction to the rotational direction S. As described above, the torsional rigidity of the coupling member 122 is larger than the torsional rigidity of the pouch 101 in the neighborhood of the opening portion 101b. For this reason, the worker can apply the strong force to the coupling member 122, upon holding the neighborhood of the opening portion 101b, by gripping the pouch 101 over the coupling member 122. Then, it becomes possible to firmly transmit the force of the worker's hand to the coupling member 122 and improve workability upon relatively rotating the nozzle main body 121 relative to the coupling member 122 in the opposite direction to the rotational direction S. Further, the pouch 101 and the coupling member 122 are coupled with sufficiently strong coupling force so as not to come off upon separating the nozzle main body 121 and the coupling member 122.

Incidentally, in the above-described example, by relatively rotating the nozzle main body 121 relative to the coupling member 122 in the opposite direction to the rotational direction S, the nozzle main body 121 and the coupling member 122 are separated, however, it is not limited thereto. For example, the nozzle main body 121 may be relatively rotated relative to the coupling member 122 in the rotational direction S. Further, the coupling member 122 may be relatively rotated relative to the nozzle main body 121 in the rotational direction S or the opposite direction thereto about the rotational axis C.

Further, for example, in a case in which the worker holds the nozzle main body 121 or the pack-side shutter 103 with one hand and holds a position closer to the distal end 101t rather than the coupling member 122 of the pouch 101, even upon relatively rotating the nozzle main body 121 and the coupling member 122 about the rotational axis C, the flexible pouch 101 is twisted and the force of the worker's hand is not transmitted well to the coupling member 122. This is because the torsional rigidity in the neighborhood of the opening portion 101b of the pouch 101 is lower than the torsional rigidity of the coupling member 122. Therefore, upon separating the nozzle main body 121 and the coupling member 122, it is suitable for the worker to grip the pouch 101 over the coupling member 122 with one hand.

By separating the coupling member 122 and the nozzle main body 121 as described above, it becomes possible to separate the pouch 101 and the coupling member 122, which are paper components, and the seal member 127, the nozzle main body 121, and the pack-side shutter 103, which are resin components. By this, it becomes possible to improve recyclability. Incidentally, by separating the coupling member 122 and the nozzle main body 121, the seal member 127 is stuck either to the coupling member 122 or the nozzle main body 121, however, even if the seal member 127 is stuck to the coupling member 122 side, it is easily separatable from the coupling member 122.

Further, by structuring the coupling member 122 by laminating the papers S1 to S4, a complex shape such as the engaged groove 124 can be easily formed, and it becomes possible to reduce manufacturing cost of the coupling member 122. Further, since the coupling member 122 is thicker than the pouch 101, the torsional rigidity (polar moment of inertia of area) of the coupling member 122 can be improved, and it becomes possible to improve the workability upon separating the coupling member 122 and the nozzle main body 121.

Further, in this embodiment, since the pouch 101 is made of paper, it becomes possible to easily imprint on a surface of the pouch 101 by a general-purpose laser. Therefore, there is no need to manufacture the pouches 101 having different designs for different delivery destinations, and by imprinting on the surface of the pouch 101 by a general-purpose laser in a post process, it becomes possible to respond to a plurality of delivery destinations. Thus, it becomes possible to reduce kinds of components, and reduce component cost and production management cost.

<Second embodiment>

Next, a second embodiment of this invention will be described, however, the second embodiment is an embodiment in which structures of edge portions 131 to 134 of the pouch 101 in the first embodiment is modified with respect to the first embodiment. Therefore, with respect to the same structures (constitutions) as in the first embodiment, illustrations in the figures will be omitted, or the same reference numerals will be attached in the figures.

Figure 46 is a perspective view showing a pouch 2101 according to the second embodiment. Part (a) of Figure 47 is a sectional view showing a 47A-47A cross section of Figure 46, and part (b) of Figure 47 is a sectional view showing a 47B-47B cross section of Figure 46. Part (a) of Figure 48 is an enlarged view showing an edge portion 132.

In the pouch 101 in the first embodiment, the edge portion of the pouch 101 is formed by two sheets of sheet-like papers being bonded by heat welding, etc. in an overlapped state. However, since paper is less strong compared to, for example, polypropylene sheet, etc., the edge portion of the pouch 101 may be torn upon discharging the toner (developer) from the discharging opening 102a while squeezing and deforming the pouch 101, or upon separating the nozzle main body 121 and the coupling member 122.

Therefore, in this embodiment, it is aimed to improve strength of the edge portions 131 to 134 of the pouch 2101. As shown in Figure 46 to part (b) of Figure 47, the pouch 2101 is formed in a bag shape by a plurality (3 sheets in this embodiment) of sheets SH1 to SH3 made of paper. Then, the pouch 2101 includes the edge portions 131 to 134 where two or three sheets of the sheets SH1 to SH3 are overlapped, and only the opening portion 101b is open.

In the edge portions 131 and 132, the sheet SH1 as a first sheet and the sheet SH2 as a second sheet are overlapped. In the edge portion 133, the sheets SH1 and SH3 are overlapped. In the edge portion 134, the sheets SH2 and SH3 are overlapped. Since structures and manufacturing methods of these edge portions 131 to 134 are all the same, only the edge portion 132 will be described.

As shown in part (a) of Figure 47 and part (a) of Figure 48, the edge portion 132 is structured by the sheet SH2 being folded so as to wrap a one end portion 141 of the sheet SH1 and the one end portion 141 of the sheet SH1 and the sheet SH2 being bonded together. In more detail, as shown in part (a) of Figure 47, a resin layer 143 made of thermoplastic resin is coated on a surface of the sheet SH1 which contacts an inner space SP1 of the accommodating portion 101a. Similarly, a resin layer 145 made of the thermoplastic resin is coated on a surface of the sheet SH2 which contacts the inner space SP1. These resin layers 143 and 145 have, for example, a thickness of several microns to 50 microns.

Then, as shown in part (a) of Figure 48, a one end portion 146 of the sheet SH2 is folded back to wrap the one end portion 141 of the sheet SH1. In this state, by heating the one end portions 141 and 146, the resin layers 143 and 145 are melted, and the one end portions 141 and 146 are heat welded. By the above, the edge portion 132 is formed. Incidentally, the edge portion 132 may be structured so that the one end portion 141 of the sheet SH1 is folded back to wrap the one end portion 146 of the sheet SH2.

Here, when a thickness of the sheet SH1 is defined as a thickness T1, a thickness of the sheet SH2 is defined as a thickness T2, and a thickness of the edge portion 132 is defined as a thickness T3, then the following equation (5) is satisfied.

$$T3 \geq T1 + T2 \times 2 \qquad \dots (5)$$

In this embodiment, in the thickness of the edge portion 132 (T3), by the sheet SH2 being folded back, the thickness of two sheets of the sheet SH2 (T2 $\times$ 2) are added to the thickness of the one end portion 141 of the sheet SH1 (T1).

The sheets SH1 to SH3 in this embodiment have a uniform thickness, respectively, and are equal in thickness to each other. Therefore, it satisfies T1 = T2, and the thickness of the edge portions 131 to 134 is T1 $\times$ 3 or more. Incidentally, the thicknesses of the sheets SH1 to SH3 may differ from each other. Further, the pouch 2101 may be constituted by two sheets or four or more sheets made of paper. Further, the sheet which structures the pouch 2101 is not limited to made of paper, but may also be made of resin, such as a polypropylene sheet. However, from a standpoint of recyclability, it is suitable for the sheet which structures the pouch 2101 to be made of paper.

As described above, in this embodiment, upon forming the edge portion 132 of the pouch 2101, by folding back the sheet SH2, the thickness of the edge portion 132 is increased than thicknesses of portions other than the edge portions 131 to 134 of the pouch 2101. Similarly, thicknesses of the edge portions 131, 133, and 134 are increased. By this, it becomes possible to improve the strength of the edge portions 131 to 134 and reduce chances of the edge portions 131 to 134 to be torn and damaged. Further, for the portions of the pouch 2101 other than the edge portions 131 to 134, by keeping the thicknesses thereof not increased and flexibility thereof left intact, the workability upon discharging the toner (developer) from the discharging opening 102a while squeezing and deforming the pouch 2101 is maintained. By this, it becomes possible to realize both the improvement of toner dischargeability and reduction of the damage in the edge portions 131 to 134.

<First modified example of second embodiment>

Part (b) of Figure 48 is an enlarged view of an edge portion 132B according to a first modified example of the second embodiment. As described in the second embodiment, the thicknesses of the edge portions of the pouch 2101 can be increased by folding back the sheets, however, by changing a number of the sheets which are folded back, the thickness can be adjusted.

For example, as shown in part (b) of Figure 48, the edge portion 132B is structured by folding back both the one end portion 141 of the sheet SH1 and the one end portion 146 of the sheet SH2 and bonding these one end portions 141 and 146 together by heat welding. Here, when the thickness of the sheet SH1 is defined as the thickness T1, the thickness of the sheet SH2 is defined as the thickness T2, and a thickness of the edge portion 132B is defined as a thickness T4, then the following equation (6) is satisfied.

$$T4 \geq T1 \times 2 + T2 \times 2 \qquad \dots (6)$$

Then, if it satisfies T1 = T2, then the thickness of the edge portion 132B is T1 $\times$ 4 or more. In this manner, the thickness of the edge portion can be easily adjusted by changing the number of the sheets folded back at the edge portion of the pouch. Further, each edge portion of the pouch 2101 needs not to have all the same thickness. For example, in a part of the edge portions, two sheets may be folded back, and in another part, one sheet may be folded back.

<Second modification example of second embodiment>

Part (a) of Figure 49 is an enlarged view showing an edge portion 132C according to a second modified example of the second embodiment. The edge portion 132C of the pouch in this modified example includes a protective layer 147, which is formed by being applied to outer surfaces of the sheets SH1 and SH2 which are overlapped with each other. The protective layer 147 is formed of, for example, a polymer such as polyethylene (PE), polypropylene (PP), and polyamide (PA), a UV curable material which is cured by UV light, etc. With the protective layer 147, without folding back the sheets SH1 and SH2, it becomes possible to improve the strength of the edge portion 132C.

<Third modified example of second embodiment>

Part (b) of Figure 49 is an enlarged view showing an edge portion 132D according to a third modified example of the second embodiment. The edge portion 132D of the pouch in this modified example includes a clip member 148 which nips the sheets SH1 and SH2 which are overlapped with each other. With the clip member 148, without folding back the sheets SH1 and SH2, it becomes possible to improve the strength of the edge portion 132D. Incidentally, from the standpoint of recyclability, it is desirable that the clip member 148 be made of paper. Further, in this modified example, since the sheets SH1 and SH2 are coupled by the clip member 148, the resin layers 143 and 145 may be omitted.

[Other embodiment>

In all of the above-described embodiments, the toner is accommodated in the pouch 101 of the toner pack 100, but it is not limited thereto. For example, as the content accommodated in the pouch 101, other than the toner, ink may be used, and powder or a liquid may be accommodated in the pouch 101. Further, the powder accommodatable in the pouch 101 is not limited to the toner. In the case where the ink is accommodated in the pouch 101, the toner pack 100 may be mounted to an image forming apparatus of an ink jet type.

Further, in all of the above-described embodiments, the pack-side shutter 103 and the apparatus-side shutter 109 are constituted so as to be rotatable about the rotational axes A and B between the shielding position and the open position, but it is not limited thereto. For example, the pack-side shutter 103 and the apparatus-side shutter 109 may be constituted so as to be movable between the shielding position and the open position by being linearly moved parallel to the mounting direction M.

Further, in all of the above-described embodiments, the pack-side shutter 103 is constituted so as to open the discharging opening 102a of the nozzle 102 only in the open position, but it is not limited thereto. For example, the pack-side shutter 103 may be a rotatable member which opens the discharging opening 102a of the nozzle 102 irrespective of a rotation position. At that time, the discharging opening 102a of the nozzle 102 may employ a constitution in which the discharging opening 102a is closed by a seal when the toner pack 100 is not yet mounted to the mounting portion 106 and then the seal is removed by a mounting operation of the toner pack 100 to the mounting portion 106 or after the toner pack 100 is mounted. Further, a constitution in which the pack-side shutter 103 of the toner pack 100 is omitted may be employed.

Further, in the first embodiment described above, it is constituted so that, in the cross section perpendicular to the axial direction D1, the smallest polar moment of inertia of area of the coupling member 122 is larger than the polar moment of inertia of area of the pouch 101 in the neighborhood of the opening portion 101b, however, it is not limited thereto. For example, in the cross section perpendicular to the axial direction D1, the smallest polar moment of inertia of area of the coupling member 122 may also be smaller than the polar moment of inertia of area of the pouch 101 in the neighborhood of the opening portion 101b. Even when it is constituted in this manner, by configuring the main component of the coupling member 122 being paper, it becomes possible to increase a proportion of paper components in the toner pack 100, it becomes possible to improve recyclability.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A developer container comprising:

   a container member configured to accommodate a developer and constituting an accommodating portion provided with an opening portion;
   a coupling member attached to the opening portion; and
   a nozzle including a discharging opening coupled to the container member via the coupling member and for permitting discharge of the developer to an outside and a passage configured so that the developer passes the passage from the opening portion of the accommodating portion to the discharge opening,
   wherein a main component of the container member and the coupling member is a paper, and
   wherein a main component of the nozzle is a resin.

2. The developer container according to claim 1, wherein the coupling member is constituted by laminating a plurality of sheet-like papers.

3. The developer container according to claim 2, wherein the plurality of sheet-like papers are laminated in an alignment direction in which the container member and the nozzle are aligned.

4. The developer container according to claim 2, wherein the coupling member includes an adhesive layer which adheres the plurality of sheet-like papers adjacent to each other.

5. The developer container according to claim 2, wherein the plurality of papers include a first paper having a first shape and a second paper having a second shape different from the first shape.

6. The developer container according to claim 2, wherein the coupling member includes an inserted portion provided with a through hole and an engaged portion,

   wherein the nozzle includes an inserting portion which is inserted into the through hole of the inserted portion and an engaging portion engaging with the engaged portion,
   wherein the coupling member and the nozzle are coupled each other by engagement between the engaged portion and the engaging portion,
   wherein the plurality of papers include a first paper having a first shape and a second paper having a second shape different from the first shape, and
   wherein at least a part of the engaged portion is formed by portions different from each other of the first paper and the second paper in shape.

7. A developer container comprising:

   a container member configured to accommodate a developer and constituting an accommodating portion provided with an opening portion;
   a coupling member attached to the opening portion; and
   a nozzle including a discharging opening coupled to the container member via the coupling member and for permitting discharge of the developer to an outside and a passage configured so that the developer passes the passage from the opening portion of the accommodating portion to the discharge opening,
   wherein a main component of the container member and the coupling member is a paper,
   wherein a main component of the nozzle is a resin,
   wherein at a first position in an alignment direction where the coupling member and the nozzle are aligned, a polar moment of inertia of area of the coupling member in a first cross section perpendicular to the alignment direction is larger than a polar moment of inertia of area of the coupling member in a second cross section perpendicular to the alignment direction at a second position in the alignment direction,
   wherein the second position is a position not including the coupling member in the second cross section, and
   wherein the first position is a position closer to the opening portion in the alignment direction than the second position is.

8. The developer container according to claim 7, wherein the second position is a position separated by a distance of 1/5 of an entire length of the container member in the alignment direction from an end surface of the coupling member in the alignment direction.

9. The developer container according to claim 7, wherein the second position is a position separated by 20mm from an end surface of the coupling member in the alignment direction.

10. A developer container comprising:

    a container member configured to accommodate a developer and constituting an accommodating portion provided with an opening portion;
    a coupling member attached to the opening portion; and
    a nozzle including a discharging opening coupled to the container member via the coupling member and for permitting discharge of the developer to an outside and a passage configured so that the developer passes the passage from the opening portion of the accommodating portion to the discharge opening,
    wherein the container member includes an edge portion where a first sheet and a second sheet are overlapped and is formed in a bag shape by a plurality of sheet including the first sheet and the second sheet, and
    wherein the edge portion of the container member is configured by folding the second sheet so as to wrap one end portion of the first sheet and by joining the one end portion of the first sheet and the second sheet.

11. The developer container according to claim 10, wherein when a thickness of the first sheet is defined as T1, a thickness of the second sheet is defined as T2 and a thickness of the edge portion is defined as T3, the following relationship is satisfied:

$$T3 \geq T1 + T2 \times 2.$$

12. The developer container according to claim 10, wherein the one end portion of the first sheet and the second sheet are joined by heat welding.

13. The developer container according to claim 10, wherein a main component of the first sheet and the second sheet is a paper.

(a)

(b)

Fig. 1

Fig. 2

(a)

117a

109

109d

110 (2)   121 (2)

106

107a

107b

108

117 (2)

109e   109a   111

110h

107 (2)   107c

108a

108b

VC

M

r

B

EP 4 621 494 A2

34

(b)

108

107 (2)

107c

106

117a

M

107d

108d   108a

121 (2)   110 (2)

109

117 (2)

108b

B

Fig. 3

(a)

(b)

Fig. 4

(a)

(b)

Fig. 5

Fig. 6

(a)

110g

110

110d

110k

M

B

110j

110h

110c

(b)

110

110j

110f

110h

B

M

110g

Fig. 7

(a)

(b)

Fig. 8

Fig. 9

Fig. 10

EP 4 621 494 A2

Fig. 11

(a)

(b)

Fig. 12

Fig. 13

Fig. 14

(a)

101

102f2

15B

102

102f

102f1

D1

A

M

U

102f3

15B

(b)

S

L

K

102

r

103

103h

102f2

103j

102f

102f3

A

VC

Fig. 15

(a)

101

16B

102

102f

D1

A

M

U

16B

(b)

L

K

102

103

102k

A

103k

Fig. 16

(a)

(b)

Fig. 17

(a)

(b)

Fig. 18

(a)

(b)

Fig. 19

(a)

(b)

Fig. 20

(a)

B(A)

100

102

102f

102f1

M

109

109j

(b)

K

r

103

109

A

102f2

102f

103j

109j

102

VC

102f3

Fig. 21

(a)

(b)

Fig. 22

(a)

(b)

Fig. 23

(a)

(b)

Fig. 24

(a)

(b)

Fig. 25

(a)

(b)

Fig. 26

Fig. 27

Fig. 28

Fig. 29

(a)

123d    123b    123f    123e

S

121a                123

M

I (U)

(b)

124    124b    124f
124a    124b1    124e    124d

M

I (U)

122d        S        124c
                     124b2

# Fig. 30

(a)

(b)

(c)

(d)

Fig. 31

EP 4 621 494 A2

Fig. 32

(a)

121c

125c

S

125a

125

126b

126c

126a

126

122

(b)

S

121c

125c

126b

125

126a

125a

125b

126c

126

122

Fig. 33

(a)

C (A, B)

102b

102

102a

121

121c

127

34B

122

101a

122c

M

I (U)

34B

101

(b)

34A

127

122

101

34A

Fig. 34

Fig. 35

(a)

36B
101
S
C (A, B)
1232
124b
1242
124c
36B
M
I (U)

(b)

C (A, B)
1232
124b
1232
124b
101
101a
1242 124c
S
M
I (U)

(c)

36D
101
S
C (A, B)
1242
124b 1232
124c
36D
M
I (U)

(d)

C (A, B)
1232
124b
1232
124b
101
101a
1242 124c
S
M
I (U)

Fig. 36

Fig. 37

Fig. 38

(a)

(b)

Fig. 39

(d)

S1
S2
S3
S4

122

(b)

122

S1
S2
S3
S4

(a)

41C

S1

122

41B

41B

41C

(c)

122

S4
S3
S2
S1

(e)

S4
S3
S2
S1

122

Fig. 40

(c)

124    124b    122d    122b

122

S4
S3
S2
S1

124a    124c

(a)

124    124    122

S2

124    124

(b)

122

124a    124

124b

124c

S1    S2    S3    S4

Fig. 41

Fig. 42

(a)

D1

S1
S2
S3
S4

122

124

(b)

122

Fig. 43

(a)

(b)

(c)

Fig. 44

Fig. 45

Fig. 46

(a)

(b)

Fig. 47

(a)

(b)

Fig. 48

(a)

132C

SH1

147

SH2

(b)

132D

SH1

148

SH2

Fig. 49

**EP 4 621 494 A2**

## REFERENCES CITED IN THE DESCRIPTION

**Patent documents cited in the description**

- JP 2020154300 A